# EUROPÄISCHE PATENTSCHRIFT

(11) **EP 1 599 551 B1**
(45) Veröffentlichungstag und Bekanntmachung des Hinweises auf die Patenterteilung: **09.05.2012**
(21) Anmeldenummer: 04714306.0
(22) Anmeldetag: 25.02.2004
(51) Int. Cl.: C09D 5/08, C09D 4/00, C23C 22/50, C23C 22/53, C23C 22/60, C23C 22/68, C23C 22/83, C23C 22/74

(54) **VERFAHREN ZUR BESCHICHTUNG VON METALLISCHEN OBERFLÄCHEN MIT EINER ZUSAMMENSETZUNG REICH AN POLYMER**
METHOD FOR COATING METALLIC SURFACES WITH A COMPOSITION THAT IS RICH IN POLYMERS
PROCEDE DE REVETEMENT DE SURFACES METALLIQUES AU MOYEN D'UNE COMPOSITION RICHE EN POLYMERES

(30) Priorität: 25.02.2003 DE 10308237; 17.07.2003 DE 10332744
(43) Veröffentlichungstag der Anmeldung: 30.11.2005
(73) Patentinhaber: Chemetall GmbH, 60487 Frankfurt am Main (DE)
(72) Erfinder: DOMES, Heribert, 35789 Weilmünster (DE); SCHNEIDER, Julia, 35041 Marburg (DE)
(74) Vertreter: Hübner, Günter
(86) Internationale Anmeldenummer: PCT/EP2004/001829
(87) Internationale Veröffentlichungsnummer: WO 2004/076568

(56) Entgegenhaltungen:
- EP-A- 1 130 132
- DE-A- 3 151 115
- DE-A- 10 149 148
- US-A- 5 451 431

## Beschreibung

Die Erfindung betrifft ein Verfahren zur Beschichtung von metallischen Oberflächen mit einer Silan sowie Metallchelat und organischen Filmbildner enthaltenden wässerigen Zusammensetzung. Ferner betrifft die Erfindung entsprechende wässerige Zusammensetzungen sowie die Verwendung der nach dem erfindungsgemäßen Verfahren beschichteten Substrate.

Die bislang am häufigsten eingesetzten Verfahren zur Oberflächenbehandlung bzw. Vorbehandlung vor der Lackierung von Metallen, insbesondere von Metallband, basieren auf dem Einsatz von Chrom(III)- oder/und Chrom(VI)-Verbindungen zusammen mit diversen Zusatzstoffen. Aufgrund der toxikologischen und ökologischen Risiken, die derartige Verfahren mit sich bringen und darüber hinaus aufgrund der absehbaren gesetzlichen Einschränkungen bezüglich der Anwendung von Chromat-haltigen Verfahren wird schon seit längerer Zeit nach Alternativen zu diesen Verfahren auf allen Gebieten der Metalloberflächenbehandlung gesucht.

Der Einsatz von Silanen in wässerigen Zusammensetzungen zur Herstellung von Siloxan-reichen korrosionsschützenden Beschichtungen ist grundsätzlich bekannt. Diese Beschichtungen haben sich bewährt, jedoch sind die Verfahren zur Beschichtung mit einer vorwiegend Silan enthaltenden wässerigen Zusammensetzung teilweise schwierig anzuwenden. Nicht immer wird diese Beschichtung mit optimalen Eigenschaften ausgebildet. Außerdem kann es Probleme geben, die sehr dünnen transparenten Silanbeschichtungen auf dem metallischen Untergrund sowie deren Fehlstellen mit bloßem Auge oder mit optischen Hilfsmitteln ausreichend charakterisieren zu können. Der Korrosionsschutz und die Lackhaftung der gebildeten Siloxan-reichen Beschichtungen sind oft, aber nicht immer hoch, aber teilweise auch bei geeigneter Applikation für bestimmte Anwendungen nicht ausreichend hoch.

Bei der Gestaltung Silan-haltiger wässeriger Zusammensetzungen hat sich außerdem eine kleine bzw. große Zugabemenge an mindestens einer Komponente ausgewählt aus der Gruppe von Monomeren, Oligomeren und Polymeren bewährt. Bei derartigen Zusammensetzungen ist die Art und Menge der Silan-Zugabe teilweise von entscheidender Bedeutung für den Erfolg. Üblicherweise sind jedoch die Zugabemengen an Silan hierzu vergleichsweise gering - meistens nur bis zu 5 Gew.-% - und wirken dann als "coupling agent", wobei die haftvermittelnde Wirkung insbesondere zwischen metallischem Substrat und Lack und ggf. zwischen Pigment und organischen Lackbestandteilen vorherrschen sollte, aber untergeordnet teilweise auch eine geringe vernetzende Wirkung auftreten kann. Vorwiegend werden Silan-Zusätze zu thermisch härtbaren Harzsystemen zugegeben.

Darüber hinaus sind auch Harzgemische bekannt, bei denen Harze mit anorganischen Säuren abgemischt werden, um auf diese Weise auch einen Beizangriff und somit einen besseren Kontakt der Harzschicht direkt mit der metallischen Oberfläche zu erzielen. Diese Zusammensetzungen haben den Nachteil, dass aufgrund des Beizangriffes während des Kontaktierens der Behandlungsflüssigkeit (Dispersion) zum Substrat eine Kontamination eintritt. Dies führt zur Anreicherung von Metallen in der Behandlungsflüssigkeit und dadurch bedingt zur permanenten Veränderung der chemischen Zusammensetzung der Behandlungsflüssigkeit, wodurch der Korrosionsschutz signifikant beeinträchtigt wird. Diese Metalle werden durch den Beizangriff aus der metallischen Oberfläche der zu behandelnden Substrate herausgelöst.

Ein weiterer Nachteil besteht darin, dass sich speziell bei Aluminium bzw. bei Aluminium-enthaltenden Legierungen die Oberflächen dunkel, u.U. dunkelgrau bis anthrazitfarben verfärben können. Die dunkel verfärbten Metalloberflächen sind für dekorative Anwendungen nicht einsetzbar, da die Verfärbung selbst aus ästhetischen Gründen unerwünscht ist. Die Dunkelfärbung ist je nach der Dicke der Schichtauflage mit unterschiedlicher Intensität sichtbar. Dieser Darkening genannte Effekt sollte möglichst vermieden werden.

DE-A-198 14 605 beschreibt ein Versiegelungsmittel für metallische Oberflächen, das neben mindestens einem Lösemittel mindestens ein Silanderivat und kolloidale Kieselsäure oder/und kolloidales Silicat enthält. Bei den Beispielen liegt der Gehalt an Silan(en) bei 20 Gew.-% (etwa 200 g/L) und an Kieselsol bzw. Silicat im Bereich von 10 bis 40 Gew.%. Ein angedeuteter Zusatz an Wachs zur Verminderung der Reibungszahl oder an organischem Bindemittel als Netzmittel wie z.B. Polypropylen, Polyethylen, Polyethylenoxid oder modifiziertem Polysiloxan oder aus anderen, nicht angeführten Gründen mit nicht weiter genannten Bindemitteln wurde bei den Beispielen nicht eingesetzt. Die Beispiele führen über die Silane hinaus keine polymeren Substanzen auf.

DE-A1-41 38 218 lehrt eine organofunktionelles Polysiloxan sowie Titansäureester oder/und Titanchelat enthaltende Lösung zur Verwendung als Nachtauchmittel von chromatierten oder passivierten Zink-haltigen Schichten auf Stahlteilen.

US 5,053,081 bezieht sich auf ein Verfahren zur Beschichtung einer bereits z.B. mit einer Phosphatschicht vorbehandelten metallischen Oberfläche mit einer Nachspüllösung auf Basis eines Gehalts an 3-Aminopropyltriethoxysilan und einem im Vergleich hierzu deutlich geringeren Gehalt an Titanchelat hergestellt mit Tetraalkyltitanat, beta-Diketon und Alkanolamin.

DE-A1-101 49 148 beschreibt wässerige Beschichtungszusammensetzungen auf Basis von organischem Filmbildner, feinen anorganischen Partikeln sowie Gleitmittel oder/und organischem Korrosionsinhibitor, die trotz Abwesenheit von Chromverbindungen hervorragende Ergebnisse der Korrosionsbeständigkeit, Haftfestigkeit und Umformbarkeit unter anderem auf Galvalume^{®}-Stahlblechen erbrachten, aber trotzdem noch eine unzureichende Korrosionsbeständigkeit eines organischen Films von etwa 1 µm Schichtdicke auf feuerverzinkten, elektrolytisch verzinkten, Galvalume^{®}-beschichteten oder Galfan^{®}-beschichteten metallischen Bändern zeigten, also auf metallischen Oberflächen, die schwierig vor Korrosion zu schützen sind. Die Zusammensetzungen, ihre Bestandteile sowie die Eigenschaften der Rohstoffe und Beschichtungen dieser Publikation werden ausdrücklich in diese Anmeldung einbezogen.

EP 1 130 132 A1 beschreibt Zusammensetzungen, die neben einem Silan, und Siliciumdioxid auch eine Zirkonium- oder/und Titanverbindung enthalten. Unter den dort genannten Zirkonium- bzw Titanverbindungen sind jedoch keine Chelate mit Ausnahme von Zirkoniumacetylacetonat. Die Wirkung eines Zusatzes von Zirkoniumacetylacetonat geht hieraus nicht hervor.

DE 31 51 115 A1 lehrt Stahlbleche, die einen Chromatfilm und hierüber als zweiten Überzug eine Beschichtung auf Basis von kolloidalem SiO₂, Harz, Silan und ggf. Chelat aufweisen.

Aufgabe der Erfindung ist es, die Nachteile des Standes der Technik zu überwinden und insbesondere ein Verfahren zur Beschichtung von metallischen Oberflächen vorzuschlagen, das auch für hohe Beschichtungsgeschwindigkeiten, wie sie für metallische Bänder genutzt werden, geeignet ist, das weitgehend oder gänzlich frei von Chrom(VI)-Verbindungen anwendbar ist, das möglichst auch frei von anorganischen und organischen Säuren ist und das möglichst einfach großtechnisch einsetzbar ist. Insbesondere ist es die Aufgabe, die Korrosionsbeständigkeit von chromatfreien organischen Beschichtungen von weniger als 10 µm und insbesondere von weniger als 3 µm Trockenfilmdicke so zu steigern, dass auch Beschichtungen auf feuerverzinkten, elektrolytisch verzinkten oder Galfan^{®}-beschichteten metallisehen Bändern eine den chromathaltigen organischen Beschichtungen gleichwertigen Korrosionsschutz erfahren.

Es wurde überraschend gefunden, dass der Zusatz von mindestens einem Chelat, insbesondere von einem, Titan- oder/und Zirkoniumchelat, zu einer Silan-enthaltenden wässerigen Zusammensetzung die Korrosionsbeständigkeit, aber auch die Lackhaftung des daraus gebildeten Films signifikant verbessert. Hierbei kann üblicherweise auch der Zusatz eines organischen Korrosionsinhibitors - außer bei der Beschichtung von blankem Stahl - entfallen.

Es wurde außerdem überraschend gefunden, dass die Korrosionsbeständigkeit des aus der wässerigen, mindestens ein Silan, aber kein organisches Polymer enthaltenden Zusammensetzung gebildeten Films noch sehr deutlich verbessert werden konnte, wenn noch mindestens ein Chelat, insbesondere ein Titan- oder/und Zirkoniumchelat, zugesetzt wird.

Die Aufgabe wird gelöst mit einem Verfahren zur Beschichtung einer metallischen Oberfläche, insbesondere von Aluminium, Eisen, Kupfer, Magnesium, Nickel, Titan, Zinn, Zink oder Aluminium, Eisen, Kupfer, Magnesium, Nickel, Titan, Zinn oder/und Zink enthaltenden Legierungen, mit einer wässerigen Zusammensetzung, die weitgehend oder gänzlich von Chrom(VI)-Verbindungen frei sein kann, zur Vorbehandlung vor einer weiteren Beschichtung oder zur Behandlung, bei der der zu beschichtende Körper ggf. - insbesondere ein Band oder Bandabschnitt - nach der Beschichtung umgeformt wird, das dadurch gekennzeichnet ist, dass die Zusammensetzung neben Wasser
a) mindestens ein hydrolisierbares oder/und zumindest teilweise hydrolysiertes Silan von jeweils mindestens einem Acyloxysilan, einem Alkoxysilan, einem Silan mit mindestens einer Aminogruppe, einem Silan mit mindestens einer Bernsteinsäuregruppe oder/und Bernsteinsäureanhydridgruppe, einem Bis-Silyi-Silan, einem Silan mit mindestens einer Epoxygruppe, einem (Meth)acrylato-Silan, einem Multi-Silyl-Silan, einem Ureidosilan, einem Vinylsilan oder/und mindestens einem Silanol oder/und mindestens einem Siloxan von chemisch entsprechender Zusammensetzung wie die zuvor genannten Silane,
b) mindestens ein Metallchelat ausgewählt aus Chelatkomplexen auf Basis von Acetylacetonaten, Acetessigestern, Acetonaten, Alkylendiaminen, Aminen, Lactaten, Carbonsäuren, Citraten oder/und Glykolen,
c) mindestens einen organischen Filmbildner, der mindestens ein wasserlösliches oder wasserdispergiertes organisches Copolymer mit einer Säurezahl im Bereich von 3 bis 250 aufweist, wobei der Gehalt an organischem Filmbildner bezogen auf den Feststoffgehalt der Zusammensetzung bei > 45 Gew.-% liegt, und
d) mindestens einen langkettigen Alkohol mit 4 bis 20 C-Atomen ausgewählt aus der Gruppe von Diolen wie Blockcopolymeren aus Ethylen- und Propylenoxid, Butandiolen, Propandiolen oder/und Decandiolen, Butylglykolen, Butyldiglykolen, Esteralkoholen, Ethylenglykolen, Ethylenglykolethem, Glykotethern wie Di- und Triethylenglykolen mit ihren Mono- und Diethern und Dimethylethern, Polyethern, Polyethylenglykölen, Polyethylenglykolethern, Polyglykolen, Polypropylenglykolen, Propylenglykolen, Propylenglykolethern, Polypropylenglykolethern, Glykolethern, Trimethylpentandioldiisobutyraten und deren Derivaten als Filmbildungshilfsmittel enthält,
wobei das Mengenverhältnis von a) zu b) jeweils einschließlich der hieraus entstehenden Reaktionsprodukte im Bereich von 0,3 : 1 bis 7 : 1 liegt,
wobei die saubere, gebeizte, gereinigte oder/und vorbehandelte metallische Oberfläche mit der wässerigen Zusammensetzung in Kontakt gebracht und ein Film auf der metallischen Oberfläche ausgebildet wird, der anschließend getrocknet wird, teilweise oder gänzlich durch Verfilmen verdichtet wird - wobei er härtet, und ggf. zusätzlich ausgehärtet wird,
wobei der getrocknete und ggf. auch ausgehärtete Film eine Schichtdicke im Bereich von 0,01 bis 10 µm aufweist, bestimmt durch Ablösen einer definierten Fläche des gehärteten Films und Auswiegen oder durch Bestimmung des Siliciumgehalts der Beschichtung z.B. mit Röntgenfluoreszenzanalyse und entsprechende Umrechnung.

Die Aufgabe wird außerdem gelöst mit einer wässerigen Zusammensetzung zur Vorbehandlung einer metallischen Oberfläche vor einer weiteren Beschichtung oder zur Behandlung jener Oberfläche, die dadurch gekennzeichnet ist, dass die Zusammensetzung neben Wasser
a) mindestens ein hydrolisierbares oder/und zumindest teilweise hydrolysiertes Silan von jeweils mindestens einem Acyloxysilan, einem Alkoxysilan, einem Silan mit mindestens einer Aminogruppe, einem SIlan mit mindestens einer Bernsteinsäuregruppe oder/und Bernsteinsäureanhydridgruppe, einem Bis-Silyl-Silan, einem Silan mit mindestens einer Epoxygruppe, einem (Meth)acrylato-Silan, einem Multi-Silyi-Silan, einem Ureidosilan, einem Vinylsilan oder/und mindestens einem Silanol oder/und mindestens einem Siloxan von chemisch entsprechender Zusammensetzung wie die zuvor genannten Silane,
b) mindestens ein Metallchelat ausgewählt aus Chelatkomplexen auf Basis von Acetylacetonaten, Acetessigestern, Acetonaten, Alkylendiaminen, Aminen, Lactaten, Carbonsäuren, Citraten oder/und Glykolen,
c) mindestens einen organischen Filmbildner, der mindestens ein wasserlösliches oder wasserdispergiertes organisches Copolymer mit einer Säurezahl im Bereich von 3 bis 250 aufweist und wobei der Gehalt an organischem Flimbildner bezogen auf den Feststoffgehalt der Zusammensetzung bei > 45 Gew.-% liegt, und
d) mindestens einen langkettigen Alkohol mit 4 bis 20 C-Atomen ausgewählt aus der Gruppe von Diolen wie Blockcopolymeren aus Ethylen- und Propylenoxid, Butandiolen, Propandiolen oder/und Decandiolen, Butylglykolen, Butyldiglykolen, Esteralkoholen, Ethylenglykolen, Ethylenglykolethem, Glykolethern wie Di- und Triethylenglykolen mit ihren Mono- und Diethern und Dimethylethern, Polyethern, Polyethylenglykolen, Polyethylenglykolethern, Polyglykolen, Polypropylenglykolen, Propylenglykolen, Propylenglykolethern, Polypropylenglykolethern, Glykolethern, Trimethylpentandioldiisobutyraten und deren Derivaten als Filmbildungshilfsmittel enthält,
wobei das Mengenverhältnis von a) zu b) jeweils einschließlich der hieraus entstehenden Reaktionsprodukte im Bereich von 0,3 : 1 bis 7 : 1 liegt.

Vorzugsweise liegt das Mengenverhältnis von a) zu b) jeweils einschließlich der hieraus entstehenden Reaktionsprodukte etwa bei 0,4 : 1, 0,6 : 1, 0,8 : 1, 1 : 1, 1,2 : 1, 1,6 : 1, 2 : 1, 3 : 1, 4 : 1, 5 : 1 oder 6 : 1.

Besonders bevorzugt sind jeweils Mengen an Silan(en) und Chelat(en) jeweils einschließlich der hieraus entstehenden Reaktionsprodukte unabhängig voneinander von 0,05 bis 5 Gew.-% bezogen auf den Naßfilm, ganz besonders bevorzugt jeweils unabhängig voneinander Mengen von 0,08 bis 4 Gew.-%, insbesondere etwa jeweils unabhängig voneinander Mengen von 0,1, 0,2, 0,3, 0,5, 0,8, 1, 1,5, 2, 2,5, 3 oder 3,5 Gew.-%.

Besonders bevorzugt sind jeweils Mengen an Silan(en) und Chelat(en) jeweils einschließlich der hieraus entstehenden Reaktionsprodukte unabhängig voneinander von 0,2 bis 15 Gew.-% bezogen auf den Feststoffgehalt, ganz besonders bevorzugt jeweils unabhängig voneinander Mengen von 0,3 bis 11 Gew.%, insbesondere etwa jeweils unabhängig voneinander Mengen von 0, 5, 0,8, 1, 1,5, 2, 2,5, 3, 3,5, 4, 4,5, 5, 5,5, 6, 6,5, 7, 7,5, 8, 8,5, 9, 9,5, 10 oder 10,5 Gew.-%.

Vorzugsweise wird mindestens ein Silan ausgewählt, das mit Wasser kompatibel ist, d.h. dass das mindestens eine Silan bzw. ggf. seine hydrolyse- und Kondensationsprodukte störungsfrei mit den Komponenten der wässerigen Zusammensetzung mischbar sind und über mehrere Wochen haltbar sind und dass es einen fehlerfreien Naßfilm und Trockenfilm auszubilden gestattet, der insbesondere geschlossen, gleichmäßig und frei von Kratern ist. Insbesondere wird mindestens ein Silan ausgewählt, das eine hohe Korrosionsbeständigkeit insbesondere in Kombination mit dem ausgewählten mindestens einen Chelat ermöglicht.

Vorzugsweise wird mindestens ein Chelat ausgewählt, das sich über mehrere Wochen Dauer stabil in wässerigen Dispersionen in Gegenwart der übrigen Komponenten der wässerigen Zusammensetzung verhält und das eine hohe Korrosionsbeständigkeit ermöglicht. Außerdem ist es vorteilhaft, wenn sowohl das mindestens eine Silan, als auch das mindestens eine Chelat einerseits mit der vorgesehenen metallischen Oberfläche, die hiermit kontaktiert werden soll, chemisch anbinden kann und ggf. ebenfalls zu dem nachträglich aufzubringenden Lack chemisch anbinden kann. Das mindestens eine Metallchelat ist insbesondere eines von Al, B, Ca, Fe, Hf, La, Mg, Mn, Si, Ti, Y, Zn, Zr oder/und mindestens einem Lanthanid wie Ce oder wie einem Ce-haltigen Lanthanidengemisch, besonders bevorzugt ausgewählt aus der Gruppe von Al, Hf, Mn, Si, Ti, Y und Zr.

Vorzugsweise weisen die Konzentrate der vorwiegend Silan und Chelat enthaltenden wässerigen Zusammensetzungen sowie der Teilkomponenten als Ausgangsprodukt für Polymer-haltige Zusammensetzungen einen Wassergehalt im Bereich von 20 bis 85 Gew.-% auf, insbesondere von 30 bis 80 Gew.%. Vorzugsweise weisen die Konzentrate das mindestens eine Silan einschließlich der hieraus entstehenden Reaktionsprodukte in einem Gehalt im Bereich von 3 bis 45 Gew.%, ganz besonders bevorzugt im Bereich von 6 bis 35 Gew.-%, vor allem im Bereich von 8 bis 32 Gew.-%, insbesondere von etwa 8, 10, 12, 14, 16, 18, 20, 22, 24, 26, 28, 30 oder 32,5 Gew.-%, und das mindestens eine Chelat ggf. einschließlich der hieraus entstehenden Reaktionsprodukte im Bereich von 1 bis 50 Gew.-%, besonders bevorzugt im Bereich von 2 bis 40 Gew.-%, ganz besonders bevorzugt im Bereich von 3 bis 30 Gew.-%, vor allem im Bereich von 5 bis 25 Gew.-%, insbesondere von etwa 7,5, 10, 12, 14, 16, 18, 20 oder 22,5 Gew.%.

Vorzugsweise weisen die Badzusammensetzungen der vorwiegend Silan und Chelat enthaltenden wässerigen Zusammensetzungen einen Wassergehalt im Bereich von 80 bis 99,9 Gew.-% auf, vorzugsweise im Bereich von 90 bis 99,8 Gew.-%, besonders bevorzugt im Bereich von 94 bis 99,7 Gew.-%, vor allem im Bereich von 96 bis 99,6 Gew.-%, insbesondere von etwa 95, 95,5, 96, 96,5, 97, 97,5, 97,9, 98,2, 98,5, 98,8, 99,1 oder 99,4 Gew.-%. Vorzugsweise weisen die Badzusammensetzungen das mindestens eine Silan einschließlich der hieraus entstehenden Reaktionsprodukte in einem Gehalt im Bereich von 0,01 bis 10 Gew.-% auf, besonders bevorzugt im Bereich von 0,05 bis 7 Gew.-%, ganz besonders bevorzugt im Bereich von 0,1 bis 5 Gew.-%, vor allem im Bereich von 0,2 bis 4 Gew.-%, insbesondere von etwa 0,4, 0,6, 0,8, 1,0, 1,1, 1,2, 1,3, 1,4, 1,5, 1,6, 1,7, 1,8, 1,9, 2,0, 2,1, 2,2, 2,4, 2,6, 2,8, 3,0, 3,2, 3,4, 3,6 oder 3,8 Gew.-%, und das mindestens eine Chelat einschließlich der ggf. hieraus entstehenden Reaktionsprodukte im Bereich von 0,01 bis 10 Gew.-% auf, besonders bevorzugt im Bereich von 0,05 bis 7 Gew.-%, ganz besonders bevorzugt im Bereich von 0,1 bis 5 Gew.%, vor allem im Bereich von 0,2 bis 4 Gew.-%, insbesondere von etwa 0,3, 0,4, 0,5, 0,6, 0,7, 0,8, 0,9, 1,0, 1,1, 1,2, 1,3, 1,4, 1,6, 1,8, 2,0, 2,2, 2,4, 2,6, 2,8, 3,0, 3,2, 3,4, 3,6 oder 3,8 Gew.-%.

Vorzugsweise machen die Gehalte des mindestens einen Silans und des mindestens einen Chelats jeweils einschließlich der hieraus entstehenden Reaktionsprodukte, insbesondere solchen von Titan, Hafnium oder/und Zirkonium, mindestens 20 Gew.-%, insbesondere mindestens 30 Gew.-%, besonders bevorzugt mindestens 40 Gew.-% der Feststoffgehalte dieser Zusammensetzung aus. Besonders bevorzugt besteht diese Zusammensetzung im wesentlichen aus Wasser, jeweils mindestens einem Silan oder/und deren Reaktionsprodukten, mindestens einem Chelat ggf. einschließlich der hieraus entstehenden Reaktionsprodukte sowie gegebenenfalls Gehalten von Substanzen ausgewählt aus der Gruppe von Alkoholen, Säuren wie Carbon- und Fettsäuren wie Essigsäure oder/und Mineralsäuren und anderen pH-Wert beeinflussenden Substanzen wie Ammoniak bzw. Additiven und Verunreinigungen. Der Gesamtgehalt an weiteren Verbindungen einschließlich Additiven neben Silan und Chelat beträgt üblicherweise bis zu 20 Gew.-% des Feststoffgehalts an Silan und Chelat, vorzugsweise bis zu 15 Gew.-%, besonders bevorzugt bis zu 10 Gew.-%, ganz besonders bevorzugt bis zu 5 Gew.-%, vor allem bis zu 1 oder 2 Gew.-%.

Obwohl das Verhältnis des mindestens einen Silans einschließlich der hieraus entstehenden Reaktionsprodukte zum mindestens einen Chelat ggf. einschließlich der hieraus entstehenden Reaktionsprodukte vorzugsweise im Bereich von 0,8 : 1 bis 1,2 : 1 liegen kann, ist es überraschend deutlich geworden, dass dieses Verhältnis auch insbesondere im Bereich von 0,2 : 1 bis 0,5 : 1 oder bei 2 : 1 bis 5 : 1 liegen kann, da es in bestimmten Situationen dort ein Optimum geben kann.

Der pH-Wert dieser Badzusammensetzung kann insbesondere im Bereich von 3 bis 9,5 liegen, vorzugsweise im Bereich von 3,5 bis 9, insbesondere im Bereich von 4 bis 8,8. Zur Einstellung des pH-Werts kann u.a. ein Zusatz einer schwachen Säure oder einer verdünnten starken Säure bzw. ein Säuregemisch zugesetzt werden. Insbesondere kann mindestens eine Säure wie Carbon- oder Fettsäuren wie Essigsäure oder/und Mineralsäuren und anderen pH-Wert beeinflussenden Substanzen wie Ammoniak verwendet werden. Die Badzusammensetzung kann teilweise bis zu pH-Werten um etwa 3,5 hinunter durch Säurezusatz eingestellt werden, wenn das chemische System den gewählten pH-Wert verträgt und stabil bleibt. Wenn jedoch die Säure nur zur Neutralisierung zugesetzt wird, wird kein oder nahezu kein Beizangriff erfolgen. Vorzugsweise kann auch ein Lösemittel wie ein Alkohol zur Stabilisierung des Silans zugesetzt werden.

Die mit diesen Badzusammensetzungen ausgebildeten Beschichtungen weisen typischerweise eine Schichtdicke im Bereich von 0,01 bis 1 µm oder bis 0,6 µm, meistens von 0,015 bis 0,25 µm auf.

Der Zusatz des mindestens einen Silans a) bietet den Vorteil, dass Haftbrücken zwischen dem Substrat und dem getrockneten Schutzfilm sowie zu möglicherweise nachträglich aufgetragenen Lackschichten oder/und Kunststoffbeschichtungen entstehen, wodurch auch eine verbesserte Lackhaftung erzielt wird. Ein weiterer Vorteil ist, dass geeignete Silane/Siloxane haftbrückenähnliche Vernetzungen innerhalb des getrockneten Schutzfilmes erzeugen, die die Festigkeit oder/und die Flexibilität des Beschichtungsverbundes sowie die Haftung zum Substrat wesentlich verbessern, wodurch bei vielen Lacksystemen eine verbesserte Haftung erzielt wird.

Die wässerige Zusammensetzung, die vorwiegend Kunstharz und daneben Chelat und Silan enthalten, enthält jeweils mindestens ein Acyloxysilan, ein Alkoxysilan, ein Silan mit mindestens einer Aminogruppe wie ein Aminoalkylsilan, ein Silan mit mindestens einer Bernsteinsäuregruppe oder/und Bemsteinsäureanhydridgruppe, ein Bis-Silyi-Silan, ein Silan mit mindestens einer Epoxygruppe wie ein Glycidoxysilan, ein (Meth)acrylato-Silan, ein Multi-Silyl-Silan, ein Ureidosilan, ein Vinylsilan oder/und mindestens ein Silanol oder/und mindestens ein Siloxan von chemisch entsprechender Zusammensetzung wie die zuvor genannten Silane enthalten ist. Die Reaktionsprodukte der Silane sind grundsätzlich in solchen Systemen bekannt und werden deswegen nicht im einzelnen genannt. Sie werden deswegen im folgenden auch nicht weiter angesprochen, sondern sind unter dem Begriff "Silan(e)" umfaßt.

Es kann z.B. mindestens ein Silan im Gemisch mit einem Gehalt an mindestens einem Alkohol wie Äthanol, Methanol oder/und Propanol von oft bis zu 8 Gew.-% bezogen auf den Silan-Gehalt enthalten sein, vorzugsweise bis zu 5 Gew.-%, besonders bevorzugt bis zu 1 Gew.-%, ganz besonders bevorzugt bis zu 0,5 Gew.-%. Insbesondere kann z.B. mindestens ein Silan in dem Gemisch enthalten sein ausgewählt aus mindestens einem Amino-Silan wie z.B. Bis-Amino-Silan ohne oder mit mindestens einem Alkoxy-Silan wie z.B. Trialkoxy-Silyl-Propyl-Tetrasulfan oder mindestens ein Vinylsilan und mindestens ein Bis-Silyl-Aminosilan oder mindestens ein Bis-Silyl-Polyschwefelsilan und/oder mindestens ein Bis-Silyl-Aminosilan oder mindestens ein Aminosilan und mindestens ein Multi-Silyl-funktionelles Silan. Bevorzugt sind insbesondere solche Silane/Siloxane, die eine Kettenlänge im Bereich von 2 bis 5 C-Atomen aufweisen und eine funktionelle Gruppe aufweisen, die zur Reaktion mit Polymeren geeignet ist.

Vorzugsweise enthält die wässerige Zusammensetzung mindestens ein Silan ausgewählt aus der Gruppe von
Glycidoxyalkyltrialkoxysilan,
Methacryloxyalkyltrialkoxysilan,
(Trialkoxysilyl)alkylbernsteinsäuresifan,
Aminoalkylaminoalkylalkyldialkoxysilan,
(Epoxycycloalkyl)alkyltrialkoxyslian,
Bis-(trialkoxysilylalkyl)amin,
Bis-(trialkoxysilyl)ethan,
(Epoxyalkyl)trialkoxysilan,
Aminoalkyltrialkoxysilan,
Ureidoalkyltrialkoxysilan,
N-(trialkoxysilylalkyl)alkylendiamin,
N-(aminoalkyl)aminoalkyltrialkoxysilan,
N-(trialkoxysilylalkyl)dialkylentriamin,
Poly(aminoalkyl)alkyldialkoxysilan,
Tris(trialkoxysilyl)alkylisocyanurat,
Ureidoalkyltrialkoxysilan und
Acetoxysilan.

Vorzugsweise enthält die wässerige Zusammensetzung mindestens ein Silan ausgewählt aus der Gruppe von
3-Glycidoxypropyltriethoxysilan,
3-Glycidoxypropyltrimethoxysilan,
3-Methacryloxypropyltriethoxysilan,
3-Methacryloxypropyltrimethoxysilan,
3-(Triethoxysilyl)propylbernsteinsäuresilan,
Aminoethylaminopropylmethyldiethoxysilan,
Aminoethylaminopropylmethyldimethoxysilan,
Beta-(3,4-Epoxycyclohexyl)ethyltriethoxysilan,
Beta-(3,4-Epoxycyclohexyl)ethyltrimethoxysilan,
Beta-(3,4-Epoxycyclohexyl)methyltriethoxysilan,
Beta-(3,4-Epoxycyclohexyl)methyltrimethoxysilan,
Gamma-(3,4-Epoxycyclohexyl)propyltriethoxysilan,
Gamma-(3,4-Epoxycyclohexyl)propyltrimethoaysilan,
Bis(triethoxysilylpropyl)amin,
Bis(trimethoxysilylpropyl)amin,
(3,4-Epoxybutyl)triethoxysilan,
(3,4-Epoxybutyl)trimethoxysilan,
Gamma-Aminopropyltriethoxysilan,
Gamma-Aminopropyltrimethoxysilan,
Gamma-Ureidopropyltrialkoxysilan,
N-(3-(trimethoxysilyl)propyl)ethylendiamin,
N-beta-(aminoethyl)-gamma-aminopropyltriethoxysilan,
N-beta-(aminoethyl)-gamma-aminopropyltrimethoxysilan,
N-(gamma-triethoxysilylpropyl)diethylentriamin,
N-(gamma-trimethoxysilylpropyl)diethylentriamin,
N-(gamma-triethoxysilylpropyl)dimethylentriamin,
N-(gamma-trimethoxysilylpropyl)dimethylentriamin,
Poly(aminoalkyl)ethyldialkoxysilan,
Poly(aminoalkyl)methyldialkoxysilan,
Tris(3-(triethoxysilyl)propyl)isocyanurat
Tris(3-(trimethoxysilyl)propyl)isocyanurat und
Vinyltriacetoxysilan.

Die in der wässerigen Zusammensetzung (Konzentrat bzw. Bad) enthaltenen Silane sind Monomere, Oligomere, Polymere, Copolymere oder/und Reaktionsprodukte mit weiteren Komponenten aufgrund Hydrolysereaktionen, Kondensationsreaktionen oder/und weiteren Reaktionen. Die Reaktionen erfolgen vor allem in der Lösung, beim Trocknen bzw. gegebenenfalls Härten der Beschichtung. Der Begriff "Silan" im Sinne dieser Anmeldung wird hierbei für Silane, Silanole, Siloxane, Polysiloxane und deren Reaktionsprodukte bzw. Derivate benutzt, die oft "Silan"-Gemische sind. Aufgrund der oft sehr komplexen chemischen Reaktionen, die hierbei auftreten, und sehr aufwendiger Analysen und Arbeiten können die jeweiligen weiteren Silane bzw. sonstigen Reaktionsprodukte nicht angegeben werden.

Anstelle eines Gehalts an mindestens einem Fluor-freien Silan in dem Gehalt an Silanen kann jedoch dieser Gehalt nur Fluor-haltige Silane aufweisen, zumindest mindestens ein Fluor-haltiges Silan anstelle von Fluor-freien Silanen.

Vorzugsweise ist dann in der wässerigen Zusammensetzung mindestens ein Silan enthalten ausgewählt aus den Fluor-haltigen Silanen: Aus jeweils mindestens einem Acyloxysilan, einem Alkoxysilan, einem Silan mit mindestens einer Aminogruppe wie einem Aminoalkylsilan, einem Silan mit mindestens einer Bernsteinsäuregruppe oder/und Bernsteinsäureanhydridgruppe, einem Bis-Silyl-Silan, einem Silan mit mindestens einer Epoxygruppe wie einem Glycidoxysilan, einem (Meth)acrylato-Silan, einem Multi-Silyl-Silan, einem Ureidosilan, einem Vinylsilan oder/und mindestens einem Silanol oder/und mindestens einem Siloxan bzw. Polysiloxan von chemisch entsprechender Zusammensetzung wie die zuvor genannten Silane, das jeweils mindestens eine Gruppe mit einem oder mit mindestens einem Fluoratom enthält. Insbesondere enthält die wässerige Zusammensetzung dann mindestens ein Fluoralkoxyalkylsilan, mindestens ein Silan mit 1, 2, 3, 4, 5, 6, 7, 8, 9, 10, 11, 12 oder 13 Fluor-Atome je Silan, mindestens ein perfluoriertes Silan, mindestens ein Mono-Fluorsilan, mindestens ein Fluorsilan auf Basis Ethoxysilan oder/und auf Basis Methoxysilan oder/und mindestens ein Fluorsilan mit mindestens einer funktionellen Gruppe wie z.B. einer Aminogruppe insbesondere als Cokondensat, wie z.B. ein Fluoralkyldialkoxysilan, ein Fluoraminoalkylpropyltrialkoxysilan, ein Fluormethansulfonat, ein Fluorpropylalkyldialkoxysilan, ein Triphenylfluorsilan, ein Trialkoxyfluorsilan, ein Trialkylfluorsilan oder/und ein Tridecafluorooctyltrialkoxysilan.

Besonders bevorzugt enthält die Zusammensetzung dann mindestens ein Fluor-haltiges Silan, das mindestens zwei Aminogruppen sowie mindestens eine ggf. fluorierte Ethyl- oder/und mindestens eine ggf. fluorierte Methylgruppe enthält.

Vorzugsweise beträgt der Gehalt an mindestens einem Silan einschließlich der hieraus entstehenden Reaktionsprodukte in der wässerigen Zusammensetzung 0,1 bis 80 g/L, insbesondere 0,2 bis 50 g/L, besonders bevorzugt 0,3 bis 35 g/L, ganz besonders bevorzugt 0,5 bis 20 g/L, vor allem 1 bis 10 g/L.

Vorzugsweise weisen die Filmbildner-ärmeren oder -reicheren Badzusammensetzungen die Silane einschließlich der hieraus mit anderen Komponenten gegebenenfalls entstehenden Reaktionsprodukte in einem Gehalt im Bereich von 0,01 bis 10 Gew.-% auf, besonders bevorzugt im Bereich von 0,05 bis 7 Gew.%, ganz besonders bevorzugt im Bereich von 0,1 bis 5 Gew.-%, vor allem im Bereich von 0,2 bis 4 Gew.-%, insbesondere von etwa 0,4, 0,6, 0,8, 1,0, 1,1, 1,2, 1,3, 1,4, 1,5, 1,6, 1,7, 1,8, 1,9, 2,0, 2,1, 2,2, 2,4, 2,6, 2,8, 3,0, 3,2, 3,4, 3,6 oder 3,8 Gew.-%, und das mindestens eine Chelat einschließlich der gegebenenfalls hieraus entstehenden Reaktionsprodukte im Bereich von 0,01 bis 10 Gew.-% auf, besonders bevorzugt im Bereich von 0,05 bis 7 Gew.%, ganz besonders bevorzugt im Bereich von 0,1 bis 5 Gew.-%, vor allem im Bereich von 0,2 bis 4 Gew.-%, insbesondere von etwa 0,3, 0,4, 0,5, 0,6, 0,7, 0,8, 0,9, 1,0, 1,1, 1,2, 1,3, 1,4, 1,6, 1,8, 2,0, 2,2, 2,4, 2,6, 2,8, 3,0, 3,2, 3,4, 3,6 oder 3,8 Gew.-%.

Vorzugsweise beträgt der Gehalt an mindestens einem Metallchelat b) ggf. einschließlich der hieraus entstehenden Reaktionsprodukte in der wässerigen Zusammensetzung 0,05 bis 80 g/L, insbesondere 0,1 bis 50 g/L.

Vorzugsweise ist der mindestens eine Metallchelat ausgewählt aus Chelatkomplexen auf Basis von Acetylacetonaten, Acetessigestern, Acetonaten, Alkylendiaminen, Aminen, Lactaten, Carbonsäuren, Citraten oder/und Glykolen.

Vorzugsweise ist der mindestens eine Metallchelat auf Basis von
Acetylacetonat,
Alkalilactat,
Alkanolamin,
Alkylacetoacetat,
Alkylendiamintetraacetat,
Ammoniumlactat,
Citrat,
Dialkylcitrat,
Dialkylestercitrat,
Dialkylentriamin,
Diisoalkoxybisalkylacetessigester,
Diisopropoxybisalkylacetessigester,
Di-n-alkoxy-bisalkylacetessigester,
Hydroxyalkylendiamintriacetat,
Trialkanolamin oder/und
Trialkylentetramin.

Diese Metallchelate dienen insbesondere zur Stabilisierung der metallorganischen Verbindung in Wasser sowie der Anbindung an die metallische Oberfläche bzw. zum Lack oder zu einer entsprechenden auflagernden Beschichtung. Sie sind dann besonders geeignet, wenn sie in der wässerigen Zusammensetzung nur eine geringe Reaktivität aufweisen und wenn sie innerhalb der angewendeten Prozeßbedingungen zumindest teilweise zersetzt werden und die Metallionen zur Anbindung oder/und chemischen Reaktion freigegeben werden. Denn wenn sie zu reaktiv sind, dann reagieren die metallorganischen Verbindungen vorzeitig mit anderen chemischen Verbindungen wie Silanen. Vorzugsweise sind die Chelate hydrophil, hydrolysestabil, wasserstabil oder/und stabile Hydrolysate ausbildend. Vorzugsweise wird ein Silan bzw. ein Chelat ausgewählt, das mit Wasser sowie darüber hinaus mit dem gewählten organischen Filmbildner kompatibel ist und das die gleichen Eigenschaften wie zuvor zu dem Silan bzw. Chelat genannt aufweist.

Vorzugsweise liegt das Mengenverhältnis von a) zu b) jeweils einschließlich der hieraus entstehenden Reaktionsprodukte etwa bei 0,4 : 1, 0,6 : 1, 0,8 : 1, 1 : 1, 1,2 : 1, 1,6: 1, 2: 1, 3: 1, 4 : 1, 5 : 1 oder 6 : 1.

Besonders bevorzugt sind jeweils Mengen an Silan(en) und Chelat(en) jeweils einschließlich der hieraus entstehenden Reaktionsprodukte enthalten Silan(e) und Chelat(e) unabhängig voneinander im Bereich von 0,05 bis 5 Gew.-% bezogen auf den Naßfilm, ganz besonders bevorzugt jeweils unabhängig voneinander Mengen von 0,08 bis 4 Gew.-%, insbesondere etwa jeweils unabhängig voneinander Mengen von 0,1, 0,2, 0,3, 0,5, 0,8, 1, 1,5, 2, 2,5, 3 oder 3,5 Gew.-%.

Besonders bevorzugt sind jeweils Mengen an Silan(en) und Chelat(en) jeweils einschließlich der hieraus entstehenden Reaktionsprodukte enthalten Silan(e) und Chelat(e) unabhängig voneinander im Bereich von 0,2 bis 15 Gew.-% bezogen auf Trockensubstanzgehalt, ganz besonders bevorzugt jeweils unabhängig voneinander Mengen von 0,3 bis 11 Gew.-%, Insbesondere etwa jeweils unabhängig voneinander Mengen von 0,5, 0,8, 1, 1,5, 2, 2,5, 3, 3,5, 4, 4,5, 5, 5,5, 6, 6,5, 7, 7,5, 8, 8,5, 9, 9,5, 10 oder 10,5 Gew.-%.

Insbesondere bei den Zusammensetzungen mit einem vergleichsweise hohen Filmbildner-Anteil ist ein Mengenverhältnis der Komponenten [a) + b)] : c) jeweils einschließlich der hieraus entstehenden Reaktionsprodukte und bezogen auf den Naßfilm besonders bevorzugt von 1 : 70 oder von 2 : 70 bis 20 : 70, ganz besonders bevorzugt im Mengenverhältnis von 3,5 : 70 bis 17 : 70, Insbesondere etwa bei 5 : 70, 6 : 70, 7 : 70, 8 : 70, 9 : 70, 10 : 70, 11 : 70, 12 : 70 und 14 : 70. Besonders bevorzugt ist ein Mengenverhältnis der Komponenten [ a) + b) ] : c) jeweils einschließlich der hieraus entstehenden Reaktionsprodukte und bezogen auf den Feststoffgehalt von 2 : 70 bis 20 : 70, ganz besonders bevorzugt im Mengenverhältnis von 3,5 : 70 bis 17 : 70, insbesondere etwa bei 5 : 70, 6 : 70, 7 : 70, 8 : 70, 9 : 70, 10 : 70, 11 : 70, 12 : 70 und 14 : 70.

Insbesondere bei den Filmbildner-ärmeren Zusammensetzungen kann jedoch das Mengenverhältnis der Komponenten [ a) + b) ] : c) jeweils einschließlich der hieraus entstehenden Reaktionsprodukte und bezogen auf den Naßfilm besonders bevorzugt liegen im Mengenverhältnis von ≥ 1 : 7 bzw. bis zu 8 : 7, insbesondere etwa bei 0,4 : 7, 0,6 : 7, 0,8 : 7, 1,2 : 7, 1,5 : 7, 2 : 7, 3: 7, 4 : 7, 5 : 7, 6 : 7 und 7 : 7.

Besonders bevorzugt liegen die Gehalte an Komponente a) einschließlich der hieraus entstehenden Reaktionsprodukte und bezogen auf den Feststoffgehalt im Bereich von 0,4 bis 10 Gew.-%, ganz besonders bevorzugt im Bereich von 0,8 bis 8 Gew.-%, insbesondere etwa bei 1,2, 1,5, 1,8, 2,1, 2,4, 2,7, 3, 3,3, 3,6, 3,9, 4,2 4,5, 4,8, 5,1, 5,5, 6, 6,5, 7 oder 7,5 Gew.-%.

Besonders bevorzugt liegen die Gehalte an Komponente b) einschließlich der hieraus entstehenden Reaktionsprodukte und bezogen auf den Feststoffgehalt Im Bereich von 0,3 bis 10 Gew.-%, ganz besonders bevorzugt Im Bereich von 0,8 bis 8 Gew.-%, insbesondere etwa bei 1,2, 1,5, 1,8, 2,1, 2,4, 2,7, 3, 3,3, 3,6, 3,9, 4,2 4,5, 4,8, 5,1, 5.5. 6, 6,5, 7 oder 7,5 Gew.-%.

Insbesondere bei den Zusammensetzungen mit einem vergleichsweise hohen Filmbildner-Anteil liegen die Gehalte an Komponente c) bezogen auf den Feststoffgehalt besonders bevorzugt etwa bei 50, 55, 60, 63, 66, 69, 72, 75, 78, 81, 84 oder 87 Gew.-%.

Insbesondere bei den Zusammensetzungen mit einem vergleichsweise hohen Filmbildner-Anteil liegen die Gehalte an Komponente d) - mindestens einem langkettigen Alkohol - bezogen auf den Feststoffgehalt besonders bevorzugt im Bereich von 0,01 bis 2 Gew.-%, ganz besonders bevorzugt im Bereich von 0,1 bis 1 Gew.%, insbesondere etwa bei 0,12, 0,15, 0,18, 0,21, 0,24, 0,27, 0,30, 0,33, 0,36, 0,39, 0,42 0,45, 0,48, 0,51, 0,55, 0,60, 0,65, 0,7, 0,75, 0,8, 0,9 oder 0,95 Gew.%.

Der organische Filmbildner c) ist in der wässerigen Zusammensetzung, die als Badzusammensetzung oder/und als Konzentrat dienen kann, vorzugsweise in einem Gehalt von 0,1 bis 980 g/L enthalten, besonders bevorzugt in einem Bereich von 2 bis 600 g/L, ganz besonders bevorzugt von 50 bis 550 g/L, insbesondere von 150 bis 450 g/L. Vorzugsweise werden auf 100 Gewichtsteile Wasser 2 bis 100 Teile des organischen Filmbildners zugegeben, besonders bevorzugt 10 bis 60 Teile, ganz besonders bevorzugt 15 bis 45 Teile. Insbesondere bei den Filmbildner-ärmeren Zusammensetzungen kann jedoch der organische Filmbildner c) in der wässerigen Zusammensetzung, die als Badzusammensetzung oder/und als Konzentrat dienen kann, vorzugsweise in einem Gehalt von ≥ 0,01 bzw. bis zu 98 g/L enthalten sein, besonders bevorzugt in einem Bereich von ≥ 0,1 bzw. bis zu 60 g/L, ganz besonders bevorzugt von ≥ 0,5 bzw. bis zu 50 g/L, insbesondere von ≥ bzw. bis zu 45 g/L.

Die höchsten Gehalte an organischem Filmbildner können u.U. insbesondere bei UV-härtenden Systemen ohne oder bei Systemen nur mit geringen flüchtigen Anteilen wie organischen Lösemitteln oder/und Restmonomeren auftreten. Für das erfindungsgemäße Verfahren besonders bevorzugt sind vorwiegend oder allein beim Trocknen verfilmte bzw. ggf. anteilig thermischphysikalisch gehärtete Beschichtungen. Vorzugsweise umfasst der Begriff Copolymere im Sinne dieser Anmeldung auch Blockcopolymere und Pfropfcopolymere.

Der organische Filmbildner enthält vorzugsweise mindestens einen Anteil an mindestens einem Polymer oder/und mindestens einem Copolymerisat mit einer Säurezahl im Bereich von 3 bis 120, besonders bevorzugt im Bereich von 3 bis 80, ganz besonders bevorzugt im Bereich von 4 bis 60.

Der organische Filmbildner enthält vorzugsweise mindestens einen Anteil an mindestens einem Polymer oder/und mindestens einem Copolymerisat mit einer Mindestfilmbildungstemperatur MFT im Bereich von - 10 bis + 99 °C, besonders bevorzugt im Bereich von 0 bis 90 °C, insbesondere ab 5 °C; ganz besonders vorteilhaft ist es, wenn der organische Filmbildner mindestens zwei insbesondere thermoplastische Polymere oder/und Copolymere zumindest im Anfangsstadium - denn die thermoplastischen Bestandteile können bei der weiteren Behandlung und Reaktion zumindest teilweise ihre thermoplastischen Eigenschaften verlieren oder verringern - enthält, die - soweit eine Mindestfilmbildungstemperatur angegeben werden kann - eine Mindestfilmbildungstemperatur im Bereich von 5 bis 95 °C aufweisen, insbesondere von mindestens 10 °C, wobei mindestens eines dieser Polymere oder/und Copolymere im Vergleich zu mindestens einem zweiten dieser Polymere oder/und Copolymere A) eine Mindestfilmbildungstemperatur aufweist, die um mindestens 20 °C unterschiedlich von der der anderen Komponente ist, B) eine Glasübergangstemperatur aufweist, die um mindestens 20 °C unterschiedlich von der der anderen Komponente ist, oder/und C) einen Schmelzpunkt aufweist, der um mindestens 20 °C unterschiedlich von der der anderen Komponente ist. Vorzugsweise weist die eine dieser mindestens zwei Komponenten eine Filmbildungstemperatur im Bereich von 10 bis 40 °C und die andere eine Filmbildungstemperatur im Bereich von 45 bis 85 °C auf. Langkettige Alkohole können dabei helfen, die Glasübergangstemperaturen zeitweilig abzusenken und ggf. auch etwas aneinander anzugleichen. Nach der Applikation können die langkettigen Alkohole entweichen und hinterlassen dann einen Film mit höherer Glasübergangstemperatur als während der Applikation. Diese getrockneten Filme sind dann nicht zu weich und zu klebrig. Oft liegen die Glasübergangstemperaturen bzw. die Schmelzpunkte dieser Kunstharze in etwa im Bereich der Filmbildungstemperatur, also meistens im Bereich von 0 bis 110 °C.

In einer anderen bevorzugten Ausführungsform kann ein Gemisch von organischen Filmbildnern eingesetzt werden, bei denen zumindest ein Teil der Filmbildner eine Glasübergangstemperatur T_{g} von im wesentlichen gleichen oder/und ähnlichem T_{g} aufweist. Besonders bevorzugt ist es dabei, dass mindestens ein Teil der organischen Filmbildner eine Glasübergangstemperatur T_{g} im Bereich von 10 bis 70 °C, ganz besonders bevorzugt im Bereich von 15 bis 65 °C, insbesondere im Bereich von 20 bis 60 °C aufweist. Der organische Filmbildner enthält dann vorzugsweise mindestens einen Anteil an mindestens einem Polymer oder/und mindestens einem Copolymerisat mit einer Mindestfilmbildungstemperatur MFT im Bereich von - 10 bis + 99 °C, besonders bevorzugt im Bereich von 0 bis 90 °C, insbesondere ab 5 °C oder ab 10 °C. Hierbei ist es besonders bevorzugt, dass mindestens zwei, wenn nicht sogar alle organischen Filmbildner eine Mindestfilmbildungstemperatur in einem dieser Temperaturbereiche aufweisen - soweit eine Mindestfilmbildungstemperatur angegeben werden kann.

Besonders vorteilhaft ist es, wenn alle organischen Filmbildner bei der Trocknung verfilmen. Besonders bevorzugt ist es, wenn der wässerigen Zusammensetzung Kunstharze zugesetzt werden, die zu mindestens 80 Gew.-% thermoplastische Eigenschaften aufweisen, insbesondere zu mindestens 90 Gew.%.

Vorzugsweise wird der organische Filmbildner gebildet aus mindestens einer Komponente in der Form von jeweils mindestens einer Lösung, Dispersion, Emulsion, Mikroemulsion oder/und Suspension, die der wässerigen Zusammensetzung zugesetzt wird. Der Begriff Dispersion umfaßt hierbei auch die Unterbegriffe Emulsion, Lösung, Mikroemulsion und Suspension.

Die Säurezahl der Kunstharze beträgt bevorzugt 3 bis 100, besonders bevorzugt 3 bis 60 oder 4 bis 50. Insbesondere werden der wässerigen Zusammensetzung Copolymerisate mit einer Säurezahl im Bereich von 3 bis 50 zugesetzt. Gegebenenfalls sind die zuzusetzenden Komponenten des organischen Filmbildners bereits teilweise neutralisiert. Der organische Filmbildner kann vorzugsweise einen Anteil an mindestens einem Copolymerisat mit einer Säurezahl im Bereich von 3 bis 80 enthalten, insbesondere zu mindestens 50 Gew.-% der zugesetzten Kunstharze. In einem hohen Bereich der Säurezahl ist es üblicherweise nicht notwendig, einen Filmbildner kationisch, anionisch oder/und sterisch zu stabilisieren. Bei einer geringen Säurezahl ist jedoch eine solche Stabilisierung oft notwendig. Dann ist es vorteilhaft, bereits (teil-)stabilisierte Kunstharze bzw. deren Gemische einzusetzen.

Die wässerige Zusammensetzung enthält vorzugsweise mindestens ein Kunstharz wie organisches Polymer, Copolymer oder/und deren Mischung, insbesondere ein Kunstharz auf Basis Acrylat, Ethylen, Polyester, Polyurethan, Siliconpolyester, Epoxid, Phenol, Styrol, Melamin-Formaldehyd, Hamstoff-Formaldehyd oder/und Vinyl. Der organische Filmbildner kann vorzugsweise ein Kunstharzgemisch aus mindestens einem Polymer oder/und mindestens einem Copolymerisat sein, das jeweils unabhängig voneinander einen Gehalt an Kunstharz auf Basis Acrylat, Epoxid, Ethylen, Harnstoff-Formaldehyd, Phenol, Polyester, Polyurethan, Styrol, Styrolbutadien oder/und Vinyl enthält. Hierbei kann es sich auch um ein kationisch, anionisch oder/und sterisch stabilisiertes Kunstharz bzw. Polymer oder/und deren Dispersion oder sogar deren Lösung handeln. Der Begriff Acrylat im Sinne dieser Anmeldung schließt Acrylsäureester, Polyacrylsäure, Methacrylsäureester und Methacrylat ein.

Der organische Filmbildner kann vorzugsweise mindestens eine Komponente auf der Basis von
Acryl-Polyester-Polyurethan-Copolymerisat,
Acryl-Polyester-Polyurethan-Styrol-Copolymerisat,
Acrylsäureester,
Acrylsäureester-Methacrylsäureester, ggf. mit freien Säuren oder/und Acrylnitril,
Ethylen-Acryl-Gemisch,
Ethylen-Acryl-Copolymerisat,
Ethylen-Acryl-Polyester-Copolymerisat,
Ethylen-Acryl-Polyurethan-Copolymerisat,
Ethylen-Acryl-Polyester-Polyurethan-Copolymerisat,
Ethylen-Acryl-Polyester-Polyurethan-Styrol-Copolymerisat,
Ethylen-Acryl-Styrol-Copolymerisat,
Polyesterharzen mit freien Carboxylgruppen kombiniert mit Melamin-Formaldehydharzen,
einem Kunstharzgemisch oder/und Copolymerisat auf der Basis von Acrylat und Styrol,
einem Kunstharzgemisch oder/und Copolymerisat auf der Basis von Styrolbutadien,
einem Kunstharzgemisch oder/und Copolymerisat von Acrylat und Epoxid,
auf der Basis von einem Acryl-modifizierten Carboxylgruppenhaltigen Polyester zusammen mit Melamin-Formaldehyd und Ethylen-Acryl-Copolymerisat,
Polycarbonat-Polyurethan,
Polyester-Polyurethan,
Styrol,
Styrol-Vinylacetat,
Vinylacetat,
Vinylester oder/und
Vinylether enthalten.

Der organische Filmbildner kann aber auch vorzugsweise als Kunstharz einen Gehalt an organischem Polymer, Copolymer oder/und deren Mischungen auf der Basis von Polyethylenimin, Polyvinylalkohol, Polyvinylphenol, Polyvinylpyrrolidon oder/und Polyasparaginsäure, insbesondere Copolymere mit einer Phosphor enthaltenden Vinylverbindung, enthalten. Vorzugsweise wird der wässerigen Zusammensetzung auch ein leitfähiges Polymer zugesetzt.

Ganz besonders bevorzugt ist ein Kunstharz auf Basis Acrylat oder auf Basis Ethylen-Acrylsäure mit einem Schmelzpunkt im Bereich von 60 bis 95 °C oder ein Kunstharz mit einem Schmelzpunkt im Bereich von 20 bis 160 °C, insbesondere im Bereich von 60 bis 120 °C.

Vorzugsweise kann mindestens 30 Gew.-% des zugesetzten organischen Filmbildners aus verfilmbaren thermoplastischen Harzen bestehen, besonders bevorzugt zu mindestens 50 Gew.%, ganz besonders bevorzugt zu mindestens 70 Gew.%, vor allem zu mindestens 90 oder zu mindestens 95 Gew.-%. Daneben kann der organische Filmbildner auch Gehalte, unter Umständen Restgehalte, an jeweils mindestens einem Monomer, Oligomer, Emulgator, weiteren Additiv für Dispersionen, einen Härter, Photoinitiator oder/und einer kationisch polymerisierbaren Substanz enthalten. Der Gehalt an Monomer, Oligomer, Emulgator und weiterem Additiv für Dispersionen beträgt meistens weniger als 5 Gew.-%, oft weniger als 2 Gew.%, evtl. weniger als 1 Gew.-%. Die Zusammensetzung von Härtern und entsprechend dann ggf. auch zugesetzten vernetzbaren Stoffen sowie die entsprechenden Maßnahmen hierzu sind grundsätzlich bekannt.

Vorzugsweise können die Molekulargewichte der zugesetzten Kunstharze im Bereich von mindestens 1000 u, besonders bevorzugt von mindestens 5000 u, ganz besonders bevorzugt von 20.000 bis 200.000 u liegen. Vorzugsweise weisen die einzelnen thermoplastischen Komponenten des organischen Filmbildners, die der wässerigen Zusammensetzung zugesetzt werden, Molekulargewichte im Bereich von 20.000 bis 200.000 u auf, insbesondere im Bereich von 50.000 bis 150.000 u.

Vorzugsweise kann der organische Filmbildner aus mindestens 40 Gew.-% hochmolekularen Polymeren bestehen, besonders bevorzugt aus mindestens 55 Gew.%, ganz besonders bevorzugt aus mindestens 70 Gew.-%, vor allem aus mindestens 85 Gew.-%, insbesondere aus mindestens 95 Gew.%. Insbesonders wenn mindestens 85 Gew.-% des organischen Filmbildners aus hochmolekularen Polymeren besteht, ist es meistens nicht erforderlich, Härter wie Isocyanate oder Photoinitiatoren wie Benzophenone zur thermischen oder radikalischen Vernetzung sowie entsprechend vernetzbare Kunstharze zuzusetzen, um die hervorragenden Eigenschaften der erfindungsgemäßen Beschichtung zu erzielen. Denn es gelingt dann, durch das Verfilmen einen geschlossenen, festen, hochwertigen Film auszubilden, ohne eine Vernetzung auszuführen.

Beim Verfilmen, das insbesondere beim Trocknen erfolgt, lagern sich die organischen Mikropartikel aneinander und verdichten sich zu einem geschlossenen porenfreien Film, wenn die Auswahl der Polymere und Filmbildungshilfsmittel geeignet ist und unter geeigneten Bedingungen gearbeitet wird. Der Fachmann ist mit diesen Substanzklassen und Arbeitsbedingungen grundsätzlich vertraut. Dass dieser Film trotz einer so geringen Schichtdicke vorzugsweise im Bereich von 0,5 bis 3 µm außerordentlich hochwertige Eigenschaften aufweisen kann, beweisen die Ausführungsbeispiele. Nach Kenntnis der Anmelderin ist bisher keine im wesentlichen organische, chromatfreie Beschichtung mit einer Schichtdicke von weniger als 4 µm Trockenfilmdicke für die Beschichtung von metallischen Bändern von derart hoher Lackhaftung und Korrosionsbeständigkeit beschrieben worden, die vorwiegend verfilmte Polymere enthält. Die erfindungsgemäße Beschichtung ist einer chromathaltigen organischen Beschichtung mindestens gleichwertig.

Das Endtrocknen kann bei derartigen Filmen viele Tage andauern, während die wesentliche Trocknung bereits in wenigen Sekunden vollzogen werden kann. Das Härten kann dabei u.U. über mehrere Wochen dauern, bis der Endtrocknungs- und Härtungszustand erreicht ist, wenn hierbei keine thermische oder radikalische Vernetzung auftritt. Bei Bedarf kann das Härten zusätzlich durch Bestrahlung z.B. mit UV-Strahlung oder durch Erwärmen infolge Vernetzung beschleunigt bzw. verstärkt werden oder/und auch ein wenig durch Zusatz von und Reaktion mit z.B. freie NCO-Gruppen-haltigen Verbindungen mit den Hydroxylgruppen der Hydroxylgruppen-haltigen Polymere.

Vorzugsweise wird die Beschichtung weitgehend oder gänzlich durch Trocknen und Verfilmen zum Härten gebracht. Alternativ kann jedoch die Beschichtung teilweise durch Trocknen und Verfilmen sowie teilweise durch aktinische Strahlung, kationische Polymerisation oder/und thermisches Vernetzen zum Härten bzw. Aushärten gebracht werden. In diesem Fall werden der wässerigen Zusammensetzung gegebenenfalls mindestens ein Photoinitiator oder/und mindestens ein Härter sowie entsprechend vernetzbare Harze zugesetzt.

Der pH-Wert des organischen Filmbildners in einer wässerigen Zubereitung liegt ohne Zugabe weiterer Verbindungen üblicherweise im Bereich von 0,5 bis 12. Der pH-Wert der wässerigen Zusammensetzung, die als Feststoffgehalte vorwiegend Kunstharze und auch Silan und Chelat enthält, liegt vorzugsweise im Bereich von 1 bis 6 bzw. 6 bis 10,5 - je nachdem, ob im sauren oder eher basischen Bereich gearbeitet wird, besonders bevorzugt im Bereich von 6,5 bis 9,5, ganz besonders bevorzugt im Bereich von 7 bis 9,2.

Der organische Filmbildner enthält in einer Ausführungsvariante vorzugsweise nur wasserlösliche Kunstharze, insbesondere solche, die in Lösungen mit pH-Werten ≤ 9 stabil sind, oder/und enthält der organische Filmbildner mindestens ein Kunstharz, das Hydroxyl-Gruppen aufweist. Falls jedoch der pH-Wert aufgrund der Lagerung der Kunstharze bzw. der Gemische abgefallen sein sollte, kann es hilfreich sein, den pH-Wert insbesondere der ansonsten einsatzbereiten Dispersion z.B. durch Zugabe von Natronlauge wieder in einen alkalischeren Bereich zu bringen. Der organische Filmbildner kann auch so zusammengesetzt sein, dass er ggf. nur - wasserlösliches Kunstharz enthält, insbesondere solches, das in Lösungen mit pH-Werten ≤ 5 stabil ist.

Vorzugsweise sind oder/und werden die Säuregruppen der Kunstharze mit Ammoniak, mit Aminen bzw. Alkanolaminen wie z.B. Morpholin, Dimethylethanolamin, Diethylethanolamin oder Triethanolamin oder/und mit Alkalimetallverbindungen wie z.B. Natriumhydroxid neutralisiert. Diese Zusatzstoffe wirken dann als Stabilisator.

Unter Verfilmen wird eine Filmbildung aus einem Material mit hohem organischen Anteil wie einer Polymerdispersion verstanden, bei der vor allem Polymerteilchen vorzugsweise bei Raumtemperatur oder leicht erhöhter Temperatur in einen einheitlichen Film übergehen. Dabei wird oft von Verschmelzen der vergleichsweise großen Polymerteilchen gesprochen. Hierbei erfolgt die Verfilmung aus einem wässerigen Medium bei der Trocknung und ggf. unter Plastifizierung der Polymerteilchen durch die verbleibenden Filmbildungshilfsmittel. Die Filmbildung läßt sich durch den Einsatz thermoplastischer Polymere bzw. Copolymere oder/und durch Zusatz von Substanzen, die als temporäre Weichmacher dienen, verbessern. Filmbildungshilfsmittel wirken als spezifische Lösemittel, die die Oberfläche der Polymerteilchen erweichen und so deren Verschmelzung ermöglichen. Hierbei ist vorteilhaft, wenn diese Weichmacher einerseits ausreichend lange in der wässerigen Zusammensetzung bleiben, um sich auf die Polymerteilchen lange auswirken zu können, und danach verdampfen und somit aus dem Film entweichen. Ferner ist es vorteilhaft, wenn auch ausreichend lange während des Trockenprozesses ein Restwassergehalt vorhanden ist. Bei einer geeigneten Filmbildung wird ein transparenter Film ausgebildet, jedoch kein milchigweißer oder gar pulveriger Film, was ein Anzeichen für eine gestörte Filmbildung ist. Für die möglichst perfekte Filmbildung hat die Temperatur des auf einer Oberfläche applizierten Naßfilms über der Mindestfilmtemperatur (MFT) zu liegen. Denn nur dann sind die Polymerteilchen weich genug, um zu koaleszieren. Hierbei ist es besonders vorteilhaft, wenn diese Weichmacher den pH-Wert der wässerigen Zusammensetzung nicht oder nahezu nicht verändern. Die Auswahl der geeigneten Filmbildungshilfsmittel ist dabei nicht einfach, wobei oft ein Gemisch aus mindestens zwei Filmbildungshilfsmitteln erforderlich ist. Vorteilhaft als Filmbildungshilfsmittel sind sogenannte langkettige Alkohole, mit 4 bis 20 C-Atomen, wie ein Butandiol, ein Butylglykol, ein Butyldiglykol, ein Ethylenglykolether wie Ethylenglykolmonobutylether, Ethylenglykolmonoethylether, Ethylenglykolmonomethylether, Ethylglykolpropylether, Ethylenglykolhexylether, Diethylenglykolmethylether, Diethylenglykolethylether, Diethylenglykolbutylether, Diethylenglykolhexylether oder ein Polypropylenglykolether wie Propylenglykolmonomethylether, Dipropylenglykolmonomethylether, Tripropylenglykolmonomethylether, Propylenglykolmonobutylether, Dipropylenglykolmonobutylether, Tripropylenglykolmonobutylether, Propylenglykolmonopropylether, Dipropylenglykolmonopropylether, Tripropylenglykolmonopropylether, Propylenglykolphenylether, Trimethylpentandioldiisobutyrat, ein Polytetrahydrofuran, ein Polyetherpolyol oder/und ein Polyesterpolyol. Im Unterschied zum Verfilmen werden für thermisch härtende organische Beschichtungen üblicherweise Temperaturen von mindestens 120 °C zur Vernetzung benötigt.

Bei den erfindungsgemäßen Verfahren, die Zusammensetzungen betreffen, die vorwiegend Chelat und Silan oder vorwiegend Kunstharz und daneben Chelat und Silan enthalten, kann in der wässerigen Zusammensetzung mindestens eine Komponente e) enthalten sein ausgewählt aus der Gruppe von
e₁) mindestens einer anorganischen Verbindung in Partikelform mit einem mittleren Partikeldurchmesser gemessen an einem Rasterelektronenmikroskop im Bereich von 0,005 bis zu 0,3 µm Durchmesser,
e₂) mindestens einem Gleitmittel,
e₃) mindestens einem organischen Korrosionsinhibitor,
e₄) mindestens einem Korrosionsschutzpigment,
e₅) mindestens einem Mittel zur Neutralisation oder/und zur sterischen Stabilisation der Kunstharze,
e₆) mindestens ein organisches Lösemittel,
e₇) mindestens ein Siloxan und
e₈) mindestens eine Chrom(VI)-Verbindung.

Vorzugsweise wird als anorganische Verbindung in Partikelform e₁) ein feinverteiltes Pulver, eine Dispersion oder eine Suspension wie z.B. ein Carbonat, Oxid, Silicat oder Sulfat zugesetzt, insbesondere kolloidale oder/und amorphe Partikel. Vorzugsweise werden als anorganische Verbindung in Partikelform Partikel auf Basis von mindestens einer Verbindung des Aluminiums, Bariums, Cers, Kalziums, Lanthans, Siliciums, Titans, Yttriums, Zinks oder/und Zirkoniums zugesetzt. Vorzugsweise werden als anorganische Verbindung in Partikelform Partikel auf Basis von Aluminiumoxid, Bariumsulfat, Cerdioxid, Siliciumdioxid, Silicat, Titanoxid, Yttriumoxid, Zinkoxid oder/und Zirkonoxid zugesetzt.

Vorzugsweise werden als anorganische Verbindung in Partikelform Partikel mit einer mittleren Partikelgröße im Bereich von 6 bis 200 nm verwendet, besonders bevorzugt im Bereich von 7 bis 150 nm, ganz besonders bevorzugt im Bereich von 8 bis 90 nm, noch stärker bevorzugt im Bereich von 8 bis 60 nm, vor allem bevorzugt im Bereich von 10 bis 25 nm. Diese Partikel können auch in Form von Gel oder Sol vorliegen. Die Partikel können z.B. alkalisch stabilisiert sein, um eine bessere Dispergierung zu erzielen. Ein Zusatz von Bor zur Dispergierung der anorganischen Verbindung in Partikelform war nicht erforderlich und ist auch bei den Beispielen nicht verwendet worden. Es ist bevorzugt, dass größere Partikel eine eher plättchenförmige oder längliche Kornform aufweisen.

Die mindestens eine anorganische Verbindung in Partikelform ist in der wässerigen Zusammensetzung, die als Badzusammensetzung oder/und als Konzentrat dienen kann, vorzugsweise in einem Gehalt von 0,1 bis 500 g/L enthalten, besonders bevorzugt in einem Bereich von 10 bis 200 g/L, ganz besonders bevorzugt von 30 bis 100 g/L, vor allem im Bereich von 3 bis 60 g/L. Vorzugsweise werden auf 100 Gewichtsteile Wasser 0,1 bis 50 Teile der mindestens einen anorganischen Verbindung in Partikelform zugegeben, besonders bevorzugt 0,5 bis 20 Teile, ganz besonders bevorzugt 0,8 bis 10 Teile. Unter den anorganischen Verbindungen in Partikelform sind insbesondere solche bevorzugt, die die Transparenz der erfindungsgemäßen Beschichtung erhalten, also farblos bzw. weiß sind, wie z.B. Aluminiumoxid, Bariumsulfat, Silicat, Siliciumdioxid, kolloidalem Siliciumdioxid, Zinkoxid oder/und Zirkoniumoxid, um den visuellen Charakter der metallischen Oberfläche möglichst unverfälscht sichtbar zu erhalten.

Partikel mit einer höheren oder hohen elektrischen Leitfähigkeit, die ggf. auch zugesetzt werden, wie solche von Eisenoxid, Eisenphosphid, Wolfram, Zink und Zinklegierung, können für die Anwendung zum Schweißen auch so ausgewählt werden, dass sie eine solche mittlere Partikelgröße aufweisen, dass sie ggf. aus der erfindungsgemäßen Schicht etwas stärker herausragen.

Das Verhältnis der Gehalte an organischem Filmbildner zu Gehalten an anorganischen Verbindungen in Partikelform in der wässerigen Zusammensetzung kann in weiten Bereichen schwanken; insbesondere kann es bei ≤ 25 : 1 liegen. Vorzugsweise liegt dieses Verhältnis in einem Bereich von ≥ 0,05 : 1 bzw. bis zu 15 : 1, besonders bevorzugt in einem Bereich von ≥ 0,2 : 1 bzw. bis zu 12 : 1, ganz besonders bevorzugt in einem Bereich von ≥ 0,5 : 1 bzw. bis zu 10 : 1, insbesondere in einem Bereich von ≥ 1 : 1 bzw. bis zu 8 : 1.

Das Verhältnis der Gehalte an dem mindestens einen Silan zu Gehalten an anorganischen Verbindungen in Partikelform in der wässerigen Zusammensetzung kann ebenfalls in weiten Bereichen schwanken; insbesondere kann es bei ≤ 25 : 1 liegen. Vorzugsweise liegt dieses Verhältnis in einem Bereich von ≥ 0,01 : 1 bzw. bis zu 15 : 1, besonders bevorzugt in einem Bereich von ≥ 0,05 : 1 bzw. bis zu 8 : 1, ganz besonders bevorzugt in einem Bereich von ≥ 0,08 : 1 bzw. bis zu 4 : 1, insbesondere in einem Bereich von ≥ 0,1 : 1 bzw. bis zu 2 : 1.

Vorzugsweise wird als Gleitmittel e₂) mindestens ein Wachs ausgewählt aus der Gruppe der Paraffine, Polyethylene und Polypropylene verwendet, insbesondere ein oxidiertes Wachs, wobei der Gehalt an Wachsen in der wässerigen Zusammensetzung vorzugsweise im Bereich von 0,01 bis 5 Gew.-% liegt, besonders bevorzugt im Bereich von 0,02 bis 3,5 Gew.-%, ganz besonders bevorzugt im Bereich von 0,05 bis 2 Gew.-%. Vorzugsweise liegt der Schmelzpunkt des als Gleitmittel eingesetzten Wachses im Bereich von 40 bis 165 °C, besonders bevorzugt im Bereich von 50 bis 160 °C, insbesondere im Bereich von 120 bis 150 °C. Besonders vorteilhaft ist es, zusätzlich zu einem Gleitmittel mit einem Schmelzpunkt im Bereich von 120 bis 165 °C ein Gleitmittel mit einem Schmelzpunkt im Bereich von 45 bis 95 °C oder mit einer Glasübergangstemperatur im Bereich von - 20 bis + 60 °C zuzusetzen, insbesondere in Mengen von 2 bis 30 Gew.-%, vorzugsweise von 5 bis 20 Gew.%, des Gesamtfeststoffgehalts. Letzteres kann auch allein vorteilhaft eingesetzt werden.

Es ist besonders vorteilhaft, das Wachs als wässerige bzw. als kationisch, anionisch oder/und sterisch stabilisierte Dispersion einzusetzen, weil es dann in der wässerigen Zusammensetzung leicht homogen verteilt gehalten werden kann. Vorzugsweise ist das mindestens eine Gleitmittel, das ggf. auch gleichzeitig ein Umformmittel sein kann, in einem Gehalt im Bereich von 0,1 bis 25 g/L und besonders bevorzugt in einem Gehalt im Bereich von 1 bis 15 g/L in der wässerigen Zusammensetzung enthalten. Ein Wachsgehalt ist jedoch meistens nur vorteilhaft, wenn die erfindungsgemäße Beschichtung eine Behandlungsschicht ist, da der Wachsgehalt in einer Vorbehandlungsschicht bei der Lackierung nachteilig sein kann. Es kann ein Gleit- oder/und Umformmittel zugesetzt werden zur Verringerung des Reibungskoeffizienten der Beschichtung, insbesondere beim Umformen. Hierzu empfehlen sich u.a. Paraffin, Polyethylen bzw. oxidiertes Polyethylen.

Vorzugsweise wird als Gleitmittel mindestens ein Wachs zusammen mit einem Ethylen und Acrylsäure enthaltenden Polymerengemisch oder/und Copolymerisat wie Ethylen-Acrylsäure-Copolymerisat eingesetzt, wobei gegebenenfalls mindestens ein weiteres Kunstharz zugesetzt wird, insbesondere in einem Mengenverhältnis von Wachs zu dem Ethylen und Acrylsäure enthaltenden Copolymerisat von 0,02 : 1 bis 2 : 1, besonders bevorzugt von 0,05 : 1 bis 1 : 1, ganz besonders bevorzugt von 0,1 : 1 bis 0,5 : 1.

Das Verhältnis der Gehalte an organischem Filmbildner zu Gehalten an Gleitmittel in der wässerigen Zusammensetzung (Badzusammensetzung) kann in weiten Bereichen schwanken; insbesondere kann es bei ≥ 2 : 1 liegen. Vorzugsweise liegt dieses Verhältnis in einem Bereich von 3 : 1 bis 50 : 1, besonders bevorzugt in einem Bereich von 10 : 1 bis 20 : 1. Vorzugsweise enthält die wässerige Zusammensetzung mindestens einen organischen Korrosionsinhibitor e₃), insbesondere auf Basis von Amin(en), vorzugsweise mindestens ein Alkanolamin - vorzugsweise ein langkettiges Alkanolamin, mindestens ein TPA-Amin-Komplex wie Säureaddukt-4-oxo-4-p-tolyl-butyrat-4-Ethylmorpholin, mindestens ein Zinksalz von Aminocarboxylat, von 5-Nitro-lsophthalsäure oder von Cyansäure, mindestens ein polymeres Ammoniumsalz mit Fettsäure, mindestens ein Metallsalz einer Sulfonsäure wie Dodecyl-Naphthalinsulfonsäure, mindestens ein Amino- und Übergangsmetallkomplex der Toluolpropionsäure, 2-Mercapto-Benzothiazolyl-Bernsteinsäure bzw. mindestens eines ihrer Aminosalze, mindestens ein leitfähiges Polymer oder/und mindestens ein Thiol, wobei der Gehalt an organischen Korrosionsinhibitoren in der wässerigen Zusammensetzung vorzugsweise im Bereich von 0,01 bis 5 Gew.-% liegen kann, besonders bevorzugt im Bereich von 0,02 bis 3 Gew.-%, ganz besonders bevorzugt im Bereich von 0,05 bis 1,5 Gew.-%.

Der mindestens eine organische Korrosionsinhibitor ist vorzugsweise bei Raumtemperatur nicht leichtflüchtig. Ferner kann es vorteilhaft sein, wenn er in Wasser gut löslich oder/und in Wasser gut dispergierbar ist, insbesondere mit mehr als 20 g/L. Besonders bevorzugt sind u.a. Alkylaminoethanole wie Dimethylaminoethanol bzw. Komplexe auf Basis von einem TPA-Amin wie N-Ethylmorpholin-Komplex mit 4-Methyl-γ-oxo-benzolbutansäure. Dieser Korrosionsinhibitor kann zugesetzt werden, um eine stärkere Korrosionsinhibition zu bewirken oder noch weiter zu verstärken. Der Zusatz des mindestens einen organischen Korrosionsinhibitors ist aufgrund der sehr hohen Korrosion inhibierenden Wirkung der erfindungsgemäßen Zusammensetzungen meistens nur bei den sehr schwierig zu schützenden metallischen Oberflächen wie blanken Stahloberflächen erforderlich. Er ist vorteilhaft, wenn unverzinkte Stahloberflächen, insbesondere kaltgewalzter Stahl (CRS), beschichtet werden sollen.

Das Verhältnis der Gehalte an organischem Filmbildner zu Gehalten an mindestens einem organischen Korrosionsinhibitor in der wässerigen Zusammensetzung (Badzusammensetzung) kann in weiten Bereichen schwanken; insbesondere kann es bei ≤ 500 : 1 liegen. Vorzugsweise liegt dieses Verhältnis in einem Bereich von 5 : 1 bis 400 : 1, besonders bevorzugt in einem Bereich von 10 : 1 bis 100 : 1.

Vorzugsweise enthält die wässerige Zusammensetzung 0,1 bis 80 g/L des mindestens einen Korrosiosschutzpigments e₄). Hierzu gehören insbesondere verschiedene Silicate auf Basis von Aluminium-, Alumo-, Alumoerdalkali- und Erdalkalisilicaten. Die Korrosionsschutzpigmente weisen vorzugsweise einen mittleren Partikeldurchmesser gemessen an einem Rasterelektronenmikroskop im Bereich von 0,01 bis 0,5 µm Durchmesser auf, insbesondere im Bereich von 0,02 bis 0,3 µm. Die verschiedenen Arten Korrosionsschutzpigmente sind grundsätzlich bekannt. Ein Zusatz von mindestens einem dieser Pigmente scheint jedoch nicht grundsätzlich erforderlich zu sein, sondern ermöglicht alternative Ausführungsvarianten.

Die Mittel zur Neutralisation oder/und zur sterischen Stabilisation der Säuregruppen der Kunstharze mit einer Säurezahl insbesondere im Bereich von 5 bis 50 e₅) können unter anderem langflüchtige Alkanolamine und Hydroxide wie Natronlauge und Kalilauge sein, vorzugsweise jedoch schnellflüchtige Alkanolamine, Ammoniak und Verbindungen auf Basis Morpholin und Alkanolaminen. Sie bewirken, dass die neutralisierten Kunstharze wassermischbar werden bzw. sind bei einer Säurezahl ab etwa 150 auch wasserlöslich.

Bei dem erfindungsgemäßen Verfahren kann gegebenenfalls auch mindestens ein organisches Lösemittel e₆) zugesetzt werden. Als organisches Lösemittel für die organischen Polymere kann mindestens ein wassermischbarer oder/und wasserlöslicher Alkohol, ein Glykolether bzw. n-Methylpyrrolidon oder/und Wasser verwendet werden, im Falle der Verwendung eines Lösemittelgemisches insbesondere eine Mischung aus mindestens einem langkettigen Alkohol, wie z.B. Propylenglykol, ein Esteralkohol, ein Glykolether oder/und Butandiol mit Wasser. Vorzugsweise wird jedoch in vielen Fällen nur Wasser ohne jegliches organisches Lösemittel zugegeben. Bei Verwendung von organischem Lösemittel beträgt deren Gehalt vorzugsweise 0,1 bis 10 Gew.-%, insbesondere 0,25 bis 5 Gew.-%, ganz besonders bevorzugt 0,4 bis 3 Gew.-%. Für die Bandherstellung ist es bevorzugt, eher nur Wasser und fast keine oder keine organischen Lösemittel einzusetzen, evtl. außer geringen Mengen an Alkohol.

Außerdem ist es vorteilhaft, mindestens ein Netzmittel e₇) zuzusetzen, um den Naßfilm gleichmäßig in der flächigen Ausbreitung und in der Schichtdikke sowie dicht und ohne Fehlstellen aufbringen zu können. Grundsätzlich sind viele Netzmittel hierfür geeignet, vorzugsweise Acrylate, Silane, Polysiloxane, langkettige Alkohole, die die Oberflächenspannung der wässerigen Zusammensetzung herabsetzen.

Die erfindungsgemäßen Beschichtungen können weitgehend oder gänzlich frei sein nicht nur von Chrom(VI)-Verbindungen, sondern auch von Chrom(III)-Verbindungen, ohne dadurch an Qualität zu verlieren. Auch wenn es im Rahmen der Erfindung normalerweise nicht vorgesehen ist, umweltgefährliche Chromverbindungen e₈) wie insbesondere solchen von Cr⁶⁺ zuzusetzen, kann das in seltenen Einsatzfällen auf Kundenwunsch dennoch vorgesehen werden. Die wässerige Zusammensetzung, die vorzugsweise frei oder weitgehend frei von Chrom(VI)-Verbindungen ist, weist auf Chromfreien metallischen Oberflächen nur einen Chrom-Gehalt von bis zu 0,05 Gew.-%, auf Chrom-haltigen metallischen Oberflächen einen Chrom-Gehalt von bis zu 0,2 Gew.-% auf: Im Bad auftretende Chromgehalt können durch Beizangriff aus der metallischen Oberfläche herausgelöst sein, aus Verunreinigungsgehalten in Spuren stammen bzw. eingeschleppt sein aus vorgeschalteten Bädern bzw. aus Behältern und Rohrleitungen kommen. Vorzugsweise ist der wässerigen Zusammensetzung kein Chrom bewußt zugegeben.

Das erfindungsgemäße Verfahren kann jedoch auch vorteilhaft mit einem Gehalt an mindestens einer chromhaltigen Verbindung eingesetzt werden, wenn der Korrosionsschutz in großer Breite und mit hoher Sicherheit erhalten bleiben soll, besonders an Beschädigungen der Schutzschicht, die durch mechanische Beanspruchungen während Transport, Lagerung und Montage der mit der erfindungsgemäßen Behandlungsflüssigkeit auf der Substratoberfläche behandelten Substrate verursacht werden können. Dann können beispielsweise Natriumbichromat, Kaliumbichromat oder/und Ammoniumbichromat zugesetzt werden. Der Gehalt an Chrom(VI)-Verbindungen beträgt dann vorzugsweise 0,01 bis 100 g/l, besonders bevorzugt, 0,1 bis 30 g/l.

Vorzugsweise kann die wässerige Zusammensetzung auch mindestens ein basisches Vernetzungsmittel auf Basis von Titan, Hafnium oder/und Zirkonium als Kation oder/und auf Basis von Carbonat oder Ammoniumcarbonat als Anion enthalten, wobei der Gehalt an derartigen Vernetzungsmitteln in der wässerigen Zusammensetzung vorzugsweise im Bereich von 0,01 bis 3 Gew.-% liegt, besonders bevorzugt im Bereich von 0,02 bis 1,8 Gew.-%, ganz besonders bevorzugt im Bereich von 0,05 bis 1 Gew.%.

Vorzugsweise enthält die wässerige Zusammensetzung mindestens ein Additiv, insbesondere mindestens eines ausgewählt aus der Gruppe von mindestens einem Biozid, mindestens einem Entschäumer oder/und mindestens einem Netzmittel.

Vorzugsweise werden der wässerigen Zusammensetzung keine Säuren, insbesondere keine anorganischen Säuren oder/und organischen Carbonsäuren zugesetzt - u.U. mit Ausnahme der in den Rohstoffen versteckt enthaltenen Säurespuren. Sie ist insbesondere frei oder weitgehend frei an anorganischen Säuren oder/und organischen Carbonsäuren, vor allem frei an anorganischen Säuren.

Die erfindungsgemäße wässerige Zusammensetzung ist vorzugsweise frei von Zusätzen an freiem Fluorid, an Komplexfluorid wie z.B. Hexafluorotitansäure oder Hexafluorozirkonsäure oder/und an anderweitig gebundenem Fluorid.

Vorzugsweise ist die wässerige Zusammensetzung frei oder weitgehend frei an Schwermetallen. Insbesondere sollten Gehalte an Cadmium, Nickel, Kobalt oder/und Kupfer äußerst gering gehalten und nicht zugegeben werden. Üblicherweise ist jedoch für die erfindungsgemäßen Zusammensetzungen der Beizangriff derart gering, dass kein Stahlveredler wie z.B. Chrom oder Nickel aus einer Stahloberfläche herausgelöst werden kann.

Besonders vorteilhafte erfindungsgemäße Zusammensetzungen bestehen im wesentlichen aus u.a. mindestens einem Copolymerisat z.B. auf Basis von Acryl-Polyester-Polyurethan, Styrol, Styrol-Acrylat oder/und Ethylen-Acryl als Filmbildner, mindestens einem Silan, mindestens einem Chelat, mindestens einem Filmbildungshilfsmittel auf Basis eines langkettigen Alkohols, mindestens einer anorganischen Verbindung in Partikelform insbesondere auf Basis von Aluminiumoxid, Aluminiumphosphid, Eisenoxid, Eisenphosphid, Glimmer, Lanthanidoxid(en) z.B. auf Basis Ceroxid, Molybdänsulfid, Graphit, Ruß, Silicat, Siliciumdioxid, kolloidalem Siliciumdioxid, Zinkoxid oder/und Zirkoniumoxid, ggf. mindestens einem Gleitmittel wie Wachs, ggf. mindestens einem Netzmittel wie Polysiloxanen, ggf. mindestens einem organischen Korrosionsinhibitor und ggf. weiteren Additiven wie u.a. einem Entschäumer.

Vorzugsweise ist die metallische Oberfläche in einem frisch hergestellten, sauberen oder in einem gereinigten Zustand. Der Begriff "saubere metallische Oberfläche" bedeutet hierbei eine ungereinigte metallische, z.B. frisch verzinkte Oberfläche, bei der keine Reinigung notwendig ist, bzw. eine frisch gereinigte Oberfläche.

Vorzugsweise wird die wässerige Zusammensetzung direkt auf die metallische Oberfläche aufgebracht wird, ohne vorher eine Vorbehandlungszusammensetzung aufzutragen. Für manche Anwendungen kann es dennoch vorteilhaft sein, zuvor mindestens eine Vorbehandlungsschicht z.B. auf Basis einer Alkaliphosphatierung, einer Zink-haltigen Phosphatierung, einer Seltene Erden wie Cer enthaltenden Vorbehandlung oder/und von mindestens einem Silan aufzutragen.

Zum Ansetzen der Badzusammensetzung aus einem Konzentrate in erster Linie durch Verdünnen mit Wasser bzw. für eine Ergänzungslösung zum Einstellen der Badzusammensetzung beim längeren Betrieb eines Bades werden vorzugsweise wässerige Zusammensetzungen verwendet, die die meisten oder fast alle Bestandteile der Badzusammensetzung enthalten, jedoch in der Regel nicht die mindestens eine anorganische Verbindung in Partikelform, die bevorzugt separat gehalten und separat zugeben wird. Auch Reaktions- und Trocknungsbeschleuniger wie z.B. das Morpholinsalz der Paratoluolsulfosäure können vorteilhaft separat zugegeben werden. Das Konzentrat bzw. die Ergänzungslösung weisen vorzugsweise eine Konzentration auf, die fünfmal bis zehnmal bezüglich der einzelnen Bestandteile so stark angereichert ist wie die Badzusammensetzung. In manchen Fällen kann jedoch auch mit dem "Konzentrat" direkt als Badzusammensetzung gearbeitet werden, ggf. nach einer geringen Verdünnung um z.B. 5 bis 30 %.

Bei dem erfindungsgemäßen Verfahren kann die wässerige Zusammensetzung vorzugsweise bei einer Temperatur im Bereich von 5 bis 50 °C auf die metallische Oberfläche aufgebracht werden, besonders bevorzugt im Bereich von 10 bis 40 °C, ganz besonders bevorzugt im Bereich von 18 bis 25 °C, bzw. bei 30 bis 95°C. Bei dem erfindungsgemäßen Verfahren kann die metallische Oberfläche bei der Applikation der Beschichtung vorzugsweise auf Temperaturen im Bereich von 5 bis 60 °C gehalten werden, besonders bevorzugt im Bereich von 10 bis 55 °C, ganz besonders bevorzugt im Bereich von 18 bis 25 °C gehalten werden, bzw. u.U. auch bei 50 bis 120 °C. Bei dem erfindungsgemäßen Verfahren kann die beschichtete metallische Oberfläche vorzugsweise bei einer Temperatur im Bereich von 20 bis 400 °C Umlufttemperatur getrocknet werden, vorzugsweise im Bereich von 40 bis 120 °C bzw. im Bereich von 140 bis 350 °C, ganz besonders bevorzugt bei 60 bis 100 °C bzw. bei 160 bis 300 °C PMT (peak-metal-temperature) - je nach chemischer Zusammensetzung der organischen Filmbildner. Die notwendige Verweilzeit beim Trocknen ist im wesentlichen umgekehrt proportional zur Trockentemperatur: Z.B. bei bandförmigem Material 1 bis 3 s bei 100 °C bzw. 1 bis 20 s bei 250 °C je nach der chemischen Zusammensetzung der Kunstharze bzw. Polymere oder 30 min bei 20 °C, während Polyesterharze mit freien Hydroxylgruppen in Kombination mit Melamin-Formaldehydharzen nicht bei Temperaturen unter 120 °C getrocknet werden können. Andererseits müssen beschichtete Formteile u.a. je nach Wanddikke deutlich länger getrocknet werden. Zum Trocknen eignen sich insbesondere Trockeneinrichtungen auf Basis von Umluft, Induktion, Infrarot oder/und Mikrowellen. Bei dem erfindungsgemäßen Verfahren können die beschichteten Bänder vorzugsweise zu einem Coil aufgewickelt werden, ggf. nach einer Abkühlung auf eine Temperatur im Bereich von 40 bis 70 °C.

Bei dem erfindungsgemäßen Verfahren kann die wässerige Zusammensetzung vorzugsweise durch Aufwalzen, Fluten, Aufrakeln, Spritzen, Sprühen, Streichen oder Tauchen und ggf. durch nachfolgendes Abquetschen mit einer Rolle aufgetragen werden.

Die Schichtdicke der erfindungsgemäßen Beschichtung liegt bevorzugt im Bereich von 0,1 bis 6 µm, besonders bevorzugt im Bereich von 0,2 bis 5 µm, ganz besonders bevorzugt im Bereich von 0,25 bis 4 µm, insbesondere im Bereich von 0,3 bis 2,5 µm.

Der getrocknete und ggf. auch ausgehärtete Film weist vorzugsweise eine Pendelhärte von 30 bis 190 s, vorzugsweise von 50 bis 180 s, auf, gemessen mit einem Pendelhärteprüfer nach König nach DIN 53157. Die Pendelhärte nach König liegt in manchen Fällen jedoch vorzugsweise im Bereich von 60 bis 150 s, besonders bevorzugt im Bereich von 80 bis 120 s. Bei UVvernetzbaren Beschichtungen treten oft Werte im Bereich von 100 bis 150 s der Pendelhärte auf, während bei den nicht-UV-vemetzbaren oder z.B. auf nicht oder kaum chemisch vernetzenden Polymerdispersionen basierenden Beschichtungen können bevorzugt Werte der Pendelhärte im Bereich von 40 bis 80 s auftreten. Die erfindungsgemäß hergestellten Schichten sind nur an Prüfkörpern mit chemisch gleichartigen, aber ausreichend dicken Schichten zu prüfen, jedoch nicht an dünnen Beschichtungen im Bereich bis zu 10 µm Dicke.

Der getrocknete und ggf. auch ausgehärtete Film weist vorzugsweise eine derartige Flexibilität auf, dass beim Biegen über einen konischen Dorn bei einem Dornbiegetest weitestgehend nach DIN ISO 6860 für einen Dorn von 3.2 mm bis 38 mm Durchmesser - jedoch ohne die Testfläche anzureißen - keine Risse länger als 2 mm entstehen, die bei der anschließenden Benetzung mit Kupfersulfat durch Farbumschlag infolge Kupferabscheidung auf der aufgerissenen metallischen Oberfläche erkennbar werden. Der Begriff "weitestgehend" bedeutet dabei, dass üblicherweise dickere Filme charakterisiert werden, weshalb hier noch ein Kupfersulfattest angeschlossen wird, der die sonst u.U. nicht sichtbaren Fehlstellen erkennbar werden läßt. Der Nachweis der Flexibilität durch Anwendung des Dornbiegetests und anschließendem Tauchen der auf diese Weise umgeformten Bereiche in eine Kupfersulfatlösung zum Erkennen von Fehlstellen gewährt ein reproduzierbares Testergebnis und hat den Vorteil, dass hierzu keine aufwendigen, z.B. 240 h andauernden Korrosionsprüfungen erforderlich sind, die teilweise je nach chemischer Zusammensetzung und Rauheit der metallischen Oberfläche zu unterschiedlichen Ergebnissen führen können, die daher nur begrenzt miteinander verglichen werden können. Für diesen Test ist es bei unedleren metallischen Oberflächen wie bei Aluminiumlegierungen erforderlich, vor der Beschichtung die metallische Oberfläche erst einmal beizend zu reinigen, um die Oxidschicht weitestgehend zu entfernen.

Vorzugsweise liegen die Flächenanteile der enthafteten Fläche bei dem T-Bend-Test an erfindungsgemäß und dann mit Coil Coating-Lack beschichteten Formteilen (Blechen) nur bei bis zu 8 %, besonders bevorzugt bei bis zu 5 %, ganz besonders bevorzugt bei bis zu 2 %, wobei jedoch die besten Werte bei näherungsweise 0 % liegen, so dass dann üblicherweise nur Risse auftreten. Hierfür kann vorzugsweise ein Coil-Coating-Lack auf Basis von Silicon-Polyester eingesetzt werden, insbesondere für vergleichende Tests in für beschichtete Coils typischen Prüfungen. Die Rißfreiheit bzw. die Größe der Risse ist hierbei jedoch auch wesentlich von der Beschaffenheit des eingesetzten Lackes abhängig.

Bei dem erfindungsgemäßen Verfahren kann auf den getrockneten und ggf. auch ausgehärteten Film vorzugsweise jeweils mindestens eine Beschichtung aus Druckfarbe, Folie, Lack, lackähnlichem Material, Pulverlack, Klebstoff oder/und Klebstoffträger aufgebracht werden.

Auf den teilweise oder gänzlich getrockneten bzw. ausgehärteten Film kann jeweils mindestens eine Beschichtung aus Lack, Polymer, Lackfarbe, funktionelle Kunststoffbeschichtungen, Klebstoff oder/und Klebstoffträger wie z.B. eine Selbstklebefolie aufgebracht werden, insbesondere ein Naßlack, ein Pulverlack, eine Kunststoffbeschichtung, ein Klebstoff u.a. zur Folienbeschichtung. Die erfindungsgemäß mit der wässerigen Zusammensetzung beschichteten Metallteile, insbesondere Bänder oder Bandabschnitte, können umgeformt, lackiert, mit Polymeren wie z.B. PVC beschichtet, bedruckt, beklebt, heißgelötet, geschweißt oder/und durch Clinchen oder andere Fügetechniken miteinander oder mit anderen Elementen verbunden werden. Diese Verfahren sind für die Beschichtung von metallischem Band für Architekturanwendungen grundsätzlich bekannt. In der Regel wird zuerst lakkiert oder anderweitig beschichtet und danach umgeformt. Wenn die erfindungsgemäße Beschichtung lackiert oder mit Kunststoff beschichtet ist können Löt- bzw. Schweißverbindungen meistens nicht hergestellt werden, ohne dass die Beschichtungen wenigstens lokal entfernt werden, es sei denn dass zum elektrischen Schweißen ein hoher Anteil an leitfähigen Partikeln oder/und an leitfähigem Polymer in den erfindungsgemäßen Film eingebaut ist und die darauffolgende Beschichtung außerordentlich dünn ist.

Die erfindungsgemäß beschichteten Substrate können vorzugsweise verwendet werden als Draht, Band, Blech oder Teil für eine Drahtwicklung, ein Drahtgeflecht, ein Stahlband, ein Blech, eine Verkleidung, eine Abschirmung, eine Karosserie oder ein Teil einer Karosserie, ein Teil eines Fahrzeugs, Anhängers, Wohnmobils oder Flugkörpers, eine Abdeckung, ein Gehäuse, eine Lampe, eine Leuchte, ein Ampelelement, ein Möbelstück oder Möbelelement, ein Element eines Haushaltsgeräts, ein Gestell, ein Profil, ein Formteil komplizierter Geometrie, ein Leitplanken-, Heizkörper- oder Zaunelement, eine Stoßstange, ein Teil aus oder mit mindestens einem Rohr oder/und einem Profil, ein Fenster-, Tür- oder Fahrradrahmen oder ein Kleinteil wie eine Schraube, Mutter, Flansch, Feder oder ein Brillengestell. Das erfindungsgemäße Verfahren stellt eine Alternative zu den genannten einerseits Chromat-reichen Säure-freien bzw. andererseits Säure-haltigen Verfahren dar, insbesondere im Bereich der Oberflächenvorbehandlung von Metallband vor der Lackierung, und liefert im Vergleich zu ihnen vergleichbar gute Ergebnisse hinsichtlich Korrosionsschutz und Lackhaftung.

Darüberhinaus ist es möglich, das erfindungsgemäße Verfahren zur Behandlung der in herkömmlicher Weise gereinigten Metalloberfläche ohne eine darauf folgende Nachbehandlung wie dem Spülen mit Wasser oder einer geeigneten Nachspüllösung einzusetzen. Das erfindungsgemäße Verfahren ist insbesondere für die Applikation der Behandlungslösung mittels Abquetschwalzen bzw. mittels eines sog. Rollcoaters geeignet, wobei die Behandlungslösung unmittelbar nach der Applikation ohne weitere, zwischengeschaltete Verfahrensschritte eingetrocknet werden kann (Dry In Place-Technologie). Dadurch wird das Verfahren z.B. gegenüber herkömmlichen Spritz- bzw. Tauchverfahren, insbesondere solchen mit anschließenden Spülgängen wie z.B. einer Chromatierung oder Zinkphosphatierung, erheblich vereinfacht, und es fallen nur geringste Mengen an Spülwasser zur Anlagenreinigung nach dem Arbeitsende an, weil kein Spülprozeß nach der Applikation notwendig ist, was auch gegenüber den bereits etablierten, im Spritzverfahren mit Nachspüllösungen arbeitenden chromfreien Verfahren einen Vorteil darstellt. Diese Spülwässer können einem neuen Ansatz der Badzusammensetzung wieder zugesetzt werden.

Dabei ist es gut möglich, die erfindungsgemäße polymere, ggf. chromatfreie, Beschichtung ohne vorhergehenden Auftrag einer zusätzlichen Vorbehandlungsschicht einzusetzen, so dass ein hervorragender dauerhafter Schutz der metallischen Oberflächen und insbesondere auf AlSi-, ZnAl- wie Galfan^{®}, AlZn- wie Galvalume^{®}, ZnFe-, ZnNi- wie Galvanneal^{®} und anderen Zn-Legierungen als metallische Beschichtungen bzw. Al- und Zn-Beschichtungen möglich ist, der durch Auftrag einer Polymer-haltigen Beschichtung erzielt werden kann. Darüber hinaus hat sich die erfindungsgemäße Beschichtung auch bei stärker korrosionsanfälligen metallischen Oberflächen wie solchen aus Eisen- und Stahl-Legierungen, insbesondere bei kaltgewalztem Stahl, gut bewährt, wobei es dann vorteilhaft ist, mindestens einen Korrosionsinhibitor der wässerigen Zusammensetzung zuzusetzen. Hierdurch kann die Flash-Rust-Bildung während der Trocknung der Behandlungsflüssigkeit auf kaltgewalztem Stahl (CRS) unterbunden werden.

Somit ist ein kostengünstiger und umweltfreundlicher Korrosionsschutz erzielbar, der auch nicht einer kostspieligen UV-Aushärtung bedarf, sondern allein mit der Trocknung und Verfilmung bzw. ggf. ergänzend mit der "gewöhnlichen chemischen" Aushärtung, die oft als "thermische Vernetzung" bezeichnet wird, ausreichend aushärtbar ist. In manchen Fällen kann es jedoch von Interesse sein, in einem bestimmten Prozeßschritt schnell eine härtere Beschichtung zu erhalten. Dann kann es vorteilhaft sein, dass mindestens ein Photoinitiator zugesetzt und mindestens eine UV-härtbare Polymerkomponente ausgewählt wird, um eine teilweise Vernetzung auf der Basis von aktinischer Strahlung, insbesondere von UV-Strahlung, zu erzielen. Dann kann die erfindungsgemäße Beschichtung teilweise durch aktinische Strahlung und teilweise durch Trocknen und Verfilmen bzw. durch thermische Vernetzung zur Aushärtung gebracht werden. Das kann insbesondere beim Applizieren auf schnell laufenden Bandanlagen bzw. für die erste Vernetzung (= Aushärtung) von Bedeutung sein. Der Anteil der sog. UV-Vernetzung kann dabei 0 bis 50 % der gesamten möglichen Aushärtung betragen, vorzugsweise 10 bis 40 %.

Die erfindungsgemäße polymere und weitgehend oder gänzlich chromatfreie Beschichtung hat weiterhin den Vorteil, dass sie - insbesondere bei einer Schichtdicke im Bereich von 0,5 bis 3 µm - transparent und hell ist, so dass durch die Beschichtung hindurch der metallische Charakter und die typische Struktur z.B. einer verzinkten bzw. einer Galvalume^{®}-Oberfläche genau und unverändert oder nahezu unverändert erkennbar bleibt. Außerdem sind derartig dünne Beschichtungen noch problemlos schweißbar.

Die erfindungsgemäße polymere Beschichtung ist darüber hinaus sehr gut verformbar, da sie so eingestellt werden kann, dass sie sich nach dem Beschichten, Trocknen und ggf. Aushärten sowie ggf. auch auf Dauer in einem relativ plastischen und nicht in einem harten, spröden Zustand befindet.

Die erfindungsgemäße Polymer-haltige Beschichtung läßt sich mit den meisten Lacken bzw. Kunststoffen gut überlackieren. Die erfindungsgemäße Polymer-haltige Beschichtung kann nachlackiert werden oder mit Kunststoff wie PVC beschichtet werden durch Auftragsverfahren wie z.B. Pulverlackieren, Naßlackieren, Fluten, Rollen, Streichen oder Tauchen. Meistens weisen die dadurch erzeugten ausgehärteten Beschichtungen, die auf die erfindungsgemäße Polymer-haltige Beschichtung aufgetragen werden, wobei oft auch zwei oder drei Lack- oder Kunststoffschichten aufgebracht werden können, eine Gesamtschichtdicke im Bereich von 5 bis zu 1500 µm auf.

Die erfindungsgemäße polymere Beschichtung ist auch z.B. mit Polyurethan-Isolierschaum problemlos hinterschäumbar für die Herstellung von 2-Blech-Sandwichelementen oder mit den üblichen Konstruktionsklebstoffen, wie sie z.B. im Fahrzeugbau eingesetzt werden, gut verklebbar.

Die erfindungsgemäßen Beschichtungen können vor allem als Primerschichten eingesetzt werden. Sie eignen sich hervorragend ohne, aber auch mit mindestens einer vorher aufgebrachten Vorbehandlungsschicht. Diese Vorbehandlungsschicht kann dann u.a. eine Beschichtung auf Basis von Phosphat, insbesondere ZnMnNi-Phosphat, oder auf Basis von Phosphonat, Silan oder/und einem Gemisch auf Basis von Fluoridkomplex, Korrosionsinhibitor, Phosphat, Polymer oder/und fein verteilten Partikeln sein.

Mit den erfindungsgemäßen Beschichtungen werden Vorbehandlungsschichten bzw. Primerschichten erzielt, die zusammen mit dem nachfolgend aufgebrachten Lack ein Beschichtungssystem ergaben, das den besten chromhaltigen Beschichtungssystemen gleichwertig ist.

Das erfindungsgemäße Verfahren hat gegenüber den bisher beschriebenen oder/und praktizierten Verfahren weiterhin den Vorteil, dass es auf Aluminium-reichen bzw. auf einem mit einer Aluminium-haltigen Legierung beschichteten Substrat - insbesondere bei einem Substrat aus Stahl - keine Dunkelfärbung der Substratoberfläche und auch keine milchig-weiße Mattierung der Substratoberfläche verursacht und somit zur dekorativen Gestaltung von Gebäuden oder/und Gebäudeteilen ohne zusätzliche farbgebende Lackierung einsetzbar ist. Die Ästhetik der Metalloberfläche bleibt unverändert.

Die erfindungsgemäßen Beschichtungen sind außerordentlich preiswert, umweltfreundlich und gut großtechnisch einsetzbar.

Es war überraschend, dass mit einer erfindungsgemäßen Kunstharzbeschichtung trotz einer Schichtdicke von nur ca. 0,5 bis 2 µm ein außerordentlich hochwertiger chromfreier Film hergestellt werden konnte.

Es war sehr überraschend, dass durch den Zusatz von Metallchelat zur wässerigen Zusammensetzung eine signifikante Steigerung des Korrosionsschutzes, aber auch der Lackhaftung des hieraus gebildeten Films erzielt werden konnte - sowohl bei den wässerigen Zusammensetzungen, die vorwiegend Chelat und Silan enthalten, als auch bei denen, die vorwiegend Kunstharz und daneben Chelat und Silan enthalten.

Die haftvermittelnde Wirkung der Silane bzw. ihrer Reaktionsprodukte insbesondere zwischen metallischem Substrat und Lack und ggf. zwischen Pigment und organischen Lackbestandteilen sollte auch bei den Zusammensetzungen, wie sie hier in den Ausführungsbeispielen beschrieben werden vorherrschen oder sogar alleine auftreten, solange nicht Polymere und Chelat gleichzeitig vorhanden sind. Es war nicht erwartet worden, dass bei hohen Gehalten an hochmolekularen Polymeren und Copolymeren ohne Gegenwart von niedrigmolekularen organischen Anteilen durch den Zusatz von Chelat eine deutliche Verbesserung der Filmeigenschaften erzielt werden würde. Möglicherweise werden die hochmolekularen Polymere und Copolymere durch die Anwesenheit von Chelat vernetzt, was insbesondere für solche verfilmenden Systeme, die keine Anteile an Härter und Photoinitiator aufweisen, besonders vorteilhaft ist. Hierdurch können höhere Temperaturbelastungen, wie sie für die thermische Vernetzung sonst genutzt werden, und eine radikalische Bestrahlung, die einen zusätzlichen kostspieligen Prozeßschritt darstellen, vermieden werden.

### Beispiele und Vergleichsbeispiele:

Die im folgenden beschriebenen Beispiele sollen den Gegenstand der Erfindung näher erläutern.

### A) Zusammensetzungen im wesentlichen auf Basis von Chelat und Silan:

Zur Vorbereitung von wässerigen Konzentraten wurde mindestens ein teilweise hydrolysiertes Silan über mindestens zwei Wochen gealtert und ggf. dabei auch hydrolysiert. Danach wurde ein Metallchelat entsprechend Tabelle 1 zugesetzt. Danach wurden die Konzentrate mit Wasser verdünnt und ggf. mit einem den pH-Wert anpassenden Mittel wie Ammoniak versetzt, um einsatzbereite Behandlungsflüssigkeiten zu gewinnen. Dann wurden jeweils mindestens 3 Bleche aus feuerverzinktem Stahl bzw. aus Galvalume^{®}-Stahlblech durch Aufwalzen und Auftrocknen der entsprechenden Behandlungsflüssigkeit bei 25 °C in Kontakt gebracht. Dabei wurden die derart behandelten Bleche bei 90 °C PMT getrocknet und anschließend auf ihren Korrosionsschutz geprüft.

Die Vergleichsbeispiele VB 1 bis VB 8 zeigen den Einfluß der Zugabe von Chelat bzw. von Chelat und Polymergemisch auf. Bei den Vergleichsbeispielen VB 9 bis VB 12 sowie VB 13 bis VB 17 wurden die Mengen an Silan und Chelat erhöht und gleichzeitig der Zusatz an anorganischen Partikeln verringert, wobei sich diese beiden Serien durch unterschiedliche Zugabemengen an Polymergemisch unterscheiden. Schließlich wurden bei den Vergleichsbeispielen VB 9 und VB 18 bis VB 20 die Schichtdicken variiert.

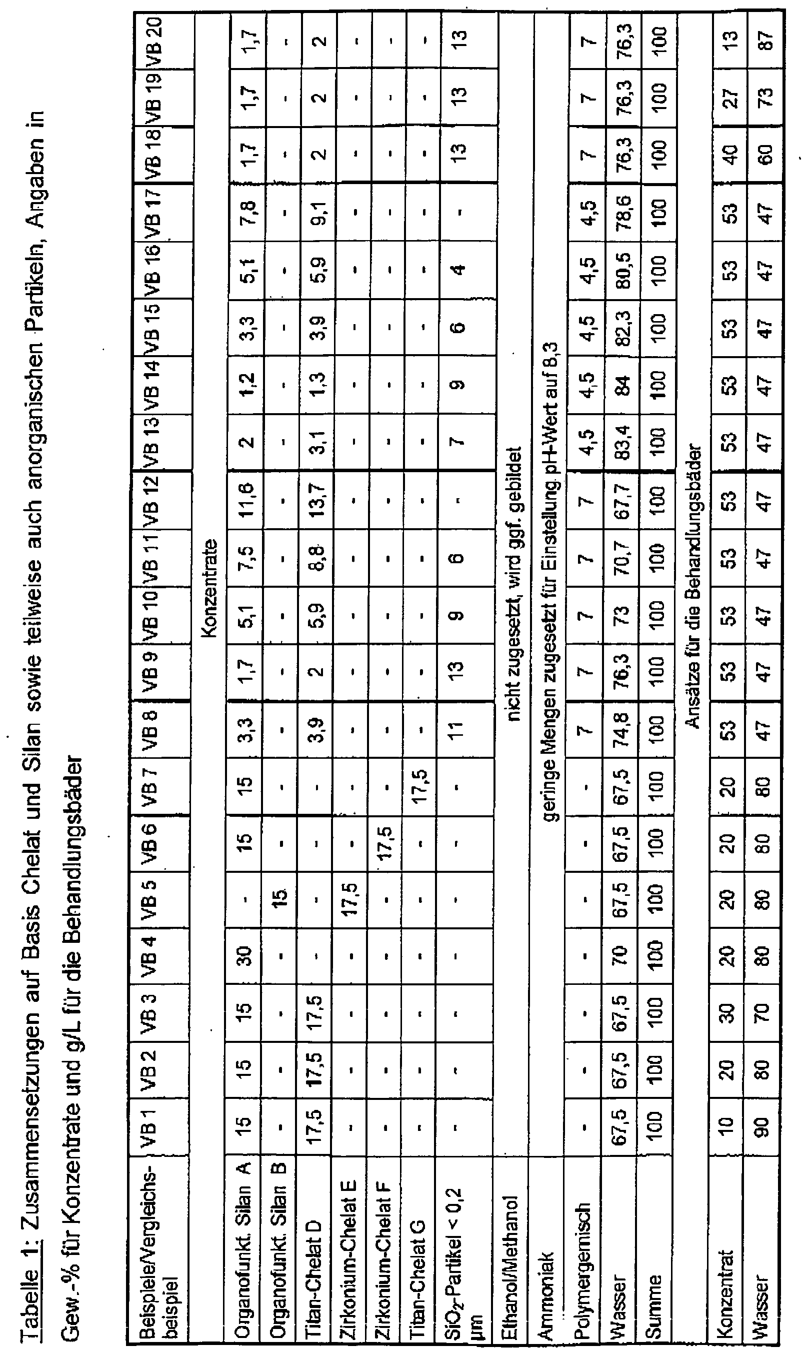

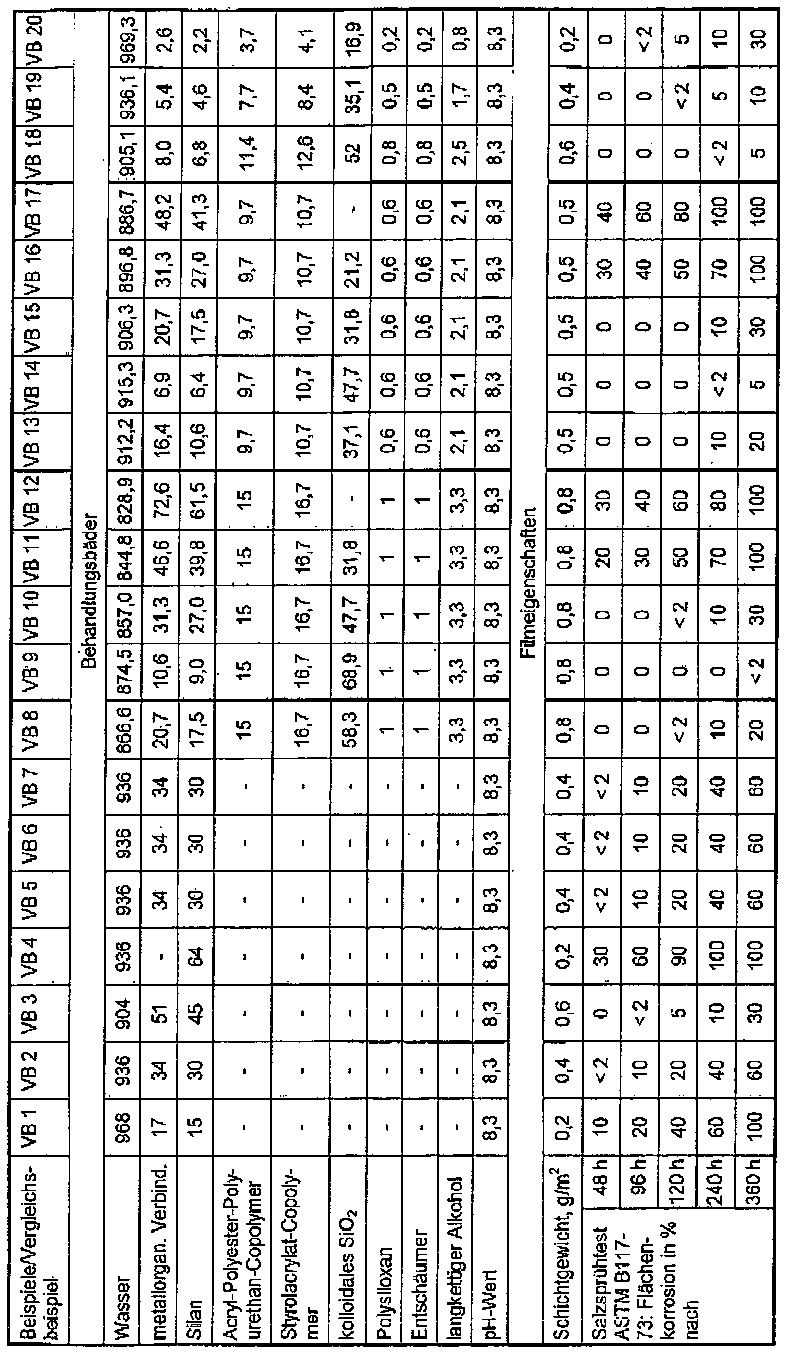

Der hierbei entstandene Film war transparent, gleichmäßig und geschlossen. Die Filme zeigten keine Einfärbung und zeigten keine Verdunkelung der darunter liegenden metallischen Oberfläche (Darkening). Das ist besonders vorteilhaft, um Struktur, Glanz und Farbe der metallischen Oberfläche praktisch unverändert durch die Beschichtung sehen zu können. Die Kombination von Chelat und Silan ergab eine sehr deutliche Verbesserung des Korrosionsschutzes schon bei sehr geringen Schichtdicken im Vergleich zu einer Zusammensetzung, die frei von metallorganischen Verbindungen ist. Darüber hinaus zeigten weitere Beispiele, dass insbesondere ein höherer Zusatz an anorganischen Partikeln, in diesem Fall auf Basis von SiO₂ mit einer mittleren Partikelgröße im Bereich von 10 bis 20 nm, einen weiteren zusätzlichen Beitrag zur Verbesserung der Korrosionsbeständigkeit geliefert hat. Hierbei war es überraschend, dass über kleine Zusätze an derartigen Partikeln hinaus eine Erhöhung des Anteils an anorganischen Partikeln noch eine deutliche Anhebung des Korrosionsschutzes ermöglichte. Erstaunlicherweise war trotz des teilweise hohen Anteils an anorganischen Partikeln möglich, nach der Verfilmung der Beschichtung einen geschlossenen und trotzdem flexiblen Film resistent gegen mechanische Beeinflussungen. Das Schichtgewicht etwa geteilt durch 1,1 ergibt die Schichtdicke in µm. Die Flächenanteile der Korrosion wurden visuell geschätzt. Dieser dünne Film hat aufgrund der vergleichsweise geringen Anteile an Kunstharz(en) eher die Eigenschaften einer Passivierung statt einer dünner organischen Beschichtung, die umgeformt werden kann. Der etwa 0,75 µm dünne Film des Beispiels 9 ist zwar dicker als eine typische Chromat-reiche anorganische Passivierung, zeigt aber mindestens die gleich gute Korrosionsbeständigkeit und ist zudem, anders als die Chromat-reiche Schicht, gut umformbar.

### B) Zusammensetzungen im wesentlichen auf Basis von Chelat, Silan und organischem Polymer: Behandlung bzw. Vorbehandlung von feuerverzinkten, legierungsverzinkten und elektrolytisch verzinkten Stahlblechen:

Die angegebenen Konzentrationen und Zusammensetzungen beziehen sich auf die Behandlungslösung selbst und nicht auf ggf. verwendete Ansatzlösungen höherer Konzentration. Alle Konzentrationsanangaben sind als Festkörperanteile zu verstehen, d.h., die Konzentrationen beziehen sich auf die Gewichtsanteile der wirksamen Komponenten unabhängig davon, ob die eingesetzten Rohstoffe in verdünnter Form z.B. als wäßrige Lösungen vorlagen. Zusätzlich zu den im folgenden aufgeführten Zusammensetzungen kann es in der kommerziellen Praxis erforderlich oder erwünscht sein, weitere Additive zuzusetzen oder die Mengen entsprechend anzupassen, beispielsweise entweder die Gesamtmenge an Zusätzen heraufzusetzen oder z.B. die Menge des Entschäumers oder/und des Verlaufmittels wie z.B. ein Polysiloxan heraufzusetzen.

Als Kunstharze wurden eingesetzt: Ein Styrolacrylat-Copolymer mit einer Glasübergangstemperatur im Bereich von 15 bis 25 °C, mit einer Mindestfilmbildungstemperatur (MFT) im Bereich von 15 bis 20 °C und mit einer mittleren Partikelgröße im Bereich von 120 bis 180 nm, ein Acryl-Polyester-Polyurethan-Copolymerisat mit einem Blockpunkt im Bereich von 140 bis 180°C, einer MFT im Bereich von 35 bis 40°C und einer Glasübergangstemperatur im Bereich von 20 bis 60°C, ein Ethylen-Acryl-Copolymerisat ohne ausgeprägte Mindestfilmtemperatur, aber mit einem Schmelzpunkt im Bereich von 70 bis 90 °C, und einem Acrylat mit vergleichsweise wenigen Hydroxyl-Gruppen, die mit einem Melaminharz vernetzt werden könnte, mit einer Zahl an OH-Gruppen (Hydroxylzahl) im Bereich von 20 bis 60, berechnet auf das Festharz. Das Styrol-Butadien-Copolymerisat weist eine Glasübergangstemperatur im Bereich von - 20 bis + 20 °C auf und eine Säurezahl im Bereich von 5 bis 30; aufgrund des Gehalts an Carboxylgruppen ist dieses Copolymerisat z.B. mit Melaminharzen oder mit Isocyanat-haltigen Polymeren zusätzlich vernetzbar. Das Copolymerisat auf der Basis von Epoxid-Acrylat hat eine Säurezahl im Bereich von 10 bis 18 und eine Glasübergangstemperatur zwischen 25 und 40 °C. Dieses Copolymerisat für die Beschichtung insbesondere von Stahl gibt dem erfindungsgemäßen Überzug eine höhere chemische Beständigkeit, insbesondere im basischen Bereich, und verbessert die Hafteigenschaften zum metallischen Untergrund. Als organofunktionelles Silan A und B wurden zwei verschiedene Trialkoxysilane mit jeweils einer Epoxygruppe und als organofunktionelles Silan C wurde ein Ethylendiamin-Silan verwendet.

Die pyrogene Kieselsäure wies einen BET-Wert im Bereich von 90 bis 130 m²/g auf, das kolloidale Siliciumdioxid eine mittlere Partikelgröße im Bereich von 10 bis 20 nm. Das oxidierte Polyethylen diente als Gleit- und Umformmittel (Wachs) und wies einen Schmelzpunkt im Bereich von 60 bis 165°C auf, vorzugsweise im Bereich von 80 bis 110 oder sogar bis 150°C, besonders bevorzugt im Bereich von 100 bis 140°C. Das eingesetzte Polysiloxan war ein polyethermodifiziertes Dimethylpolysiloxan und diente als Benetzungs- und Verlaufsmittel des Maßfilms während der Applikation. Der Entschäumer war ein Gemisch aus Kohlenwasserstoffen, hydrophober Kieselsäure, oxalierten Verbindungen und nichtionogenen Emulgatoren. Als langkettiger Alkohol wurde ein Butylether auf Basis Propylenglykol oder ein Gemisch mit einem ähnlichen, noch schneller flüchtigen Glykolether als diesem Butylether zur Filmbildung verwendet.

Stahlbleche, die aus handelsüblichem kaltgewalzten und anschließend a) legierungsverzinktem Stahlband mit 55 Gew.-% Al in AlZn (Galvalume^{®}), mit 5 Gew.-% Al in ZA (Galfan^{®}), mit ca. 2 Gew.-% Al in ZnAl (crack-free-steel), b) feuerverzinktem Stahlband c) feueraluminiertem Stahlband und d) elektrolytisch verzinktem Stahlband erhalten wurden, die zum Zwecke des Schutzes bei der Lagerung beölt waren, wurden zunächst in einem mildalkalischen Spritzreiniger entfettet, mit Wasser gespült, bei erhöhter Temperatur getrocknet und anschließend mit der erfindungsgemäßen wässerigen Zusammensetzung behandelt. Dabei wurde eine definierte Menge der wässerigen Zusammensetzung (Badzusammensetzung) mit Hilfe eines Rollcoaters so aufgetragen, dass sich eine Naßfilmdicke von ca. 10 ml/m² ergab, wobei die Konzentration für eine Trockenfilmdicke von 2 g/m² verdoppelt wurde. Die Bestandteile wurden teilweise in der angegebenen Reihenfolge gemischt, und der pH-Wert der Lösung wurde anschließend mit einer Ammoniaklösung oder einer Lösung von schnellflüchtigem Alkanolamin auf 8,0 bis 8,5 jeweils eingestellt. Anschließend wurde der Naßfilm bei Temperaturen im Bereich von 80 bis 100°C PMT aufgetrocknet, verfilmt und gehärtet. Ausgewählte Zusammensetzungen der Badzusammensetzung werden in Tabelle 2 genannt. Die in dieser Weise behandelten Stahlbleche wurden danach auf ihren Korrosionsschutz und ihre mechanischen Eigenschaften geprüft (Tabelle 3). In dieser Tabelle werden jedoch nur die Ergebnisse an feuerverzinkten Stahlblechen dargestellt, weil diese zu den am schwierigsten gegen Korrosion zu schützenden Materialien zählen und unter den geprüften Materialien neben elektrolytisch verzinkten Stahlbleche am schlechtesten abschneiden. Da jedoch elektrolytisch verzinkte Stahlbleche normalerweise nie im Außenbereich ohne nachfolgende Lackierung aufgrund ihrer erhöhten Korrosionsanfälligkeit verbaut werden, ist die Prüfung von feuerverzinkten Stahlblechen, die relativ schwierig korrosionsbeständig zu gestalten sind und heute öfter ohne Lackierung eingesetzt werden, am sinnvollsten.

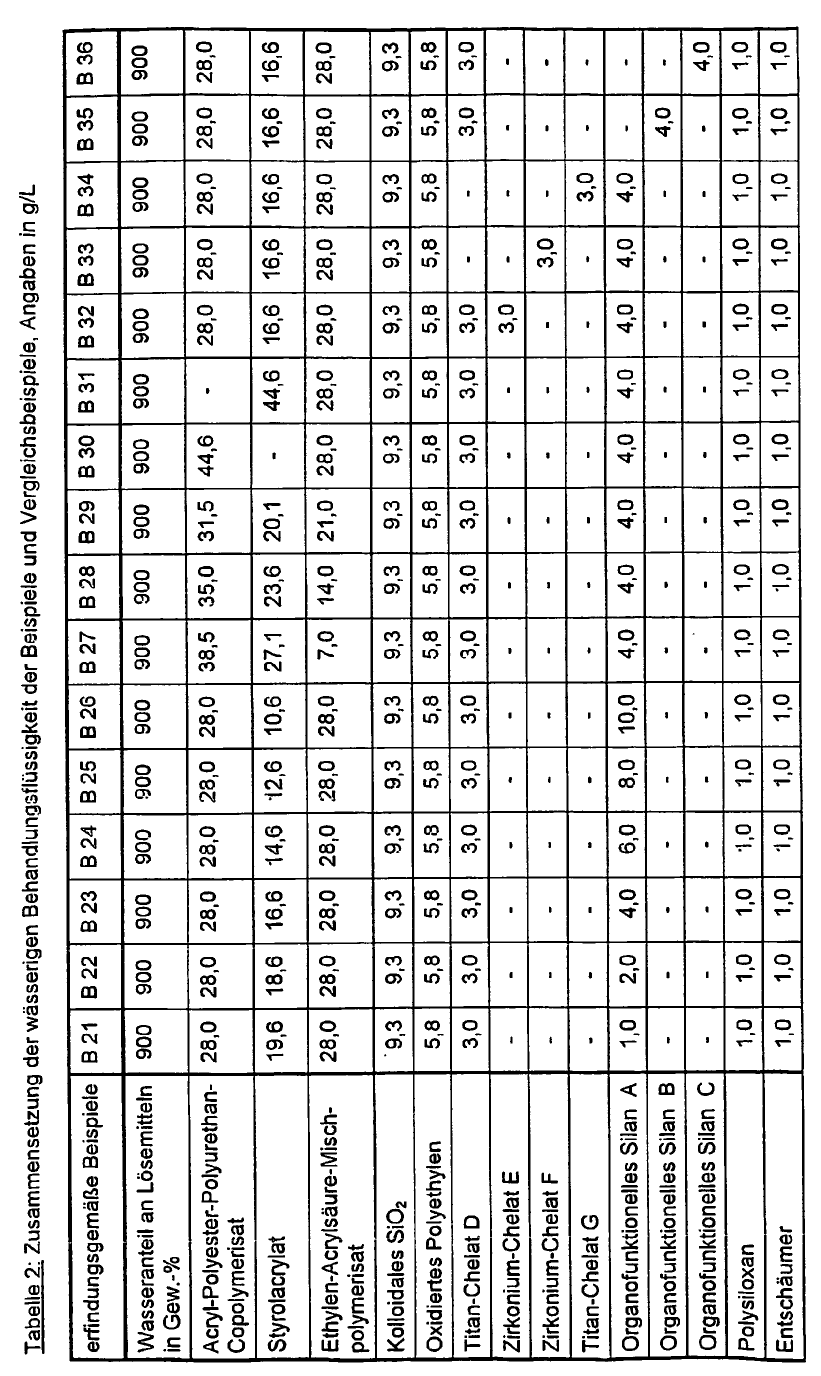

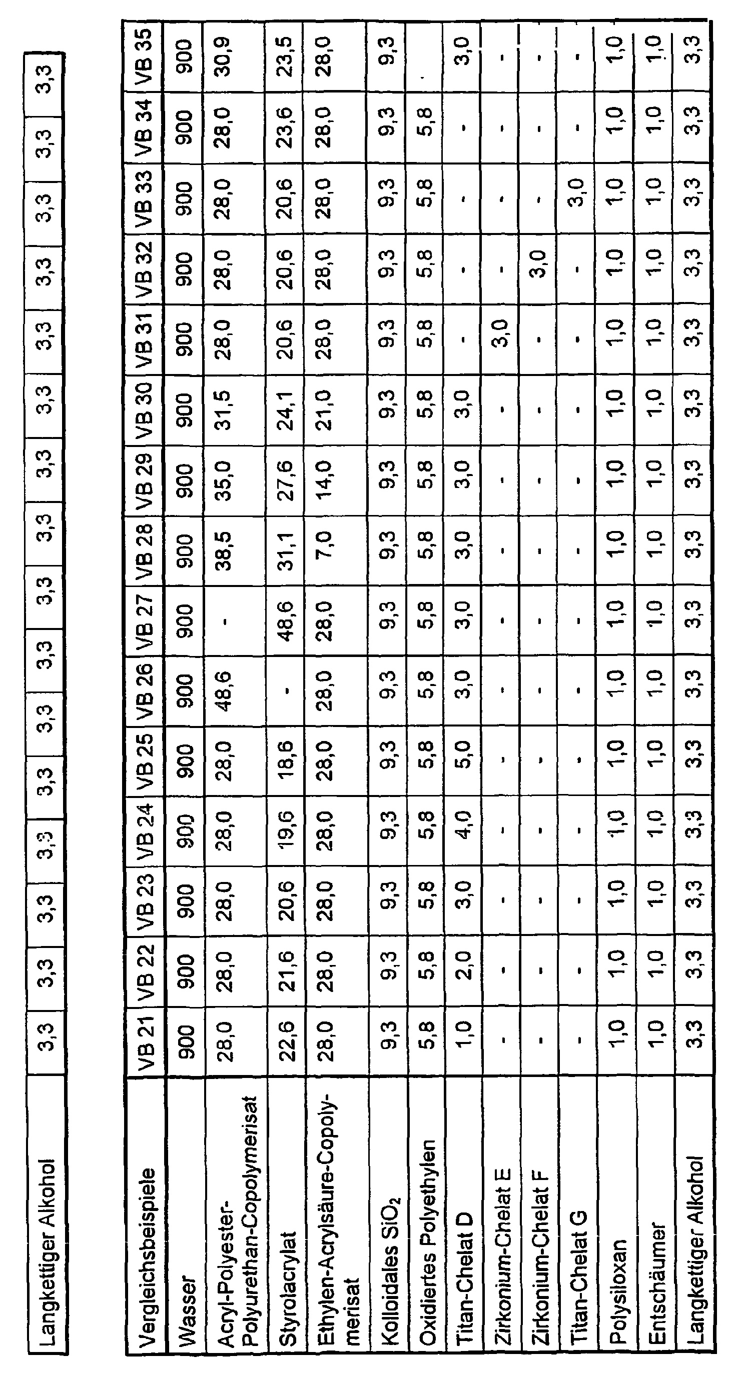

### Ergebnisse der Prüfungen auf feuerverzinkten Blechen bzw. auf Galvalume^{®}-Stahlblechen:

Die Trockenschichtauflage der getrockneten, verfilmten und gehärteten Polymer-haltigen Beschichtungen auf feuerverzinkten Blechen (HDG) ergab bei allen Versuchen - außer bei Vergleichsbeispiel 4 - jeweils Werte im Bereich von 950 bis 1050 mg/m² bzw. von 1900 bis 2100 mg/m² für die nahezu 1 bzw. nahezu 2 µm dicken Filme. Die getrockneten Filme wiesen eine Schichtdicke im Bereich von 0,8 bis 1 µm bzw. von 1,7 bis 2 µm auf. Alle Beschichtungen waren durchsichtig, farblos und gleichmäßig. Sie zeigten einen leichten Seidenglanz, so dass der optische Charakter der metallischen Oberfläche praktisch unverändert erkennbar blieb.

Zur Beurteilung der Umformbarkeit des Films der applizierten und getrockneten Behandlungsflüssigkeit auf der Galvalume^{®}-Substratoberfläche wurde der Pin-on-disc Test eingesetzt. Es wurde Galvalume^{®} eingesetzt, weil diese Beschichtung auf Stahlblech aufgrund ihres hohen Aluminiumgehalts schwieriger umzuformen ist als die übrigen hier genannten Zink-haltigen Legierungen. Diese Labor-Testmethode gestattet die Durchführung der Untersuchungen unter reproduzierbaren Bedingungen, die in sehr engen Grenzen eingehalten werden können. Die ermittelten Ergebnisse sind dadurch optimal untereinander vergleichbar.

### Testmethode beim Pin-on-disc Test:

Eine Stahlkugel mit einem Durchmesser von 7,5 mm zirkuliert kreisförmig auf der mit der wässerigen organischen Zusammensetzung behandelten Stahloberfläche unter einem Druck von 20 N mit einer Geschwindigkeit von 10 mm/s bei einer Raumtemperatur von 20 - 22 °C und einer relativen Luftfeuchtigkeit von 35 bis 40 %. Während der Messung wird der Reibungskoeffizient, der durch die Bewegung der Stahlkugel auf der organischen Beschichtung unter den beschriebenen Bedingungen entsteht, gemessen und mit Hilfe eines Rechners aufgezeichnet.

Gewünscht ist ein organischer Film hergestellt mit der wässerigen Behandlungsflüssigkeit, der nach der Trocknung und Verfilmung
1. einen möglichst niedrigen Reibungskoeffizienten zeigt, wobei
2. der Reibungskoeffizient während einer möglichst langen Umformzeit weitgehend konstant bleiben soll und und trotz der Reibung und Aufrauhung der Oberfläche der organischen Beschichtung mit der Kugel nicht stärker ansteigen soll - beim Pin-on-disc Test gemessen durch die Anzahl der Runden, die die Kugel zurücklegen kann, bis ein Reibungskoeffizient von 0,4 gemessen wird.

**Tabelle 3: Testergebnisse der unlackierten, organisch behandelten feuerverzinkten Stahlbleche bezüglich Korrosionssschutz, Reibung und Umformbarkeit, bei B 37 zum Vergleich Galvalume^{®}-Stahlbleche**

| Beispiele | Trockenschichtauflage 1 g/m²: Salzsprühtest ASTM B 117-73 Flächenkorrosion in % nach | | | Trockenschichtauflage 2 g/m²: Salzsprühtest ASTM B 117-73 Flächenkorrosion in % nach | | | Pin-On-Disc Test: Ausgangsreibungskoeffizient | Pin-On-Disc Test: Anzahl der Kreiselbewegungen, bis der Reibungskoeffizient von 0,40 überschritten wird |
|---|---|---|---|---|---|---|---|---|
| | 120 h | 240 h | 360 h | 120 h | 240 h | 360 h | | |
| B 21 | 5 | 15 | 30 | 0 | 0 | 0 | 0,16 | 140 |
| B 22 | <2 | 10 | 15 | 0 | 0 | 0 | 0,16 | 140 |
| B 23 | 0 | 0 | <2 | 0 | 0 | 0 | 0,16 | 140 |
| B 24 | 0 | 0 | <2 | 0 | 0 | 0 | 0,16 | 140 |
| B 25 | 0 | 0 | <2 | 0 | 0 | 0 | 0,16 | 140 |
| B 26 | 0 | 0 | <2 | 0 | 0 | 0 | 0,16 | 140 |
| B 27 | 0 | 0 | <2 | 0 | 0 | 0 | 0,16 | 140 |
| B 28 | 0 | 0 | <2 | 0 | 0 | 0 | 0,16 | 10 |
| B 29 | 0 | 0 | <2 | 0 | 0 | 0 | 0,16 | 50 |
| B 30 | 0 | 0 | <2 | 0 | 0 | 0 | 0,16 | 120 |
| B 31 | 0 | 0 | <2 | 0 | 0 | 0 | 0,16 | 140 |
| B 32 | 0 | 0 | <2 | 0 | 0 | 0 | 0,16 | 140 |
| B 33 | 0 | 0 | <2 | 0 | 0 | 0 | 0,16 | 140 |
| B 34 | 0 | 0 | <2 | 0 | 0 | 0 | 0,16 | 140 |
| B 35 | 0 | 0 | <2 | 0 | 0 | 0 | 0,16 | 140 |
| B 36 | 0 | 0 | <2 | 0 | 0 | 0 | 0,16 | 140 |
| B 37 | 0 | 0 | 0* | 0 | 0 | 0 | 0,16 | 140 |

| Vergleichsbeispiele | Trockenschichtauflage 1 g/m²: Salzsprühtest ASTM B 117-73 Flächenkorrosion in % nach | | | Trockenschichtauflage 2 g/m²: Salzsprühtest ASTM B 117-73 Flächenkorrosion in % nach | | | Pin-On-Disc Test: Ausgangsreibungskoeffizient | Pin-On-Disc Test: Anzahl der Kreiselbewegungen, bis der Reibungskoeffizient von 0,40 überschritten wird |
|---|---|---|---|---|---|---|---|---|
| | 120 h | 240 h | 360 h | 120 h | 240 h | 360 h | | |
| VB 21 | 80 | 100 | 100 | 10 | 20 | 30 | 0,16 | 140 |
| VB 22 | 80 | 100 | 100 | 5 | 10 | 20 | 0,16 | 140 |
| VB 23 | 20 | 40 | 60 | 0 | <2 | 5 | 0,16 | 140 |
| VB 24 | 20 | 40 | 60 | 0 | <2 | 5 | 0,16 | 140 |
| VB 25 | 20 | 40 | 60 | 0 | <2 | 5 | 0,16 | 140 |
| VB 26 | 20 | 40 | 60 | 0 | <2 | 5 | 0,16 | 140 |
| VB 27 | 20 | 40 | 60 | 0 | <2 | 5 | 0,16 | 140 |
| VB 28 | 80 | 100 | 100 | 10 | 20 | 40 | 0,16 | 140 |
| VB 29 | 20 | 40 | 60 | 5 | 10 | 20 | 0,16 | 140 |
| VB 30 | 20 | 40 | 60 | 0 | 5 | 10 | 0,16 | 10 |
| VB 31 | 20 | 40 | 60 | 0 | <2 | 5 | 0,16 | 50 |
| VB 32 | 20 | 40 | 60 | 0 | <2 | 5 | 0,16 | 120 |
| VB 33 | 20 | 40 | 60 | 0 | <2 | 5 | 0,16 | 140 |
| VB 34 | 100 | 100 | 100 | 100 | 100 | 100 | 0,16 | 140 |
| VB 35 | 20 | 40 | 60 | 0 | <2 | 5 | >0,8 | nicht anwendbar |

Bei B 37 sind anstelle der feuerverzinkten Stahlbleche zum Vergleich Galvalume^{®}-Stahlbleche verwendet worden, die wie zu B 23 beschrieben beschichtet worden waren. Beim Salzsprühtest ergab sich erst bei 720 h Prüfzeit eine geringe Punktkorrosion, die < 2 Flächenprozent ausmachte.

Die Kombination von Chelat und Silan ergab eine sehr deutliche Verbesserung des Korrosionsschutzes, wie aus dem Vergleich der Beispiele B 23 und B 37 im Vergleich erkennbar ist, so dass bei den erfindungsgemäßen, organisches Polymer enthaltenden wässerigen Zusammensetzungen der organische Korrosionsinhibitor außer bei Behandlung von unbeschichtetem Stahl weggelassen werden konnte, ohne eine Einbuß an Korrosionsbeständigkeit zu erleiden. Außerdem zeigte sich beim Pin-On-Disc Test überraschenderweise, dass eine Kombination von oxidiertem Polymethylen und einem Ethylen-Acrylsäure-Copolymerisat besonders vorteilhaft ist, wenn der Copolymerisatanteil nicht zu gering ist, um eine dauerhafte Erniedrigung des Reibungskoeffizienten während eines lange andauernden Umformprozesses zu gewährleisten. Die Versuchsergebnisse zeigten, dass schwierigste Umformprozesse zur Herstellung von Elementen extremer Geometrie sogar ohne Metallabrieb von der Substratoberfläche durchführbar sind, was die Herstellung von Formteilen mit ästhetisch schönen Oberflächen durch Umformprozesse nach der organischen Beschichtung gestattet.

Darüber hinaus wurden weitere Tests zur Beurteilung der Lackhaftung und Korrosionsbeständigkeit von mit der wässerigen Zusammensetzung organisch vorbehandelten und anschließend mit Weißlack beschichteten Blechen ausgeführt:
Ein großer Teil der mit den Behandlungsflüssigkeiten behandelten Substratoberflächen auf feuerverzinkten Stahlblechen wurde mit Lacksystemen überlackiert, die in der Allgemeinindustrie zur Herstellung von Gebrauchsgütern wie z. B. Waschmaschinen, Kühlschränken, Regalsystemen oder Büromöbeln aus Stahl im Einsatz sind. Als Lacksysteme wurden hierbei a) ein weißer thermisch vernetzender Acryllack auf Basis organischer Lösemittel und Acrylharzlösungen von 40 ± 5 µm Trockenschichtdicke nach 20 min bei 180°C Einbrenntemperatur bzw. b) ein weißer Pulverlack auf Basis Polyester-Epoxid-Mischpulver von 60 ± 5 µm Trockenschichtdicke nach 20 min bei 180°C Einbrenntemperatur verwendet, die für die Beschichtung von sogenannter Weißer Ware kommerziell eingesetzt werden. Bei VB 36 sind hierbei feuerverzinkte Stahlbleche eingesetzt worden, die ohne organische Vorbehandlung nur mit dem jeweiligen Lack beschichtet wurden. Bei B 37 sind anstelle der feuerverzinkten Stahlbleche zum Vergleich Galvalume^{®}-Stahlbleche verwendet worden, die wie zu B 23 beschrieben beschichtet worden waren.

**Tabellen 4/4a: Ergebnisse der Korrosionstests bzw. der Haftungstests bei Beanspruchung wechselweise bei 20 °C in normaler Luftfeuchtigkeit und bei 40 °C in 100 % Luftfeuchtigkeit nach Beschichtung mit dem Acryllack bzw. mit dem Pulverlack auf etwa 1 µm dicken Vorbehandlungsschichten**

| Beispiele/Vergleichs beispiele mit Acryllack | Trockenschichtauflage 1 g/m²: Salzsprühtest ASTM B 117-73 Unterwanderung in mm nach 360 h | | Schwitzwasser-Wechselklima nach DIN 50017 KFW 20 Cyclen | | | |
|---|---|---|---|---|---|---|
| | | | Gitterschnitt in Gt bei 1 mm Gitterabstand nach DIN EN ISO 2409 | | Korrosion: Unterwanderung in mm | |
| | Ritz | Schnittkante | vor KFW-Test | nach KFW-Test | am Ritz | an Schnittkante |
| B 23 | 10 | 8 | Gt 1 | Gt 1 | 0 | 0 |
| B 29 | 9 | 8 | Gt 1 | Gt 1 | 0 | 0 |
| B 30 | 11 | 8 | Gt 1 | Gt 1 | 0 | 0 |
| B 31 | 12 | 7 | Gt 1 | Gt 1 | 0 | 0 |
| B 32 | 10 | 9 | Gt 1 | Gt 1 | 0 | 0 |
| B 33 | 9 | 8 | Gt 1 | Gt1 | 0 | 0 |
| B 34 | 12 | 8 | Gt 1 | Gt 1 | 0 | 0 |
| B 35 | 12 | 7 | Gt 1 | Gt 1 | 0 | 0 |
| B 36 | 11 | 8 | Gt 1 | Gt 1 | 0 | 0 |
| B 327 | 8 | 5 | Gt 1 | Gt 1 | 0 | 0 |
| VB 24 | 15 | 12 | Gt 1 | Gt 2 | 1 | 1 |
| VB 31 | 17 | 12 | Gt 1 | Gt 3 | 2 | 1 |
| VB 32 | 16 | 13 | Gt 1 | Gt 2 | 1 | 2 |
| VB 33 | 18 | 12 | Gt 1 | Gt 3 | 2 | 1 |
| VB 34 | 30 | 20 | Gt 1 | Gt 2 | 3 | 5 |
| VB 35 | 16 | 11 | Gt 1 | Gt 3 | 2 | 4 |
| VB 36 | großflächig abgelöst | großflächig abgelöst | Gt 1 | Gt 5 | 10 Blasenbildung | 8 Blasenbildung |

| Beispiele/ Vergleichsbeispiele mit Pulverlack | Trockenschichtauflage 1 g/m²: Salzsprühtest ASTM B 117-73 Unterwanderung in mm nach 360 h | | Schwitzwasser-Wechselklima nach DIN 50017 KFW 20 Cyclen | | | |
|---|---|---|---|---|---|---|
| | | | Gitterschnitt in Gt bei 2 mm Gitterabstand nach DIN EN ISO 2409 | | Korrosion: Unterwanderung in mm | |
| | Ritz | Schnittkante | vor KFW-Test | nach KFW-Test | am Ritz | an Schnittkante |
| B 23 | 1 | 1 | Gt 0 | Gt 0 | 0 | 0 |
| B 29 | 1 | 2 | Gt 0 | Gt 0 | 0 | 0 |
| B 30 | 1 | 1 | Gt 0 | Gt 0 | 0 | 0 |
| B 31 | 2 | 1 | Gt 0 | Gt 0 | 0 | 0 |
| B 32 | 2 | 2 | Gt 0 | Gt 0 | 0 | 0 |
| B 33 | 1 | 1 | Gt 0 | Gt 0 | 0 | 0 |
| B 34 | 1 | 1 | Gt 0 | Gt 0 | 0 | 0 |
| B 35 | 2 | 2 | Gt 0 | Gt 0 | 0 | 0 |
| B 36 | 1 | 2 | Gt 0 | Gt 0 | 0 | 0 |
| B 37 | 0 | 0 | Gt 0 | Gt 0 | 0 | 0 |
| VB 24 | 5 | 4 | Gt 0 | Gt 2 | 0 | 1 |
| VB 31 | 4 | 4 | Gt 0 | Gt 1 | 0 | 1 |
| VB 32 | 3 | 3 | Gt 0 | Gt 2 | 0 | 0 |
| VB 33 | 4 | 4 | Gt 0 | Gt 2 | 1 | 0 |
| VB 34 | 3 | 3 | Gt 0 | Gt 2 | 0 | 1 |
| VB 35 | 3 | 4 | Gt 0 | Gt 2 | 0 | 0 |
| VB 36 | großflächig abgelöst | großflächig abgelöst | Gt 2 | Gt 5 | 5 | 5 |

Die Ergebnisse der Salzsprühtests an überlackierten Blechen zeigen, dass die Acryllackbeschichtung erwartungsgemäß eine nicht ganz so gute Korrosionsbeständigkeit gewährleisten wie die Pulverlackbeschichtung. Wieviel jedoch die Silan-Chelat-Vorbehandlung ausmacht, ist im Vergleich der erfindungsgemäßen Beispiele zu Vergleichsbeispiel 36 erkennbar. Die Korrosionsdaten des Salzsprühtests können als sehr gut bis exzellent eingestuft werden.

Da kein Unterschied der Lackhaftungsergebnisse vor und nach dem Schwitzwasser-Wechseltest auftritt, ist die Benotung Gt 1 primär auf den Lack und nicht auf die Vorbehandlung zurückzuführen, wobei Gt 1 als gut anzusehen ist. Die Ergebnisse der Schwitzwasser-Wechselklima-Tests zeigen sehr gute bis exzellente Lackhaftungs-Werte, insbesondere wenn die Lackqualität, die besonders korrosionsempfindliche metallische Oberfläche und die mit etwa 1 µm außerordentlich dünne organische Vorbehandlungsschicht berücksichtigt werden. Der Schwitzwasser-Wechselklima-Test bezüglich Unterwanderung ist für diese Art der Korrosionsprüfung bei so guten Systemen zu unempfindlich.

Alle Ergebnisse der Tabellen 4/4a zeigen im Vergleich zu Tests an den besten Chromat-haltigen organischen Beschichtungen gleicher Schichtdicke, die Polymere enthalten von an sich sehr hoher polymerer Qualität, dass die jetzt Chromat-freien organischen Beschichtungen bereits bei einer Schichtdicke von etwa 1 µm Schichtdicke im Korrosionsschutz und in der Lackhaftung durch die Bank den Chromat-haltigen gleichwertig sind. Damit ist sichergestellt, dass eine gleichwertiger Ersatz umweltunfreundlicher Materialien in der Serienfertigung problemlos möglich ist. Ein solches Ergebnis für organische Beschichtungen ist nach Kenntnis der Anmelderin bisher noch nirgendwo erzielt worden!

Außerdem ist zu berücksichtigen, dass die erfindungsgemäßen organischen Filme eine sehr hohe Witterungsbeständigkeit aufweisen und anders als viele andere organische Beschichtungen auf Dauer im Außenbereich und unter UV-Bestrahlung eingesetzt werden können. Viele thermisch und radikalisch vernetzte Lacksysteme wie auf Basis Epoxidharzen sind für den Außenbereich nur begrenzt geeignet.

## Patentansprüche

1. Verfahren zur Beschichtung einer metallischen Oberfläche mit einer wasserigen Zusammensetzung, die weitgehend oder gänzlich von Chrom(VI)-Verbindungen frei sein kann, zur Vorbehandlung vor einer weiteren Beschichtung oder zur Behandlung, **dadurch gekennzeichnet, dass** die Zusammensetzung neben Wasser
a) mindestens ein hydrollsierbares oder/und zumindest teilweise hydrolysiertes Silan von jeweils mindestens einem Acyloxysilan, einem Alkoxysilan, einem Silan mit mindestens einer Aminogruppe, einem Silan mit mindestens einer Bernsteinsäuregruppe oder/und Bernsteinsäureanhydridgruppe, einem Bis-Silyl-Silan, einem Silan mit mindestens einer Epoxygruppe, einem (Meth)acrylato-Silan, einem Multi-Silyl-Silan, einem Ureidosilan, einem Vinylsilan oder/und mindestens einem Silanol oder/und mindestens einem Siloxan von chemisch entsprechender Zusammensetzung wie die zuvor genannten Silane,
b) mindestens ein Metallchelat ausgewählt aus Chelatkomplexen auf Basis von Acetylacetonaten, Acetessigestern, Acetonaten, Alkylendiaminen, Aminen, Lactaten, Carbonsäuren, Citraten oder/und Glykolen,
c) mindestens einen organischen Filmbildner, der mindestens ein wasserlösliches oder wasserdispergiertes organisches Copolymer mit einer Säurezahl im Bereich von 3 bis 250 aufweist, wobei der Gehalt an organischem Filmbildner bezogen auf den Feststoffgehalt der Zusammensetzung bei > 45 Gew.-% liegt, und
d) mindestens einen langkettigen Alkohol mit 4 bis 20 C-Atomen ausgewählt aus der Gruppe von Diolen wie Blockoopolymeren aus Ethylen- und Propylenoxid, Butandiolen, Propandiolen oder/und Decandiolen, Butylglykolen, Butyldiglykolen, Esteralkoholen, Ethylenglykolen, Ethylenglykolethern, Glykolethern wie Di- und Triethylenglykolen mit ihren Mono- und Diethern und Dimethylethern, Polyethern, Polyethylenglykolen, Polyethylenglykolethern, Polyglykolen, Polypropylenglykolen, Propylenglykolen, Propylenglykolethern, Polypropylenglykolethern, Glykolethern, Trimethylpentandioldiisobutyraten und deren Derivaten als Filmbildungshilfsmittel enthält,
wobei das Mengenverhältnis von a) zu b) jeweils einschließlich der hieraus entstehenden Reaktionsprodukte im Bereich von 0,3 : 1 bis 7 : 1 liegt,
wobei die saubere, gebeizte, gereinigte oder/und vorbehandelte metallische Oberfläche mit der wässerigen Zusammensetzung in Kontakt gebracht und ein Film auf der metallischen Oberfläche ausgebildet wird, der anschließend getrocknet wird, teilweise oder gänzlich durch Verfilmen verdichtet wird und ggf. zusätzlich ausgehärtet wird,
wobei der getrocknete und ggf. auch ausgehärtete Film eine Schichtdicke im Bereich von 0,01 bis 10 µm aufweist.

2. Verfahren nach Anspruch 1, **dadurch gekennzeichnet, dass** in der wässerigen Zusammensetzung mindestens eine Komponente e) ausgewählt aus der Gruppe von
e₁) mindestens einer anorganischen Verbindung in Partikelform mit einem mittleren Partikeldurchmesser gemessen an einem Rasterelektronenmikroskop im Bereich von 0,005 bis zu 0,3 µm Durchmesser,
e₂) mindestens einem Gleitmittel,
e₃) mindestens einem organischen Korrosionsinhibitor,
e₄) mindestens ein Korrosionsschutzpigment,
e₅) mindestens einem Mittel zur Neutralisation oder/und zur sterischen Stabilisation der Kunstharze,
e₆) mindestens ein organisches Lösemittel.
e₇) mindestens ein Siloxan und
e₈) mindestens eine Chrom(VI)-Verbindung enthalten ist.

3. Verfahren nach Anspruch 1 oder 2, **dadurch gekennzeichnet, dass** der organische Filmbildner ein Kunstharzgemisch aus mindestens einem Polymer oder/und mindestens einem Copolymerisat ist, das einen Gehalt an Kunstharz auf Basis Acrylat, Epoxid, Ethylen, Hamstoff-Formaldehyd, Phenol, Polyester, Polyurethan, Styrol, Styrolbutadien oder/und Vinyl enthält.

4. Verfahren nach einem der vorstehenden Ansprüche, **dadurch gekennzeichnet, dass** der organische Filmbildner als Kunstharz auch einen Gehalt an organischem Polymer, Copolymer oder/und deren Mischungen auf der Basis von Polyethylenimin, Polyvinylalkohol, Polyvinylphenol, Polyvinylpyrrolidon oder/und Polyasparaginsäure, insbesondere Copolymere mit einer Phosphor enthaltenden Vinylverbindung, enthält.

5. Verfahren nach einem der vorstehenden Ansprüche, **dadurch gekennzeichnet, dass** der organische Filmbildner einen Anteil an mindestens einem Copolymerisat mit einer Säurezahl im Bereich von 3 bis 80 enthält, insbesondere zu mindestens 50 Gew.-% der zugesetzten Kunstharze.

6. Verfahren nach einem der vorstehenden Ansprüche, **dadurch gekennzeichnet, dass** der organische Filmbildner mindestens eine Komponente auf der Basis von
Acryl-Polyester-Polyurethan-Copolymerisat,
Acryl-Polyester-Polyurethan-Styrol-Copolymerisat,
Acrylsäureester,
Acrylsäureester-Methacrylsäureester, ggf. mit freien Säuren oder/und Acrylnitril,
Ethylen-Acryl-Gemisch,
Ethylen-Acryl-Copolymerisat,
Ethylen-Acryl-Polyester-Copolymerisat,
Ethylen-Acryl-Polyurethan-Copolymerisat,
Ethylen-Acryl-Polyester-Polyurethan-Copolymerisat,
Ethylen-Acryl-Polyester-Polyurethan-Styrol-Copolymerisat,
Ethylen-Acryl-Styrol-Copolymerisat,
Polyesterharzen mit freien Carboxylgruppen kombiniert mit Melamin-Formaldehydharzen,
einem Kunstharzgemisch oder/und Copolymerisat auf der Basis von Acrylat und Styrol, ,
einem Kunstharzgemisch oder/und Copolymerisat auf der Basis von Styrolbutadien,
einem Kunstharzgemisch oder/und Copolymerisat von Acrylat und Epoxid,
auf der Basis von einem Acryl-modifizierten Carboxylgruppenhaltigen Polyester zusammen mit Melamin-Formaldehyd und Ethylen-Acryl-Copolymerisat,
Polycarbonat-Polyurethan,
Polyester-Polyurethan,
Styrol,
Styrol-Vinylacetat,
Vinylacetat,
Vinylester oder/und
Vinylether enthält.

7. Verfahren nach einem der vorstehenden Ansprüche, **dadurch gekennzeichnet, dass** mindestens 30 Gew.-% des zugesetzten organischen Filmbildners aus verfilmbaren thermoplastischen Harzen besteht.

8. Verfahren nach einem der vorstehenden Ansprüche, **dadurch gekennzeichnet, dass** die Molekulargewichte der zugesetzten Kunstharze im Bereich von mindestens 1000 u liegen.

9. Verfahren nach einem der vorstehenden Ansprüche, **dadurch gekennzeichnet, dass** die zugesetzten organischen Filmbildners aus mindestens 40 Gew.-% hochmolekularen Polymeren bestehen.

10. Verfahren nach einem der vorstehenden Ansprüche, **dadurch gekennzeichnet, dass** die Säuregruppen der Kunstharze mit Ammoniak, mit Aminen wie z.B. Morpholin, Dimethylethanolamin, Diethylethanolamin oder Triethanolamin oder/und mit Alkalimetallverbindungen wie z.B. Natriumhydroxid stabilisiert sind.

11. Verfahren nach einem der vorstehenden Ansprüche, **dadurch gekennzeichnet, dass** die wässerige Zusammensetzung 0,1 bis 980 g/L des organischen Filmbildners enthält.

12. Verfahren nach einem der vorstehenden Ansprüche, **dadurch gekennzeichnet, dass** mindestens ein Silan enthalten ist ausgewählt aus der Gruppe von
Glycidoxyalkyltrialkoxysilan,
Methacryloxyalkyltrialkoxysilan,
(Trialkoxysilyl)alkylbemsteinsäuresilan,
Aminoalkylamlnoalkytalkyldialkoxysilan,
(Epoxycycloalkyl)alky(trialkoxysilan,
Bis-(trialkoxysilylalkyl)amin,
Bis-(trialkoxysilyl)ethan,
(Epoxyalkyl)trialkoxysilan,
Aminoalkyltrialkoxysilan,
Ureidoalkyltrialkoxysilan,
N-(trialkoxysilylalkyl)alkylendiamin,
N-(aminoalkyl)aminoalkyltrialkoxysilan,
N-(trialkoxysilylalkyl)dialkylentriamin,
Poly(aminoalkyl)alkyldialkoxysilan,
Tris(trialkoxysilyl)alkylisocyanurat,
Ureldoalkyltrialkoxysilan und
Acetoxysilan.

13. Verfahren nach einem der vorstehenden Ansprüche, **dadurch gekennzeichnet, dass** mindestens ein Silan enthalten ist ausgewählt aus der Gruppe von
3-Glycidoxypropyltriethoxysilan,
3-Glycidoxypropyltrimethoxysilan,
3-Methacryloxypropyltriethoxysilan,
3-Methacryloxypropyltrimethoxysilan,
3-(Triethoxysilyl)propylbernsteinsäuresilan,
Aminoethylaminopropylmethyldiethoxysilan,
Aminoethylaminopropylmethyldimethoxysilan,
Beta-(3,4-Epoxycyclohexyl)ethyltriethoxysilan,
Beta-(3,4-Epoxycydohexyl)ethyltrimethoxysilan,
Beta-(3,4-Epoxycyclohexyl)methyltriethoxysilan,
Beta-(3,4-Epoxycyclohexyl)methyltrimethoxysilan,
Gamma-(3,4-Epoxycyclohexyl)propyltriethoxysilan,
Gamma- (3,4-Epoxycyclohexyl)propyltrimethoxysilan,
Bis(triethoxysilylpropyl)amin,
Bis(trimethoxysilylpropyl)amin,
(3,4-Epoxybutyl)triethoxysilan,
(3,4-Epoxybutyl)trimethoxysilan,
Gamma-Aminopropyltriethoxysilan,
Gamma-Aminopropyltrimethoxysilan,
Gamma-Ureidopropyltrialkoxysilan,
N-(3-(trimethoxysilyl)propyl)ethylendiamin,
N-beta-(aminoethyl)-gamma-aminopropyltriethoxysilan,
N-beta-(aminoethyl)-gamma-aminopropyltrimethoxysilan,
N-(gamma-triethoxysilylpropyl)diethylentriamin,
N-(gamma-trimethoxysilylpropyl)diethylentriamin,
N-(gamma-triethoxysilylpropyl)dimethylentriamin,
N-(gamma-trimethoxysilylpropyl)dimethylentriamin,
Poly(aminoalkyl)ethyldialkoxysilan,
Poly(aminoalkyl)methyldialkoxysilan,
Tris(3-(triethoxysilyl)propyl)isocyanurat
Tris(3-(trimethoxysilyl)propyl)isocyanurat und
Vinyltriacetoxysilan.

14. Verfahren nach einem der vorstehenden Ansprüche, **dadurch gekennzeichnet, dass** der Gehalt an mindestens einem Silan in der wässerigen Zusammensetzung einschließlich der hieraus entstehenden Reaktionsprodukte 0.1 bis 50 g/L beträgt.

15. Verfahren nach einem der vorstehenden Ansprüche, **dadurch gekennzeichnet, dass** der Gehalt an mindestens einem Chelat in der wässerigen Zusammensetzung einschließlich der ggf. hieraus entstehenden Reaktionsprodukte 0,1 bis 80 g/L beträgt.

16. Verfahren nach einem der vorstehenden Ansprüche, **dadurch gekennzeichnet, dass** der mindestens eine Metallchelat ausgewählt ist auf Basis von
Acetylacetonat,
Alkalilactat,
Alkanolamin,
Alkylacetoacetat,
Akylendiamintetraacetat,
Ammoniumlactat,
Citrat,
Dialkylcitrat,
Dialkylestercitrat.
Dialkylentriamin,
Dilsoalkoxybisalkylacetessigester,
Diisopropoxybisalkylacetessigester,
Di-n-alkoxy-bisalkylacetessigester,
Hydroxyalkylendiamintriacetat,
Trialkanolamin oder/und
Trialkylentetramin.

17. Verfahren nach einem der vorstehenden Ansprüche, **dadurch gekennzeichnet, dass** als anorganische Verbindung in Partikelform ein feinverteiltes Pulver, eine Dispersion oder eine Suspension wie z.B. ein Carbonat, Oxid, Silicat oder Sulfat zugesetzt wird, insbesondere kolloidale oder/und amorphe Partikel.

18. Verfahren nach einem der vorstehenden Ansprüche, **dadurch gekennzeichnet, dass** als anorganische Verbindung in Partikelform Partikel auf Basis von mindestens einer Verbindung des Aluminiums, Bariums, Cers, Kalziums, Lanthans, Siliciums, Titans, Yttriums, Zinks oder/und Zirkoniums zugesetzt werden.

19. Verfahren nach einem der vorstehenden Ansprüche, **dadurch gekennzeichnet, dass** als anorganische Verbindung in Partikelform Partikel auf Basis von Aluminiumoxid, Bariumsulfat, Cerdioxid, Siliciumdioxid, Silicat, Titanoxid, Yttriumoxid, Zinkoxid oder/und Zirkonoxid zugesetzt werden.

20. Verfahren nach einem der vorstehenden Ansprüche, **dadurch gekennzeichnet, dass** die wässerige Zusammensetzung 0,1 bis 500 g/L der mindestens einen anorganischen Verbindung in Partikelform enthält.

21. Verfahren nach einem der vorstehenden Ansprüche, **dadurch gekennzeichnet, dass** die wässerige Zusammensetzung mindestens einen organischen Korrosionsinhibitor enthält, insbesondere auf Basis von Amin(en), vorzugsweise mindestens ein Alkanolamin - vorzugsweise ein langkettiges Alkanolamin, mindestens ein TPA-Amin-Komplex wie Säureaddukt-4-oxo-4-p-tolyl-butyrat-4-Ethylmorpholin, mindestens ein Alkylaminoethanol, mindestens ein Zinksalz von Aminocarboxylat, von 5-Nitro-Isophthalsäure oder von Cyansäure, mindestens ein polymeres A-minosalz mit Fettsäure, mindestens ein Metallsalz einer Sulfonsäure wie Dodecyl-Naphthalinsulfonsäure, mindestens ein Amino- und Übergangsmetallkomplex der Toluolpropionsäure, 2-Mercapto-Benzothiazolyl-Bernsteinsäure bzw. mindestens eines ihrer Ammoniumsalze, mindestens ein leitfähiges Polymer oder/und mindestens ein Thiol, wobei der Gehalt an organischen Kvrrosionsinhibitoren in der wässerigen Zusammensetzung vorzugsweise im Bereich von 0,01 bis 5 Gew.-% liegt.

22. Verfahren nach einem der vorstehenden Ansprüche, **dadurch gekennzeichnet, dass** die wässerige Zusammensetzung mindestens ein basisches Vernetzungsmittel auf Basis von Titan, Hafnium oder/und Zirkonium als Kation oder/und auf Basis von Carbonat oder Ammoniumcarbonat als Anion enthält, wobei der Gehalt an derartigen Vernetzungsmitteln in der wässerigen Zusammensetzung vorzugsweise im Bereich von 0,01 bis 3 Gew.-% liegt.

23. Verfahren nach einem der vorstehenden Ansprüche, **dadurch gekennzeichnet, dass** der wässerigen Zusammensetzung keine anorganischen Säuren oder/und organischen Carbonsäuren zugesetzt werden.

24. Verfahren nach einem der vorstehenden Ansprüche, **dadurch gekennzeichnet, dass** als Filmbildungshilfsmittel mindestens ein langkettiger Alkohol ausgewählt aus der Gruppe von Diolen wie Blockcopolymeren aus Ethylen- und Propylenoxid, Butandiolen, Propandiolen oder/und Decandiolen, Butylglykolen, Butyldiglykolen, Esteralkoholen, Ethylenglykolen, Ethylenglykolethern, Glykolethern wie Di- und Triethylenglykolen mit ihren Mono- und Diethern und Dimethylethern, Polyethern, Polyethylenglykolen, Polyethylenglykolethern, Polyglykolen, Polypropylenglykolen, Propylenglykolen, Propylenglykolethern, Polypropylenglykolethern, Glykolethern, Trimethylpentandioldiisobutyraten und deren Derivaten verwendet wird, wobei der Gehalt an langkettigen Alkoholen in der wässerigen Zusammensetzung im Bereich von 0,01 bis 10 Gew.-% liegt.

25. Verfahren nach einem der vorstehenden Ansprüche, **dadurch gekennzeichnet, dass** als Gleitmittel mindestens ein Wachs ausgewählt aus der Gruppe der Paraffine, Polyethylene und Polypropylene verwendet wird, insbesondere ein oxidiertes Wachs, wobei der Gehalt an Wachsen in der wässerigen Zusammensetzung vorzugsweise im Bereich von 0,01 bis 5 Gew.-% liegt.

26. Verfahren nach einem der vorstehenden Ansprüche, **dadurch gekennzeichnet, dass** als Gleitmittel mindestens ein Wachs zusammen mit einem Ethylen und Acrylsäure enthaltenden Polymerengemisch oder/und Copolymerisat eingesetzt wird.

27. Verfahren nach einem der vorstehenden Ansprüche, **dadurch gekennzeichnet, dass** die Beschichtung teilweise durch Trocknen und Verfilmen sowie teilweise durch aktinische Strahlung, kationische Polymerisation oder/und thermisches Vernetzen zum Aushärten gebracht wird.

28. Verfahren nach einem der vorstehenden Ansprüche, **dadurch gekennzeichnet, dass** die wässerige Zusammensetzung mindestens ein Additiv enthält, insbesondere mindestens eines ausgewählt aus der Gruppe von mindestens einem Biozid, mindestens einem Entschäumer oder/und mindestens einem Netzmittel.

29. Verfahren nach einem der vorstehenden Ansprüche, **dadurch gekennzeichnet, dass** die wässerige Zusammensetzung bei einer Temperatur im Bereich von 5 bis 50 °C auf die metallische Oberfläche aufgebracht wird.

30. Verfahren nach einem der vorstehenden Ansprüche, **dadurch gekennzeichnet, dass** die metallische Oberfläche bei der Applikation der Beschichtung auf Temperaturen Im Bereich von 5 bis 60 °C gehalten wird.

31. Verfahren nach einem der vorstehenden Ansprüche, **dadurch gekennzeichnet, dass** die beschichtete metallische Oberfläche bei einer Temperatur im Bereich von 20 bis 400 °C Umlufttemperatur getrocknet wird.

32. Verfahren nach einem der vorstehenden Ansprüche, **dadurch gekennzeichnet, dass** die beschichteten Bänder zu einem Coil aufgewickelt werden, ggf. nach einer Abkühlung auf eine Temperatur im Bereich von 40 bis 70 °C.

33. Verfahren nach einem der vorstehenden Ansprüche, **dadurch gekennzeichnet, dass** die wässerige Zusammensetzung durch Aufwalzen, Fluten, Aufrakeln, Spritzen, Sprühen, Streichen oder Tauchen und ggf. durch nachfolgendes Abquetschen mit einer Rolle aufgetragen wird.

34. Verfahren nach einem der vorstehenden Ansprüche, **dadurch gekennzeichnet, dass** der getrocknete und ggf. auch ausgehärtete Film eine Pendelhärte von 30 bis 190 s aufweist, gemessen mit einem Pendelhärteprüfer nach König nach DIN 53157.

35. Verfahren nach einem der vorstehenden Ansprüche, **dadurch gekennzeichnet, dass** der getrocknete und ggf. auch ausgehärtete Film eine derartige Flexibilität aufweist, dass beim Biegen über einen konischen Dorn bei einem Dornbiegetest weitestgehend nach DIN ISO 6860 für einen Dorn von 3.2 mm bis 38 mm Durchmesser - jedoch ohne die Testfläche anzureißen - keine Risse länger als 2 mm entstehen, die bei der anschließenden Benetzung mit Kupfersulfat durch Farbumschlag infolge Kupferabscheidung auf der aufgerissenen metallischen Oberfläche erkennbarwerden.

36. Verfahren nach einem der vorstehenden Ansprüche, **dadurch gekennzeichnet, dass** auf den getrockneten und ggf. auch ausgehärteten Film jeweils mindestens eine Beschichtung aus Druckfarbe, Folie, Lack, lackähnlichem Material, Pulverlack, Klebstoff oder/und Klebstoffträger aufgebracht wird.

37. Verfahren nach einem der vorstehenden Ansprüche, **dadurch gekennzeichnet, dass** die beschichteten Metallteile, Bänder oder Bandabschnitte umgeformt, lackiert, mit Polymeren wie z.B. PVC beschichtet, bedruckt, beklebt, heißgelötet, geschweißt oder/und durch Clinchen oder andere Fügetechniken miteinander oder mit anderen Elementen verbunden werden.

38. Wässerige Zusammensetzung zur Vorbehandlung einer metallischen Oberfläche vor einer weiteren Beschichtung oder zur Behandlung jener Oberfläche, **dadurch gekennzeichnet, dass** die Zusammensetzung neben Wasser
a) mindestens ein hydrolisierbares oder/und zumindest teilweise hydrolysiertes Silan von jeweils mindestens einem Acyloxysilan, einem Alkoxysilan, einem Silan mit mindestens einer Aminogruppe, einem Silan mit mindestens einer Bernsteinsauregruppe oder/und Bernsteinsäureanhydridgruppe, einem Bis-Silyl-Silan, einem Silan mit mindestens einer Epoxygruppe, einem (Meth)acrylato-Silan, einem Multi-Silyl-Silan, einem Ureidosilan, einem Vinylsilan oder/und mindestens einem Silanol oder/und mindestens einem Siloxan von chemisch entsprechender Zusammensetzung wie die zuvor genannten Silane,
b) mindestens ein Metallchelat ausgewählt aus Chelatkomplexen auf Basis von Acetylacetonaten, Acetessigestern, Acetonaten, Alkylendiaminen, Aminen, Lactaten, Carbonsäuren, Citraten oder/und Glykolen,
c) mindestens einen organischen Filmbildner, der mindestens ein wasserlösliches oder wasserdispergiertes organisches Copolymer mit einer Säurezahl im Bereich von 3 bis 250 aufweist und wobei der Gehalt an organischem Filmbildner bezogen auf den Feststoffgehalt der Zusammensetzung bei > 45 Gew.-% liegt, und
d) mindestens einen langkettigen Alkohol mit 4 bis 20 C-Atomen ausgewählt aus der Gruppe von Diolen wie Blockcopolymeren aus Ethylen- und Propylenoxid, Butandiolen, Propandiolen oder/und Decandiolen, Butylglykolen, Butyldiglykolen, Esteralkoholen, Ethylenglykolen, Ethylenglykolethem, Glykolethern wie Di- und Triethylenglykolen mit ihren Mono- und Diethern und Dimethylethern, Polyethern, Polyethylenglykolen, Polyethylenglykolethern, Polyglykolen, Polypropylenglykolen, Propylenglykolen, Propylenglykolethern, Polypropylenglykolethern, Glykolethern, Trimethylpentandioldllsobutyraten und deren Derivaten als Filmbildungshilfsmittel enthält,
wobei das Mengenverhältnis von a) zu b) jeweils einschließlich der hieraus entstehenden Reaktionsprodukte im Bereich von 0,3 : 1 bis 7 : 1 liegt.

39. Verwendung der nach dem Verfahren gemäß mindestens einem der vorstehenden Ansprüche 1 bis 37 beschichteten Substrate als Draht, Band, Blech oder Teil für eine Drahtwicklung, ein Drahtgeflecht, ein Stahlband, ein Blech, eine Verkleidung, eine Abschirmung, eine Karosserie oder ein Teil einer Karosserie, ein Teil eines Fahrzeugs, Anhängers, Wohnmobils oder Flugkörpers, eine Abdeckung, ein Gehäuse, eine Lampe, eine Leuchte, ein Ampelelement, ein Möbelstück oder Möbelelement, ein Element eines Haushaltsgeräts, ein Gestell, ein Profil, ein Formteil komplizierter Geometrie, ein Leitplanken-, Heizkörper- oder Zaunelement, eine Stoßstange, ein Teil aus oder mit mindestens einem Rohr oder/und einem Profil, ein Fenster-, Tür- oder Fahrradrahmen oder ein Kleinteil wie eine Schraube, Mutter, Flansch, Feder oder ein Brillengestell.

## Claims

1. Process for coating a metallic surface with an aqueous composition, which can be largely or completely free from chromium(VI) compounds, for pretreatment before a further coating or for treatment, **characterized in that** the composition contains, in addition to water,
a) at least one hydrolysable or/and at least partly hydrolysed silane out of in each case at least one acyloxysilane, one alkoxysilane, one silane with at least one amino group, one silane with at least one succinic acid group or/and succinic acid anhydride group, one bis-silyl-silane, one silane with at least one epoxide group, one (meth)acrylato-silane, one multi-silyl-silane, one ureidosilane, one vinylsilane or/and at least one silanol or/and at least one siloxane of a composition which corresponds chemically to that of the abovementioned silanes,
b) at least one metal chelate chosen from chelate complexes based on acetylacetonates, acetoacetates, acetonates, alkylenediamines, amines, lactates, carboxylic acids, citrates or/and glycols,
c) at least one organic film-forming agent which has at least one water-soluble or water-dispersed organic copolymer with an acid number in the range from 3 to 250, wherein the content of organic film-forming agent, based on the solids content of the composition, is > 45 wt.%, and
d) at least one long-chain alcohol with 4 to 20 C-atoms chosen from the group consisting of diols, such as block copolymers of ethylene oxide and propylene oxide, butanediols, propanediols or/and decanediols, butyl glycols, butyl diglycols, ester-alcohols, ethylene glycols, ethylene glycol ethers, glycol ethers, such as di- and triethylene glycols with their mono- and diethers and dimethyl ethers, polyethers, polyethylene glycols, polyethylene glycol ethers, polyglycols, polypropylene glycols, propylene glycols, propylene glycol ethers, polypropylene glycol ethers, glycol ethers, trimethylpentanediol diisobutyrates and derivatives thereof, as a film-forming auxiliary,
wherein the amounts ratio of a) to b), in each case including the reaction products formed therefrom, is in the range from 0.3 : 1 to 7 : 1,
wherein the clean, pickled, cleaned or/and pretreated metallic surface is brought into contact with the aqueous composition and a film is formed on the metallic surface, which is then dried and partly or completely compacted by formation of a film and optionally is additionally cured,
wherein the dried and optionally also cured film has a layer thickness in the range from 0.01 to 10 µm.

2. Process according to claim 1, **characterized in that** the aqueous composition contains at least one component e) chosen from the group consisting of
e₁) at least one inorganic compound in particle form with an average particle diameter, measured on a scanning electron microscope, in the range from 0.005 to 0.3 µm diameter,
e2) at least one lubricant,
e3) at least one organic corrosion inhibitor,
e4) at least one anticorrosion pigment,
e5) at least one agent for neutralization or/and for steric stabilization of the synthetic resins,
e6) at least one organic solvent,
e7) at least one siloxane, and
e8) at least one chromium(VI) compound.

3. Process according to claim 1 or 2, **characterized in that** the organic film-forming agent is a synthetic resin mixture of at least one polymer or/and at least one copolymer which contains a content of synthetic resin based on acrylate, epoxide, ethylene, ureaformaldehyde, phenol, polyester, polyurethatae, styrene, styrene-butadiene or/and vinyl.

4. Process according to one of the preceding claims, **characterized in that** the organic film-forming agent also contains as a synthetic resin a content of organic polymer, copolymer or/and mixtures thereof based on polyethyleneimine, polyvinyl alcohol, polyvinylphenol, polyvinylpyrrolidone or/and polyaspartic acid, in particular copolymers with a phosphorus-containing vinyl compound.

5. Process according to one of the preceding claims, **characterized in that** the organic film-forming agent contains a content of at least one copolymer with an acid number in the range from 3 to 80, in particular to the extent of at least 50 wt.% of the synthetic resins added.

6. Process according to one of the preceding claims, **characterized in that** the organic film-forming agent contains at least one component based on
acrylic-polyester-polyurethane copolymer,
acrylic-polyester-polyurethane-styrene copolymer,
acrylic acid ester,
acrylic acid ester-methacrylic acid ester, optionally with free acids or/and acrylonitrile,
ethylene-acrylic mixture,
ethylene-acrylic copolymer,
ethylene-acrylic-polyester copolymer,
ethylene-acrylic-polyurethane copolymer,
ethylene-acrylic-polyester-polyurethane copolymer,
ethylene-acrylic-polyester-polyurethane-styrene copolymer,
ethylene-acrylic-atyrene copolymer,
polyester resins with free carboxyl groups combined with melamine-formaldehyde resins,
a synthetic resin mixture or/and copolymer based on acrylate and styrene,
a synthetic resin mixture or/and copolymer based on styrene-butadiene,
a synthetic resin mixture or/and copolymer of acrylate and epoxide,
based on an acrylic-modified polyester containing carboxyl groups together with melamine-formaldehyde and ethylene-acrylic copolymer,
polycarbonate-polyurethane,
polyester-polyurethane,
styrene,
styrene-vinyl acetate,
vinyl acetate,
vinyl ester or/and
vinyl ether.

7. Process according to one of the preceding claims, **characterized in that** at least 30 wt.% of the organic film-forming agent added consists of film-formable thermoplastic resins.

8. Process according to one of the preceding claims, **characterized in that** the molecular weights of the synthetic resins added are in the range of at least 1,000 u.

9. Process according to one of the preceding claims, **characterized in that** the organic film-forming agents added consist of at least 40 wt.% of high-molecular-weight polymers.

10. Process according to one of the preceding claims, **characterized in that** the acid groups of the synthetic resins are stabilized with ammonia, with amines, such as e.g. morpholine, dimethylethanolamine, diethylethanolamine or triethanolamine, or/and with alkali-metal compounds, such as e.g. sodium hydroxide.

11. Process according to one of the preceding claims, **characterized in that** the aqueous composition contains 0.1 to 980 g/l of the organic film-forming agent.

12. Process according to one of the preceding claims, **characterized in that** the composition contains at least one silane chosen from the group consisting of
glycidoxyalkyltrialkoxysilane,
methacryloxyalkyltrialkoxysilane,
(trialkoxysilyl)alkyl-succinic acid-silane,
aminoalkylaminoalkylalkyldialkoxysilane,
(epoxycycloalkyl)alkyltrialkoxysilane,
bis-(trialkoxysilylalkyl)amine,
bis-(trialkoxyailyl)ethane,
(epoxyalkyl)trialkoxysilane,
aminoalkyltrialkoxysilane,
ureidoalkjrltrialkoxysilane,
N-(trialkoxysilylalkyl)alkylenediamine,
N-(aminoalkyl)aminoalkyltrialkoxysilane,
N-(trialkoxysilylalkyl)dialkylenetriamine,
poly(aminoalkyl)alkyldialkoxysilane,
tris(trialkoxysilyl)alkyl isocyanurate,
ureidoalkyltrialkoxysilane and acetoxysilane.

13. Process according to one of the preceding claims, **characterized in that** the composition contains at least one silane chosen from the group consisting of
3-glycidoxypropyltriethoxysilane,
3-glycidoxypropyltrimethoxysilane,
3-methacryloxypropyltriethoxysilane,
3-methacryloxypropyltrimethoxysilane,
3-(triethoxysilyl)propyl-succinic acid-silane,
aminoethylaminopropylmethyldiethoxysilane,
aminoethylaminopropylmethyldimethoxysilane,
beta-(3,4-epoxycyclohexyl)ethyltriethoxy-silane,
beta-(3,4-epoxycyclohexyl)ethyltrimethoxy-silane,
beta-(3,4-epoxycyclohexyl)methyltriethoxy-silane,
beta-(3,4-epoxycyclohexyl)methyltrimethoxy-silane,
gamma-(3,4-epoxycyclohexyl)propyltriethoxysilane,
gamma-(3,4-epoxycyclohexyl)propyltrimethoxysilane,
bis(triethoxysilylpropyl)amine,
bis(trimethoxysilylpropyl)amine,
(3,4-epoxybutyl)triethoxysilane,
(3,4-epoxybutyl)trimethoxysilane,
gamma-aminopropyltriethoxysilane,
gamma-aminopropyltrimethoxysilane,
gamma-ureidopropyltrialkoxysilane,
N-(3-(trimethoxysilyl)propyl)ethylenediamine,
N-beta-(aminoethyl)-gamma-aminopropyltri-ethoxysilane,
N-beta-(aminoethyl)-gamma-aminopropyltrimethoxysilane,
N-(gamma-triethoxysilylpropyl)diethylene-triamine,
N-(gammamtrimethoxysilylpropyl)diethylene-triamine,
N-(gamma-triethoxysilylpropyl)dimethylene-triamine,
N-(gamma-trimethoxysilylpropyl)dimethylene-triamine,
poly(amioalkyl)ethyldialkoxysilane,
poly(aminoalkyl)methyldialkoxysilane,
tris(3-(triethoxysilyl)propyl) isocyanurate
tris(3-(trimethoxysilyl)propyl) isocyanurate and vinyltriacetoxysilane.

14. Process according to one of the preceding claims, **characterized in that** the content of at least one silane in the aqueous composition, including the reaction products formed therefrom, is 0.1 to 50 g/l.

15. Process according to one of the preceding claims, **characterized in that** the content of at least one chelate in the aqueous composition, including the reaction products possibly formed therefrom, is 0.1 to 80 g/l.

16. Process according to one of the preceding claims, **characterized in that** the at least one metal chelate is chosen on the basis of
acetylacetonate,
alkali metal lactate,
alkanolamine,
alkyl acetoacetate,
alkylenediamine tetraacetate,
ammonium lactate,
citrate,
dialkyl citrate,
dialkyl ester-citrate,
dialkylenetriamine,
diisoalkoxybisalkyl acetoacetate,
diisopropoxybisalkyl acetoacetate,
di-n-alkoxy-bisalkyl acetoacetate,
hydroxyalkylenediamine triacetate,
trialkanolamine or/and trialkylenetetramine.

17. Process according to one of the preceding claims, **characterized in that** a finely divided powder, a dispersion or a suspension, such as e.g. a carbonate, oxide, silicate or sulfate, in particular colloidal or/and amorphous particles, is added as inorganic compound in particle form.

18. Process according to one of the preceding claims, **characterized in that** particles based on at least one compound of aluminium, barium, cerium, calcium, lanthanum, silicon, titanium, yttrium, zinc or/and zirconium are added as the inorganic compound in particle form.

19. Process according to one of the preceding claims, **characterized in that** particles based on aluminium oxide, barium sulfate, cerium dioxide, silicon dioxide, silicate, titanium oxide, yttrium oxide, zinc oxide or/and zirconium oxide are added as the inorganic compound in particle form.

20. Process according to one of the preceding claims, **characterized in that** the aqueous composition contains 0.1 to 500 g/l of the at least one inorganic compound in particle form.

21. Process according to one of the preceding claims, **characterized in that** the aqueous composition contains at least one organic corrosion inhibitor, in particular based on amine(s), preferably at least one alkanolamine - preferably a long-chain alkanolamine, at least one TPA-amine complex, such as acid-adduct-4-oxo-4-p-tolyl butyrate-4-ethylmorpholine, at least one alkylaminoethanol, at least one zinc salt of aminocarboxylate, of 5-nitro-isophthalic acid or of cyanic acid, at least one polymeric amino salt with fatty acid, at least one metal salt of a sulfonic acid, such as dodecyl-naphthalenesulfonic acid, at least one amino and transition-metal complex of toluenepropionic acid, 2-mercapto-benzothiazolyl-succinic acid or at least one of its ammonium salts, at least one conductive polymer or/and at least one thiol, the content of organic corrosion inhibitors in the aqueous composition preferably being in the range from 0.01 to 5 wt.%.

22. Process according to one of the preceding claims, **characterized in that** the aqueous composition contains at least one basic crosslinking agent based on titanium, hafnium or/and zirconium as the cation or/and based on carbonate or ammonium carbonate as the anion, the content of such crosslinking agents in the aqueous composition preferably being in the range from 0.01 to 3 wt.%.

23. Process according to one of the preceding claims, **characterized in that** no inorganic acids or/and organic carboxylic acids are added to the aqueous composition.

24. Process according to one of the preceding claims, **characterized in that** at least one long-chain alcohol chosen from the group consisting of diols, such as block copolymers of ethylene oxide and propylene oxide, butanediols, propanediols or/and decanediols, butyl glycols, butyl diglycols, ester-alcohols, ethylene glycols, ethylene glycol ethers, glycol ethers, such as di- and triethylene glycols with their mono- and diethers and dimethyl ethers, polyethers, polyethylene glycols, polyethylene glycol ethers, polyglycols, polypropylene glycols, propylene glycols, propylene glycol ethers, polypropylene glycol ethers, glycol ethers, trimethylpentanediol diisobutyrates and derivatives thereof is used as the film-forming auxiliary, the content of long-chain alcohols in the aqueous composition being in the range from 0.01 to 10 wt.%.

25. Process according to one of the preceding claims, **characterized in that** at least one wax chosen from the group consisting of paraffins, polyethylenes and polypropylenes, in particular an oxidized wax, is used as the lubricant, the content of waxes in the aqueous composition preferably being in the range from 0.01 to 5 wt.%.

26. Process according to one of the preceding claims, **characterized in that** at least one wax together with a polymer mixture or/and copolymer comprising ethylene and acrylic acid is employed as the lubricant.

27. Process according to one of the preceding claims, **characterized in that** the coating is cured partly by drying and film formation and partly by actinic radiation, cationic polymerization or/and thermal crosslinking.

28. Process according to one of the preceding claims, **characterized in that** the aqueous composition contains at least one additive, in particular at least one chosen from the group consisting of at least one biocide, at least one defoamer or/and at least one wetting agent.

29. Process according to one of the preceding claims, **characterized in that** the aqueous composition is applied to the metallic surface at a temperature in the range from 5 to 50°C.

30. Process according to one of the preceding claims, **characterized in that** the metallic surface is kept at temperatures in the range from 5 to 60°C during application of the coating.

31. Process according to one of the preceding claims, **characterized in that** the coated metallic surface is dried at a temperature in the range from 20 to 400°C for the circulating air temperature.

32. Process according to one of the preceding claims, **characterized in that** the coated strips are wound up into a coil, optionally after cooling to a temperature in the range from 40 to 70°C.

33. Process according to one of the preceding claims, **characterized in that** the aqueous composition is applied by rolling on, flooding, knife-coating on, spraying, misting, brushing or dipping and optionally by subsequent squeezing off with a roller.

34. Process according to one of the preceding claims, **characterized in that** the dried and optionally also cured film has a pendulum hardness of 30 to 190 s, measured with a König pendulum hardness tester in accordance with DIN 53157.

35. Process according to one of the preceding claims, **characterized in that** the dried and optionally also cured film has a flexibility such that on bending over a conical mandrel in a mandrel flex test substantially in accordance with DIN ISO 6860 for a mandrel of 3.2 mm to 38 mm diameter - but without tearing the test area - no cracks longer than 2 mm which are detectable on subsequent wetting with copper sulfate by a change in colour due to deposition of copper on the torn-open metallic surface are formed.

36. Process according to one of the preceding claims, **characterized in that** in each case at least one coating of printing ink, foil, lacquer, lacquer-like material, powder coating, adhesive or/and adhesive carrier is applied to the dried and optionally also cured film.

37. Process according to one of the preceding claims, **characterized in that** the coated metal components, strips or strip sections are shaped, lacquered, coated with polymers, such as e.g. PVC, printed, glued, hot-soldered, welded or/and joined to one another or to other elements by clinching or other joining techniques.

38. Aqueous composition for pretreatment of a metallic surface before a further coating or for treatment of that surface, **characterized in that** the composition contains, in addition to water,
a) at least one hydrolysable or/and at least partly hydrolysed silane of in each case at least one acyloxysilane, one alkoxysilane, one silane with at least one amino group, one silane with at least one succinic acid group or/and succinic acid anhydride group, one bis-silyl-silane, one silane with at least one epoxide group, one (meth)acrylato-silane, one multi-silyl-silane, one ureidosilane, one vinylsilane or/and at least one silanol or/and at least one siloxane of a composition which corresponds chemically to that of the abovementioned silanes,
b) at least one metal chelate chosen from chelate complexes based on acetylacetonates, acetoacetates, acetonates, alkylenediamines, amines, lactates, carboxylic acids, citrates or/and glycols,
c) at least one organic film-forming agent which has at least one water-soluble or water-dispersed organic copolymer with an acid number in the range from 3 to 250, and wherein the content of organic film-forming agent, based on the solids content of the composition, is > 45 wt.%, and
d) at least one long-chain alcohol with 4 to 20 C-atoms chosen from the group consisting of diols, such as block copolymers of ethylene oxide and propylene oxide, butanediole, propanediols or/and decanediols, butyl glycols, butyl diglycols, ester-alcohols, ethylene glycols, ethylene glycol ethers, glycol ethers, such as di- and triethylene glycols with their mono- and diethers and dimethyl ethers, polyethers, polyethylene glycols, polyethylene glycol ethers, polyglycols, polypropylene glycols, propylene glycols, propylene glycol ethers, polypropylene glycol ethers, glycol ethers, trimethylpentanediol diisobutyrates and derivatives thereof, as a film-forming auxiliary,
wherein the amounts ratio of a) to b), in each case including the reaction products formed therefrom, is in the range from 0.3 : 1 to 7 : 1.

39. Use of the substrates coated by the process according to at least one of the preceding claims 1 to 37 as wire, strip, sheet metal or a component for a wire coil, a wire braid, a steel strip, a metal sheet, a lining, a screen, a vehicle body or a component of a vehicle body, a component of a vehicle, trailer, mobile home or missile, a cover, a housing, a lamp, a light, a traffic light element, a piece of furniture or furniture element, an element of a domestic appliance, a frame, a profile, a shaped component of complicated geometry, a crash barrier, heater or fence element, a bumper, a component of or with at least one tube or/and a profile, a window, door or bicycle frame or an item of hardware, such as a screw, nut, flange, spring, or a spectacle frame.

## Revendications

1. Procédé de revêtement d'une surface métallique au moyen d'une composition aqueuse, qui peut ne contenir pratiquement pas ou absolument pas de composes du chrome-VI, en tant que traitement préalable à une autre opération de revêtement ou en tant que traitement, lequel procédé est **caractérisé en ce que** la composition comprend, outre de l'eau :
a) au moins un silane hydrolysable et/ou au moins partiellement hydrolysé, choisi parmi, dans chaque cas au nombre d'au moins un, un acyloxy-silane, un alcoxy-silane, un silane comportant au moins un groupe amino, un silane comportant au moins un groupe dérivé de l'acide succinique et/ou de l'anhydride succinique, un bis-silyl-silane, un silane comportant au moins un groupe époxy, un acrylato-silane ou méthacrylato-silane, un multi-silyl-silane, un uréido-silane et un vinyl-silane, et/ou au moins un silanol et/ou au moins un siloxane de composition chimique correspondant à celle des silanes cités ci-dessus,
b) au moins un chélate de métal, choisi parmi les complexes chélates à base d'acétyl-acétonates, d'acéto-acétates, d'acétonates, d'alkylène-diamines, d'amines, de lactates, d'acides carboxyliques, de citrates et/ou de glycols,
c) au moins un agent filmogène organique qui comprend au moins un copolymère organique soluble ou dispersable dans l'eau, présentant un indice d'acide de 3 à 250, la teneur en agent filmogène organique, en pourcentage en poids rapporté au poids de solides, valant plus de 45 % ;
d) et au moins un alcool à longue chaîne comportant de 4 à 20 atomes de carbone et choisi dans l'ensemble formé par les diols, tels les copolymères à blocs d'oxyde d'éthylène et d'oxyde de propylène, butane-diols, propane-diols et/ou décane-diols, les butyl-glycols, les butyl-diglycols, les ester-alcools, les éthylène-glycols, éthers d'éthylène-glycol et éthers de glycol, tels les diéthylène-glycol et triéthylène-glycol ainsi que leurs monoéthers, diéthers et éthers diméthyliques, les polyéthers, les polyéthylène-glycols, les éthers de polyéthylène-glycol, les polyglycols, les polypropylène-glycols, les propylène-glycols, les éthers de propylène-glycol, les éthers de polypropylène-glycol, les éthers de glycol, le diisobutyrate de triméthyl-pentane-diol et leurs dérivés, en tant qu'agent filmogène auxiliaire ;
étant entendu
que le rapport de la quantité de composant (a) à celle de composant (b), y compris, pour chacun, les produits de réaction formés à partir de ces composants, vaut de 0,3/1 à 7/1,
que l'on met la surface métallique propre, décapée, nettoyée et/ou prétraitée en contact avec la composition aqueuse et qu'il se forme alors sur cette surface métallique un film que l'on fait ensuite sécher, qu'on étanchéifie partiellement ou totalement par pelliculage, et que l'on fait en outre durcir le cas échéant,
et que le film séché, et durci le cas échéant, est épais de 0,01 à 10 µm.

2. Procédé conforme à la revendication 1, **caractérisé en ce qu'**il y a dans la composition aqueuse au moins un composant (e), qui est choisi dans l'ensemble formé par les suivants :
e₁) au moins un composé inorganique, sous forme de particules dont le diamètre moyen, mesuré à l'aide d'un microscope électronique à balayage, vaut de 0,005 à 0,3 µm ;
e₂) au moins un lubrifiant ;
e₃) au moins un inhibiteur de corrosion organique ;
e₄) au moins un pigment protecteur anti-corrosion ;
e₅) au moins un agent de neutralisation et/ou de stabilisation stérique pour résines artificielles ;
e₆) au moins un solvant organique ;
e₇) au moins un siloxane ;
e₈) au moins un composé de chrome-VI.

3. Procédé conforme à la revendication 1 ou 2, **caractérisé en ce que** l'agent filmogène organique est un mélange de résines artificielles constitué d'au moins un polymère et/ou d'au moins un copolymère, qui contient une certaine quantité de résine artificielle à base d'acrylate, d'époxyde, d'éthylène, d'urée-formaldéhyde, de phénol, de polyester, de polyuréthane, de styrène, de styrène-butadiène et/ou de composé vinylique.

4. Procédé conforme à l'une des revendications précédentes, **caractérisé en ce que** l'agent filmogène organique contient également, en tant que résine artificielle, une certaine quantité d'un polymère ou copolymère organique et/ou d'un mélange de tels polymères, à base de poly(éthylène-imine), poly(alcool vinylique), poly(vinyl-phénol), poly(vinyl-pyrrolidone) et/ou poly(acide aspartique), en particulier des copolymères préparés avec un composé vinylique phosphoré.

5. Procédé conforme à l'une des revendications précédentes, **caractérisé en ce que** l'agent filmogène organique contient une certaine quantité d'au moins un copolymère présentant un indice d'acide valant de 3 à 80, et contient en particulier jusqu'à au moins 50 %, en poids par rapport à la résine artificielle ajoutée, d'un tel copolymère.

6. Procédé conforme à l'une des revendications précédentes, **caractérisé en ce que** l'agent filmogène organique contient au moins un composant à base
- d'un copolymère acrylique-polyester-polyuréthane,
- d'un copolymère, acrylique-polyester-polyuréthane-styrène,
- d'un ester d'acide acrylique,
- d'un ester d'acide acrylique et d'un ester d'acide méthacrylique, avec en option de l'acide libre et/ou de l'acrylonitrile,
- d'un mélange d'éthylène et d'acrylique,
- d'un copolymère d'éthylène et d'acrylique,
- d'un copolymère éthylène-acrylique-polyester,
- d'un copolymère éthylène-acrylique-polyuréthane,
- d'un copolymère éthylène-acrylique-polyester-polyuréthane,
- d'un copolymère éthylène-acrylique-polyester-polyuréthane-styrène,
- d'un copolymère éthylène-acrylique-styrène,
- de résines polyesters portant des groupes carboxyle libres, combinées avec des résines de mélanine et formaldéhyde,
- d'un mélange pour résine artificielle et/ou d'un copolymère à base d'acrylate et de styrène,
- d'un mélange pour résine artificielle et/ou d'un copolymère à base de styrène et de butadiène,
- d'un mélange pour résine artificielle et/ou d'un copolymère à base d'acrylate et d'époxyde,
- d'un polyester porteur de groupes carboxyle, modifié par acrylique, associé avec une résine de mélamine et formaldéhyde et un copolymère éthylène-acrylique,
- d'un polycarbonate-polyuréthane,
- d'un polyester-polyuréthane,
- de styrène,
- de styrène et d'acétate de vinyle,
- d'acétate de vinyle,
- de vinyl-ester,
- ét/ou de vinyl-éther.

7. Procédé conforme à l'une des revendications précédentes, **caractérisé en ce qu'**une fraction d'ua moins 30 % en poids de l'agent filmogène organique ajouté est constituée de résines thermoplastiques transformables en film.

8. Procédé conforme à l'une des revendications précédentes, **caractérisé en ce que** les masses moléculaires des résines artificielles ajoutées valent au moins 1000.

9. Procédé conforme à l'une des revendications précédentes, **caractérisé en ce que** les agents filmogènes organiques ajoutés sont constitués, pour au moins 40 % en poids, de polymères à haut poids moléculaire.

10. Procédé conforme à l'une des revendications précédentes, **caractérisé en ce que** les groupes acides des résines artificielles sont stabilisés avec de l'ammoniac, avec des amines, comme par exemple de la morpholine, de la diméthyl-éthanolamine, de la diéthyl-éthanolamine ou de la triéthanolamine, et/ou avec des composés de métal alcalin, comme par exemple de l'hydroxyde de sodium.

11. Procédé conforme à l'une des revendications précédentes, **caractérisé en ce que** la composition aqueuse contient de 0,1 à 980 g/L de l'agent filmogène organique.

12. Procédé conforme à l'une des revendications précédentes, **caractérisé en ce qu'**il y a au moins un silane choisi dans l'ensemble formé par les suivants :
glycidyloxyalkyl-trialcoxy-silane,
méthacryloxyalkyl-trialcoxy-silane,
(trialcoxy-silyl)alkyl-succinate-silane,
aminoalkylaminoalkyl-alkyl-dialcoxy-silane,
(époxycyaoalkyl)alkyl-trialcoxy-silane,
bis(trialcoxy-silyl-alkyl)-amine,
bis(trialcoxy-silyl)-éthane,
(époxyalkyl)-trialcoxy-silane
aminoalkyl-trialcoxy-silane,
uréidoalkyl-trialcoxy-silane,
N-(trialcoxysilyl-alkyl)-alkylènediamine,
N-(aminoalkyl)-aminoalkyl-trialcoxy-silane,
N-(trialcoxysilyl-alkyl)-dialkylènetriamine,
poly(aminoalkyl)alkyl-dialcoxy-silane,
tris[(trialcoxy-silyl)-alkyl]-isocyanurate,
et acétoxy-silane.

13. Procédé conforme à l'une des revendications précédentes, **caractérisé en ce qu'**il y a au moins un silane choisi dans l'ensemble formé par les suivants :
3-glycidyloxypropyl-triethoxy-silane,
3-glycidyloxypropyl-triméthoxy-silane,
3-méthacryloxypropyl-triéthoxy-silane,
3-méthacryloxypropyl-triméthoxy-silane,
3-(triéthoxy-silyl)propyl-succinate-silane,
aminoéthylaminopropyl-méthyl-diéthoxy-silane,
aminoéthylaminopropyl-méthyl-diméthoxy-silane,
β-(3,4-époxy-cyclohexyl)éthyl-triéthoxy-silane,
β-(3,4-époxy-cyclohexyl)éthyl-triméthoxy-silane,
(3,4-époxy-cyclohéxyl)méthyl-triéthoxy-silane,
(3,4-époxy-cyclohcxyl)méthyl-triéthoxy-silane,
γ-(3,4-époxy-cyclohexyl)propyl-triéthoxy-silane,
γ-(3,4-époxy-cyclohexyl)propyl-triméthoxy-silane,
bis(triéthoxy-silyl-propyl)-amine,
bis(triméthoxy-silyl-propyl)-amine,
(3,4-époxy-butyl)-triéthoxy-silane,
(3,4-époxy-butyl)-triméthoxy-silane,
γ-aminopropyl-triéthoxy-silane,
γ-aminopropyl-triméthoxy-silane,
γ-uréidopropyl-trialcoxy-silane,
N-[3-(triméthoxysilyl)-propyl]-éthylénediamine,
[N-((3-aminoéthyl)-γ-aminopropyl]-triéthoxy-silane,
[N-(β-aminoéthyl)-γ-aminopropyl]-triméthoxy-silane,
N-[γ-(triethoxysilyl)-propyl]-diéthylènetriamine,
N-[γ-(triméthoxysilyl)-propyl]-diéthylènetriamine,
N-[γ-(triéthoxysilyl)-propyl]-diméthylènetriamine,
N-[γ-(triméthoxysilyl)-propyl]-diméthylènetriamine,
poly(aminoalkyl)éthyl-dialcoxy-silane,
poly(aminoalkyl)methy)-dialcoxy-silane,
tris[3-(triethoxy-silyl)-propyl]-isocyanurate,
tris[3-(triméthoxy-silyl)-propyl]-isocyanurate,
et vinyl-triacétoxy-silane.

14. Procédé conforme à l'une des revendications précédentes, **caractérisé en ce que** la teneur de la composition aqueuse en silane au nombre d'au moins un, y compris les produits de réaction formés à partir de celui-ci, vaut de 0,1 à 50 g/L.

15. Procédé conforme à l'une des revendications précédentes, **caractérisé en ce que** la teneur de la composition aqueuse en chélate au nombre d'au moins un, y compris les produits de réaction éventuellement formés à partir de celui-ci, vaut de 0,1 à 80 g/L.

16. Procédé conforme à l'une des revendications précédentes, **caractérisé en ce que** le chélate de métal au nombre d'au moins un est choisi parmi les chélates à base
d'acétyl-acétonate,
de lactate de métal alcalin,
d'alcanol-amine,
d'acéto-acétate d'alkyle,
d'alkylène-diamine-tétraacétate,
de lactate d'ammonium,
de citrate,
de citrate de dialkyle,
d'ester-citrate de dialkyle,
de dialkylène-triamine,
de di-isoalcoxy-bis(acéto-acétate d'alkyle),
de di-isopropoxy-bis(acéto-acétate d'alkyle),
de di-n-alcoxy-bis(acéto-acétate d'alkyle),
d'hydroxy-alkylène-diamine-triacétate,
de trialcanolamine,
et/ou de trialkylène-tétramine.

17. Procédé conforme à l'une des revendications précédentes, **caractérisé en ce que** l'on ajoute, en tant que composé inorganique en particules, par exemple un carbonate, un oxyde, un silicate ou un sulfate, à l'état de poudre fine, de dispersion ou de suspension, et en particulier de particules colloïdales et/ou amorphes.

18. Procédé conforme à l'une des revendications précédentes, **caractérisé en ce que** l'on ajoute, en tant que composé inorganique en particules, des particules à base d'au moins un composé de l'aluminium, du baryum, du cérium, du calcium, du lanthane, du silicium, du titane, de l'yttrium, du zinc et/ou du zirconium.

19. Procédé conforme à l'une des revendications précédentes, **caractérisé en ce que** l'on ajoute, en tant que composé inorganique en particules, des particules à base d'oxyde d'aluminium, de sulfate de baryum, de dioxyde de cérium, de dioxyde de silicium, de silicate, d'oxyde de titane, d'oxyde d'yttrium, d'oxyde de zinc et/ou d'oxyde de zirconium.

20. Procédé conforme à l'une des revendications précédentes, **caractérisé en ce que** la composition aqueuse contient de 0,1 à 500 g/L du composé inorganique en particules au nombre d'au moins un.

21. Procédé conforme à l'une des revendications précédentes, **caractérisé en ce que** la composition aqueuse contient au moins un inhibiteur de corrosion organique, en particulier à base d'une amine ou d'amines, et de préférence d'au moins une alcanolamine, de préférence une alcanolamine à longue chaîne, d'au moins un complexe d'amine TPA comme le produit d'addition d'acide 4-oxo-4-(para-tolyl)-butyrique et de 4-éthyl-morpholine, d'au moins un alkyl-amino-éthanol, d'au moins un sel de zinc d'acide amino-carboxylique, de l'acide 5-nitro-isophtalique ou de l'acide cyanique, d'au moins un sel polymère d'amine et d'acide gras, d'au moins un sel de métal d'un acide sulfonique comme un acide dodécyl-naphtalène-sulfonique, d'au moins un complexe de métal de transition et d'amine de l'acide toluène-propionique, de l'acide 2-mercapto-benzothiazolyl-succinique ou d'au moins un de leurs sels d'ammonium, d'au moins un polymère conducteur et/ou d'au moins un thiol, et la teneur de la composition aqueuse en inhibiteur(s) de corrosion organique(s) vaut de 0,01 à 5 % en poids.

22. Procédé conforme à l'une des revendications précédentes, **caractérisé en ce que** la composition aqueuse contient au moins un agent basique de réticulation à base de titane, hafnium et/ou zirconium en tant que composant cationique et/ou à base de carbonate ou de carbonate d'ammonium en tant que composant anionique, et la teneur de la composition aqueuse en agent(s) de réticulation de ce type vaut de 0,01 à 3 % en poids.

23. Procédé conforme à l'une des revendications précédentes, **caractérisé en ce que** l'on n'ajoute à la composition aqueuse aucun acide inorganique, ni aucun acide organique carboxylique.

24. Procédé conforme à l'une des revendications précédentes, **caractérisé en ce que** l'on utilise, en tant qu'agent auxiliaire de formation de film, au moins un alcool à longue chaîne choisi dans l'ensemble formé par les diols, tels les copolymères à blocs d'oxyde d'éthylène et d'oxyde de propylène, butane-diols, propane-diols et/ou décane-diols, les butyl-glycols, les butyl-diglycols, les ester-alcools, les éthylène-glycols, éthers d'éthylène-glycol et éthers de glycol, tels les diéthylène-glycol et triéthylène-glycol ainsi que leurs monoéthers, diéthers et éthers diméthyliques, les polyéthers, les polyéthylène-glycols, les éthers de polyéthylène-glycol, les polyglycols, les polypropylène-glycols, les propylène-glycols, les éthers de propylène-glycol, les éthers de polypropylène-glycol, les éthers de glycol, le diisobutyrate de triméthyl-pentane-diol et leurs dérivés, la proportion d'alcools à longue chaîne dans la composition aqueuse valant de 0,01 à 10 % en poids.

25. Procédé conforme à l'une des revendications précédentes, **caractérisé en ce qu'**on utilise en tant que lubrifiant au moins une cire choisie dans l'ensemble formé par les paraffines, polyéthylènes et polypropylènes, en particulier une cire oxydée, et la teneur de la composition aqueuse en cire(s) vaut de préférence de 0,01 à 5 % en poids.

26. Procédé conforme à l'une des revendications précédentes, **caractérisé en ce qu'**on utilise en tant que lubrifiant au moins une cire associée à un mélange de polymères et/ou un copolymère comportant des motifs dérivés de l'éthylène et de l'acide acrylique.

27. Procédé conforme à l'une des revendications précédentes, **caractérisé en ce qu'**on fait durcir le revêtement en partie par séchage et pelliculage et en partie par irradiation avec des rayons actiniques, polymérisation cationique et/ou réticulation thermique.

28. Procédé conforme à l'une des revendications précédentes, **caractérisé en ce que** la composition aqueuse contient au moins un adjuvant, et en particulier, au moins un adjuvant choisi dans l'ensemble formé par au moins un biocide, au moins un agent anti-mousse et/ou au moins un agent mouillant.

29. Procédé conforme à l'une des revendications précédentes, **caractérisé en ce que** la composition aqueuse, lorsqu'elle est déposée sur la surface métallique, se trouve à une température située dans l'intervalle allant de 5 à 50 °C.

30. Procédé conforme à l'une des revendications précédentes, **caractérisé en ce que** la surface métallique est maintenue, lors de l'application du revêtement, à une température située dans l'intervalle allant de 5 à 60 °C.

31. Procédé conforme à l'une des revendications précédentes, **caractérisé en ce que** la surface métallique revêtue est séchée à une température située dans l'intervalle allant de 20 à 400 °C (température de l'air ambiant).

32. Procédé conforme à l'une des revendications précédentes, **caractérisé en ce que** les bandes revêtues sont enroulées en une bobine, éventuellement après refroidissement jusqu'à une température située dans l'intervalle allant de 40 à 70 °C.

33. Procédé conforme à l'une des revendications précédentes, **caractérisé en ce que** la composition aqueuse est déposée par enduction au rouleau, submersion, enduction à la racle, projection, pulvérisation, enduction à la brosse ou immersion, avec, le cas échéant, exprimage ultérieur au rouleau.

34. Procédé conforme à l'une des revendications précédentes, **caractérisé en ce que** le film séché et en option durci présente une dureté au pendule, mesurée à l'aide d'un duromètre à pendule selon la méthode de König, norme DIN 53157, de 30 à 190 secondes.

35. Procédé conforme à l'une des revendications précédentes, **caractérisé en ce que** le film séché et en option durci présente une flexibilité telle que, lors d'un essai de cintrage sur mandrin conique, réalisé dans une très large mesure suivant la norme DIN ISO 6860 avec un mandrin de 3,2 à 38 mm de diamètre, mais sans entaille au bord de la surface testée, il ne se forme pas de fissures de plus de 2 mm de long qui deviendraient détectables, lors d'une humectation ultérieure avec une solution de sulfate de cuivre, par changement de couleur à la suite d'un dépôt de cuivre sur la surface métallique fissurée.

36. Procédé conforme à l'une des revendications précédentes, **caractérisé en ce que**, sur le film séché et le cas échéant durci, on dépose au moins une couche de revêtement faite d'une encre d'imprimerie, d'une feuille, d'une laque, d'un matériau de type laque, d'une laque en poudre, d'un adhésif et/ou d'un support d'adhésif.

37. Procédé conforme à l'une des revendications précédentes, **caractérisé en ce que** les pièces métalliques, rubans ou découpes de ruban revêtus sont façonnés, laqués, revêtus de polymère, par exemple de PVC, pressés, collés, soudés à chaud, brasés et/ou assemblés par agrafage ou d'autres techniques d'assemblage, les uns aux autres ou avec d'autres éléments.

38. Composition aqueuse, conçue pour le traitement préalable d'une surface métallique avant une autre opération de revêtement ou pour le traitement d'une telle suface, **caractérisée en ce que** cette composition comprend, outre de l'eau :
a) au moins un silane hydrolysable et/ou au moins partiellement hydrolysé, choisi parmi, dans chaque cas au nombre d'au moins un, un acyloxy-silane, un alcoxy-silane, un silane comportant au moins un groupe amino, un silane comportant au moins un groupe dérivé de l'acide succinique et/ou de l'anhydride succinique, un bis-silyl-silane, un silane comportant au moins un groupe époxy, un acrylato-silane ou méthacrylato-silane, un multi-silyl-silane, un uréido-silane et un vinyl-silane, et/ou au moins un silanol et/ou au moins un siloxane de composition chimique correspondant à celle des silanes cités ci-dessus,
b) au moins un chélate de métal, choisi parmi les complexes chélates à base d'acétyl-acétonates, d'acéto-acétates, d'acétonates, d'alkylène-diamines, d'amines, de lactates, d'acides carboxyliques, de citrates et/ou de glycols,
c) au moins un agent filmogène organique qui comprend au moins un copolymère organique soluble ou dispersable dans l'eau, présentant un indice d'acide de 3 à 250, la teneur en agent filmogène organique, en pourcentage en poids rapporté au poids de solides, valant plus de 45 % ;
d) et au moins un alcool à longue chaîne comportant de 4 à 20 atomes de carbone et choisi dans l'ensemble formé par les diols, tels les copolymères à blocs d'oxyde d'éthylène et d'oxyde de propylène, butane-diols, propane-diols et/ou décane-diols, les butyl-glycols, les butyl-diglycols, les ester-alcools, les éthylène-glycols, éthers d'éthylène-glycol et éthers de glycol, tels les diéthylène-glycol et triéthylène-glycol ainsi que leurs monoéthers, diéthers et éthers diméthyliques, les polyéthers, les polyéthylène-glycols, les éthers de polyéthylène-glycol, les polyglycols, les polypropylène-glycols, les propylène-glycols, les éthers de propylène-glycol, les éthers de polypropylène-glycol, les éthers de glycol, le diisobutyrate de triméthyl-pentane-diol et leurs dérivés, en tant qu'agent filmogène auxiliaire ;
et dans laquelle composition le rapport de la quantité de composant (a) à celle de composant (b), y compris, pour chacun, les produits de réaction formés à partir de ces composants, vaut de 0,3/1 à 7/1,

39. Utilisation d'un substrat revêtu selon un procédé conforme à l'une au moins des revendications 1 à 37 précédentes, sous forme de fil métallique, de ruban, de tôle ou de pièce, pour un bobinage de fil métallique, un treillis métallique, un ruban d'acier, une tôle, un revêtement, un blindage, une carrosserie ou une pièce de carrosserie, une pièce de véhicule, de remorque, de caravane ou d'engin volant, un couvercle, un boîtier, une lampe, un appareil d'éclairage, un élément de lampe suspendue, un meuble ou un élément de meuble, un élément d'appareil ménager, un bâti, un profilé, une pièce moulée de forme géométrique compliquée, un élément de plaque de guidage, d'appareil de chauffage ou de palissade, un pare-chocs, une pièce constituée d'un tube et/ou d'un profilé ou comportant au moins un tube et/ou un profilé, un châssis de fenêtre ou de porte, un cadre de bicyclette, ou une petite pièce comme une vis, un écrou, une bride, un ressort ou une monture de lunettes.
